(19)

Europäisches
Patentamt
European
Patent Office
Office européen
des brevets

(11) **EP 2 600 620 A1**

(12) **EUROPEAN PATENT APPLICATION**
published in accordance with Art. 153(4) EPC

(43) Date of publication:
**05.06.2013 Bulletin 2013/23**

(51) Int Cl.:
**H04N 13/00** *(2006.01)*  **H04N 7/173** *(2011.01)*

(21) Application number: **12819511.2**

(22) Date of filing: **03.07.2012**

(86) International application number:
**PCT/JP2012/067016**

(87) International publication number:
**WO 2013/018489 (07.02.2013 Gazette 2013/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2011  JP 2011171398**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph
D Young & Co LLP
120 Holborn
London EC1N 2DY (GB)**

(54) **TRANSMISSION DEVICE, TRANSMISSION METHOD, AND RECEIVING DEVICE**

(57)     Disparity information is transmitted such that reception processing of a legacy 2D-compatible receiving apparatus is not interrupted.

A multiplexed data stream includes a first private data stream (2D stream) including superimposition information data and a second private data stream (3D extension stream) including disparity information. A first descriptor and a second descriptor including respective pieces of language information corresponding to the first private data stream and the second private data stream are inserted into the multiplexed data stream. The language information included in the second descriptor represents a non-language. Based on the language information, the legacy 2D-compatible receiving apparatus can extract only the 2D stream from the multiplexed data stream and decode the 2D stream easily with a high accuracy. That is, since the 3D extension stream is not decoded, the reception processing can be prevented from being interrupted by the decoding.

FIG. 15

**Description**

TECHNICAL FIELD

The present technology relates to a transmitting apparatus, a transmitting method, and a receiving apparatus. In particular, the present technology relates to a transmitting apparatus or the like, which transmits superimposition information data and disparity information together with stereoscopic image data including left-eye image data and right-eye image data.

BACKGROUND ART

For example, Patent Document 1 has proposed a transmission scheme using television airwaves of stereoscopic image data. In this transmission scheme, stereoscopic image data having left-eye image data and right-eye image data are transmitted to display a stereoscopic image using a binocular disparity.

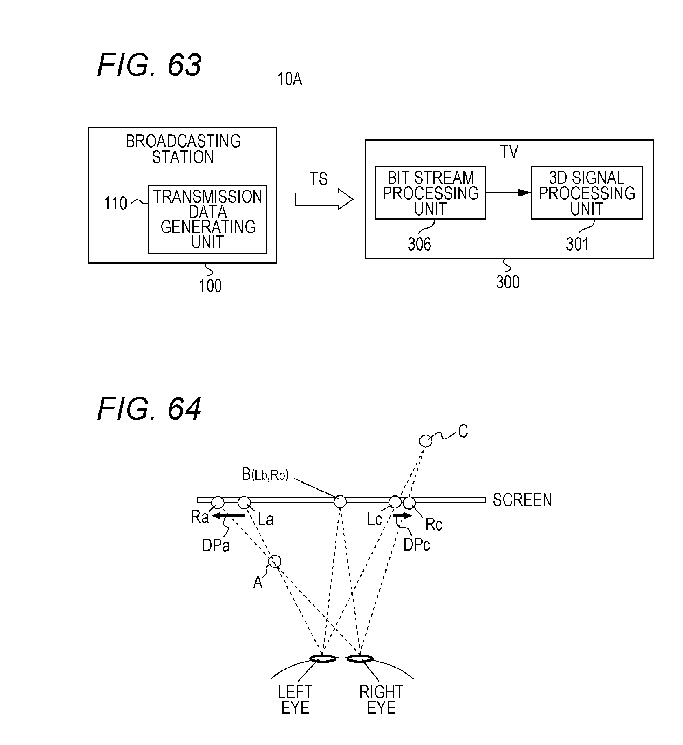

Fig. 64 illustrates the relation between the display positions of left and right images of an object (thing) on a screen and the reproduction position of a stereoscopic image thereof, in a stereoscopic image display using a binocular disparity. For example, as for an object A of which the left image La and the right image Ra are displayed respectively at the right side and the left side on the screen as illustrated, since the left and right lines of sight intersect with each other in front of a screen surface, the reproduction position of a stereoscopic image thereof is in front of the screen surface. DPa denotes a disparity vector of the object A in the horizontal direction.

Also, for example, as for an object B of which the left image Lb and the right image Rb are respectively displayed at the same position on the screen as illustrated, since the left and right lines of sight intersect with each other at the screen surface, the reproduction position of a stereoscopic image thereof is on the screen surface. In addition, for example, as for an object C of which the left image Lc and the right image Rc are displayed respectively at the left side and the right side on the screen as illustrated, since the left and right lines of sight intersect with each other inside the screen surface, the reproduction position of a stereoscopic image thereof is inside the screen surface. DPc denotes a disparity vector of the object C in the horizontal direction.

CITATION LIST

PATENT DOCUMENT

Patent Document 1: Japanese Patent Application Laid-Open No. 2005-6114

SUMMARY OF THE INVENTION

PROBLEMS TO BE SOLVED BY THE INVENTION

As described above, in a stereoscopic image display, a viewer usually perceives the perspective of a stereoscopic image by using a binocular disparity. Also, it is expected that superimposition information superimposed on an image, such as a caption, will be rendered in conjunction with a stereoscopic image display not only as a two-dimensional (2D) spatial depth feel but also as a three-dimensional (3D) depth feel. For example, in the case where an image and a caption are displayed in a superimposed (overlaid) manner but not displayed in front of a thing (object) in an image closest in terms of the perspective, a viewer may feel a perspective discrepancy.

Thus, it is considered that disparity information between a left-eye image and a right-eye image is transmitted together with data of superimposition information and a receiving side provides a disparity between left-eye superimposition information and right-eye superimposition information. In this manner, disparity information is meaningful information in a receiving apparatus capable of displaying a stereoscopic image. On the other hand, the disparity information is unnecessary a legacy 2D-compatible receiving apparatus. In the 2D-compatible receiving apparatus, there is a need to take some kinds of measures to prevent normal reception processing from being interrupted by transmission of the disparity information.

An object of the present technology is to prevent reception processing of a legacy 2D-compatible receiving apparatus from being interrupted by transmission of disparity information.

SOLUTIONS TO PROBLEMS

A concept of the present technology is a transmitting apparatus including:

an image data output unit configured to output left-eye image data and right-eye image data for displaying a stereoscopic image;

a superimposition information data output unit configured to output superimposition information data to be superimposed on an image by the left-eye image data and the right-eye image data;

a disparity information output unit configured to output disparity information for providing a disparity by shifting the superimposition information to be superimposed on the image by the left-eye image data and the right-eye image data; and

a data transmitting unit configured to transmit a multiplexed data stream including a video data stream including the image data output from the image data output unit, a first private data stream including the superimposition information data output from the superimposition information data output unit, and a second private data stream including the disparity information output from the disparity information output unit,

wherein a first descriptor and a second descriptor including respective pieces of language information corresponding to the first private data stream and the second private data stream are inserted into the multiplexed data stream, and the language information included in the second descriptor is set to represent a non-language.

In the present technology, the image data output unit outputs left-eye image data and right-eye image data for displaying a stereoscopic image. The superimposition information data output unit outputs superimposition information data to be superimposed on an image by the left-eye image data and the right-eye image data. Herein, the superimposition information includes a caption, graphics, a text, and the like that are superimposed on the image. The disparity information output unit outputs disparity information for providing a disparity by shifting the superimposition information to be superimposed on the image by the left-eye image data and the right-eye image data.

The data transmitting unit transmits the multiplexed data stream. The transport stream includes a video data stream including image data, a first private data stream including superimposition information data, and a second private data stream including disparity information.

A first descriptor and a second descriptor including respective pieces of language information corresponding to the first private data stream and the second private data stream are inserted into the multiplexed data stream. The language information included in the second descriptor is set to represent a non-language.

For example, the superimposition information data is DVB (Digital Video Broadcasting) subtitle data, and the descriptors are a component descriptor and a subtitle descriptor. Also, for example, the language information representing a non-language is "zxx" representing a non-language of an ISO language code, or any one of language codes included in a space from "qaa" to "qrz" of an ISO language code.

In this manner, in the present technology, the multiplexed data stream includes the first private data stream including the superimposition information data, and the second private data stream including the disparity information. The first descriptor and the second descriptor including the respective pieces of language information are inserted into the multiplexed data stream. Therefore, based on the language information included in the descriptor, a legacy 2D-compatible receiving apparatus of a receiving side can extract only the first private data stream from the multiplexed data stream and decode the first private data stream extracted. Thus, the second private data stream can be prevented from being decoded. Accordingly, reception processing of the legacy 2D-compatible receiving apparatus can be prevented from being interrupted by transmission of the disparity information.

Also, in the present technology, for example, the superimposition information data may be DVB subtitle data, a first subtitle descriptor and a second subtitle descriptor corresponding respectively to the first private data stream and the second private data stream may be inserted into the multiplexed data stream, and a subtitle type represented by subtitle type information of the first subtitle descriptor may be different from a subtitle type represented by subtitle type information of the second subtitle descriptor.

In this case, based on the subtitle type information included in the subtitle descriptor, the legacy 2D-compatible receiving apparatus of the receiving side can extract only the first private data stream from the multiplexed data stream and decode the first private data stream extracted. Thus, the second private data stream can be prevented from being decoded. Accordingly, reception processing of the legacy 2D-compatible receiving apparatus can be prevented from being interrupted by transmission of the disparity information.

Also, in the present technology, for example, the superimposition information data may be DVB subtitle data, and a segment including the superimposition information data of the first private data stream may be equal to a page ID of a segment including the disparity information of the second private data stream. In this case, based on the page ID, a 3D-compatible receiving apparatus of the receiving side can easily combine the segment including the superimposition information data and the segment including the disparity information.

Also, in the present technology, the superimposition information data may be DVB subtitle data, and the disparity information included in the second private data stream may be operated as an ancillary page. In this case, when coping with a multi-language server, since the second private data stream including the disparity information can be commonly transmitted to each service, efficient use of a transmission bandwidth can be achieved.

Another concept of the present technology is a receiving apparatus including:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;

a video decoding unit configured to extract the video data stream from the multiplexed data stream received by the data receiving unit and decode the video data stream extracted; and

a subtitle decoding unit configured to extract the first subtitle data stream from the multiplexed data stream received by the data receiving unit and decode the first subtitle data stream extracted,

wherein descriptors including respective pieces of subtitle type information corresponding to the first subtitle data stream and the second subtitle data stream are inserted into the multiplexed data stream,

the respective pieces of subtitle type information included in the descriptors corresponding to the first subtitle data stream and the second subtitle data stream are set to represent different subtitle types, and

the subtitle decoding unit determines the subtitle data stream to be decoded after being extracted from the multiplexed data stream, based on the subtitle type information inserted into the descriptor.

In the present technology, the data receiving unit receives the multiplexed data stream including the video data stream, the first subtitle data stream, and the second subtitle data stream. The video decoding unit extracts the video data stream from the multiplexed data stream and decodes the video data stream extracted. Also, the video decoding unit extracts the first subtitle data stream from the multiplexed data stream and decodes the first subtitle data stream extracted.

Herein, the descriptors including the respective pieces of subtitle type information corresponding to the first subtitle data stream and the second subtitle data stream are inserted into the multiplexed data stream, The respective pieces of subtitle type information included in the descriptors corresponding to the first subtitle data stream and the second subtitle data stream are set to represent different subtitle types.

The subtitle decoding unit determines the subtitle data stream to be decoded after being extracted from the multiplexed data stream, based on the subtitle type information inserted into the descriptor. Accordingly, for example, in a 2D-compatible receiving apparatus of a receiving side, since the second private data stream including the disparity information can be prevented from being decoded, reception processing of the legacy 2D-compatible receiving apparatus can be prevented from being interrupted by transmission of the disparity information.

Another concept of the present technology is a receiving apparatus including:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;

a video decoding unit configured to extract the video data stream from the multiplexed data stream received by the data receiving unit and decode the video data stream extracted; and

a subtitle decoding unit configured to extract the first subtitle data stream from the multiplexed data stream received by the data receiving unit and decode the first subtitle data stream extracted,

wherein descriptors including respective pieces of language information corresponding to the first subtitle data stream and the second subtitle data stream are inserted into the multiplexed data stream,

the language information included in the descriptor corresponding to the second subtitle data stream is set to represent a non-language, and

the subtitle decoding unit determines the subtitle data stream to be decoded after being extracted from the multiplexed data stream, based on the language information inserted into the descriptor.

In the present technology, the data receiving unit receives the multiplexed data stream including the video data stream, the first subtitle data stream, and the second subtitle data stream. The video decoding unit extracts the video data stream from the multiplexed data stream and decodes the video data stream extracted. Also, the video decoding unit extracts the first subtitle data stream from the multiplexed data stream and decodes the first subtitle data stream extracted.

Herein, the descriptors including the respective pieces of language information corresponding to the first subtitle data stream and the second subtitle data stream are inserted into the multiplexed data stream, The language information included in the descriptor corresponding to the second subtitle data stream is set to represent a non-language.

The subtitle decoding unit determines the subtitle data stream to be decoded after being extracted from the multiplexed data stream, based on the language information inserted into the descriptor. Accordingly, for example, in a 2D-compatible receiving apparatus of a receiving side, since the second private data stream including the disparity information can be prevented from being decoded, reception processing of the legacy 2D-compatible receiving apparatus can be prevented from being interrupted by transmission of the disparity information.

EFFECTS OF THE INVENTION

According to the present technology, reception processing of the legacy 2D-compatible receiving apparatus can be prevented from being interrupted by transmission of the disparity information.

BRIEF DESCRIPTION OF DRAWINGS

Fig. 1 is a block diagram illustrating an example of a configuration of an image transmitting/receiving system according to an embodiment of the present invention.

Fig. 2 is a block diagram illustrating an example of a configuration of a transmission data generating unit in a broadcasting station.

Fig. 3 is a diagram illustrating image data of a 1920x1080 pixel format.

Fig. 4 is a diagram for describing a Top & Bottom scheme, a Side By Side scheme, and a Frame Sequential scheme that are stereoscopic image data (3D image data) transmitting schemes.

Fig. 5 is a diagram for describing an example of detecting a disparity vector of a right-eye image with respect to a left-eye image.

Fig. 6 is a diagram for describing the obtainment of a disparity vector by a block matching scheme.

Fig. 7 is a diagram illustrating an example of an image in the case where a value of a disparity vector of each pixel is used as a luminance value of each pixel.

Fig. 8 is a diagram illustrating an example of a disparity vector of each block.

Fig. 9 is a diagram for describing downsizing processing performed by a disparity information creating unit of the transmission data generating unit.

Fig. 10 is a diagram illustrating an example of a region defined on an image in subtitle data and a subregion defined in the region.

Fig. 11 is a diagram illustrating a configuration of a 2D stream and a 3D extension stream that are included in a transport stream TS.

Fig. 12 is a diagram for describing the association of a value of a time stamp PTS inserted into a PES header of a 2D stream PES1(1): PES#1 with a value of a time stamp PTS inserted into a PES header of a 3D extension stream PES2(2): PES#2.

Fig. 13 is a diagram illustrating an example in which the values of the time stamps PTS of the 2D stream and the 3D extension stream are set to different values.

Fig. 14 is a diagram illustrating another example in which the values of the time stamps PTS of the 2D stream and the 3D extension stream are set to different values.

Fig. 15 is a diagram illustrating a configuration of a transport stream TS including a 2D stream and a 3D extension stream.

Fig. 16 is a diagram illustrating a structure of a PCS (page_composition_segment) constituting subtitle data.

Fig. 17 is a diagram illustrating the correspondence relation between each value of segment_type and a segment type.

Fig. 18 is a diagram for describing information (Component_type = 0x15, 0x25) representing a 3D subtitle format that is newly defined.

Fig. 19 is a diagram illustrating the extraction of a subtitle descriptor (Subtitling_descriptor) and a component descriptor (Component_descriptor) inserted into a transport stream.

Fig. 20 is a diagram illustrating the extraction of PES streams (2D stream and 3D extension stream) inserted into a transport stream.

Fig. 21 is a diagram illustrating the use of any one of language codes included in a space from "qaa" to "qrz" of an ISO language code, as an ISO language code representing a non-language.

Fig. 22 is a diagram illustrating the extraction of an ISO language code (ISO 639-2 Code) list.

Fig. 23 is a diagram illustrating an example of a stream configuration of subtitle data streams (2D stream and 3D extension stream).

Fig. 24 is a diagram illustrating an example of a syntax of the component descriptor (Component_descriptor).

Fig. 25 is a diagram illustrating an example of a syntax of the subtitle descriptor (Subtitling descriptor).

Fig. 26 is a diagram illustrating an example of updating disparity information by using an interval period and the case where an interval period is fixed and is equal to an update period.

Fig. 27 is a diagram illustrating an example of updating disparity information by using an interval period and an example of updating disparity information in the case where an interval period is set to short.

Fig. 28 is a diagram illustrating an example of a configuration of the 3D extension stream.

Fig. 29 is a diagram illustrating an example of updating disparity information in the case of sequentially transmitting DSS segments.

Fig. 30 is a diagram illustrating an example of updating disparity information, in which an update frame interval is expressed in a multiple of an interval duration (ID) as a unit period.

Fig. 31 is a diagram illustrating an example of displaying subtitles, in which two regions as caption display regions are included in a page area (Area for Page_default).

Fig. 32 is a diagram illustrating an example of the disparity information curve of each region and page in the case where disparity information in units of a region and disparity information in units of a page including all regions are included in a DSS segment, as disparity information that is sequentially updated in a caption display period.

Fig. 33 is a diagram illustrating a transmission structure of disparity information of each page and region.

Fig. 34 is a diagram (1/3) illustrating an example of a syntax of the DSS.

Fig. 35 is a diagram (2/3) illustrating an example of a syntax of the DSS.

Fig. 36 is a diagram (3/3) illustrating an example of a syntax of the DSS.

Fig. 37 is a diagram (1/4) illustrating the main data definition contents (semantics) of the DSS.

Fig. 38 is a diagram (2/4) illustrating the main data definition contents (semantics) of the DSS.

Fig. 39 is a diagram (3/4) illustrating the main data definition contents (semantics) of the DSS.

Fig. 40 is a diagram (4/4) illustrating the main data definition contents (semantics) of the DSS.

Fig. 41 is a diagram illustrating the concept of broadcast reception in the case where a set-top box and a television receiver are 3D-compatible devices.

Fig. 42 is a diagram schematically illustrating extraction processing of a 2D stream and a 3D extension stream in the set-top box (3D-compatible device).

Fig. 43 is a diagram illustrating the concept of broadcast reception in the case where a set-top box and a television receiver are legacy 2D-compatible devices.

Fig. 44 is a diagram schematically illustrating extraction processing of only a 2D stream in the set-top box (2D-compatible device).

Fig. 45 is a diagram illustrating the summarization of the concept of broadcast reception in the case where a receiver is a legacy 2D-compatible device (2D receiver) and in the case where a receiver is a 3D-compatible device (3D receiver).

Fig. 46 is a diagram illustrating an example of displaying a caption (graphics information) on an image, and the perspective of a background, a near-view object, and the caption.

Fig. 47 is a diagram illustrating an example of displaying a caption on an image, and a left-eye caption LGI and a right-eye caption RGI for displaying the caption.

Fig. 48 is a block diagram illustrating an example of a configuration of a set-top box included in the image transmitting/receiving system.

Fig. 49 is a block diagram illustrating an example (3D-compatible) of a configuration of a bit stream processing unit included in the set-top box.

Fig. 50 is a diagram illustrating an example of a syntax of a multi-decoding descriptor that can be used to associate a 2D stream with a 3D extension stream.

Fig. 51 is a diagram illustrating the contents (semantics) of main information in the example of the syntax of the multi-decoding descriptor.

Fig. 52 is a diagram illustrating an example of a configuration of a transport stream TS in the case where the multi-decoding descriptor is disposed.

Fig. 53 is a block diagram illustrating another example (2D-compatible) of a configuration of a bit stream processing unit included in the set-top box.

Fig. 54 is a block diagram illustrating an example of a configuration of a television receiver included in the image transmitting/receiving system.

Fig. 55 is a diagram illustrating an example of a configuration of a transport stream TS in the case where the disparity information included in the 3D extension stream is operated as an ancillary page (ancillary_page).

Fig. 56 is a diagram illustrating the extraction of a subtitle descriptor (Subtitling_descriptor) and a component descriptor (Component_descriptor) inserted into a transport stream.

Fig. 57 is a diagram illustrating the extraction of PES streams (2D stream and 3D extension stream) inserted into a transport stream.

Fig. 58 is a diagram illustrating an example of a stream configuration of a subtitle data stream (2D stream and 3D extension stream) in the case where the disparity information included in the 3D extension stream is operated as an ancillary page (ancillary_page).

Fig. 59 is a diagram schematically illustrating extraction processing of a 2D stream and a 3D extension stream in the 3D-compatible device.

Fig. 60 is a diagram schematically illustrating extraction processing of only a 2D stream in the 2D-compatible device.

Fig. 61 is a block diagram illustrating another example of a configuration of a set-top box included in the image transmitting/receiving system.

Fig. 62 is a block diagram illustrating another example of a configuration of a television receiver included in the image transmitting/receiving system.

Fig. 63 is a block diagram illustrating another example of a configuration of the image transmitting/receiving system.

Fig. 64 is a diagram for describing the relation between the display positions of left and right images of an object on a screen and the reproduction position of a stereoscopic image thereof, in a stereoscopic image display using a binocular disparity.

MODE FOR CARRYING OUT THE INVENTION

Hereinafter, modes for implementing the invention (hereinafter, referred to as "embodiments") will be described. In addition, the description will be made in the following order.

1. Embodiments

2. Modifications

<1. Embodiments>

[Example of Configuration of Image Transmitting/Receiving System]

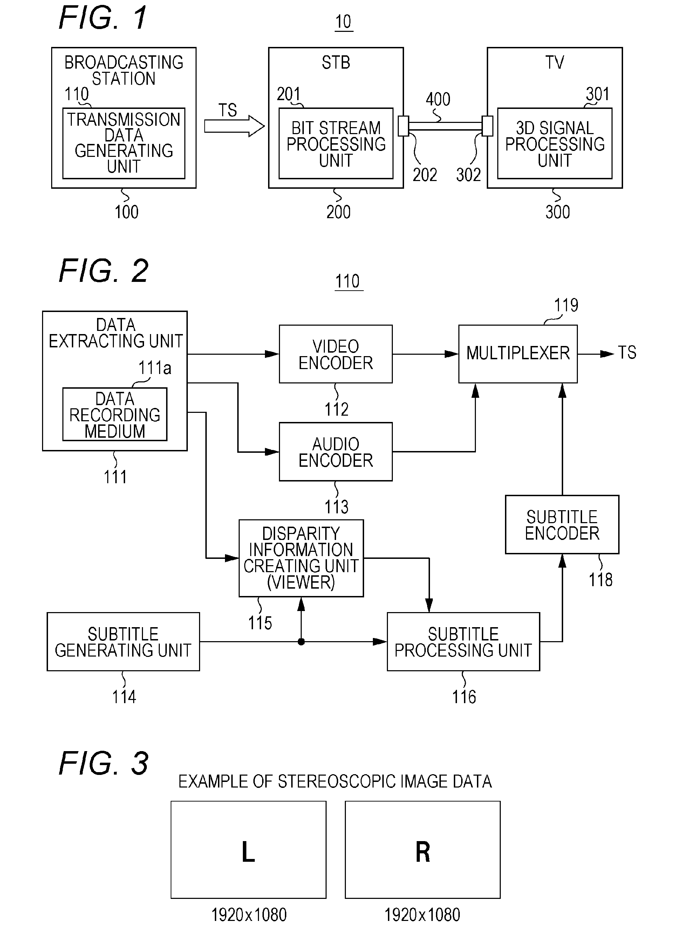

Fig. 1 illustrates an example of a configuration of an image transmitting/receiving system 10 according to an embodiment. The image transmitting/receiving system 10 includes a broadcasting station 100, a set-top box (STB) 200, and a television receiver (TV) 300.

The set-top box 200 and the television receiver 300 are connected by a digital interface of HDMI (High Definition Multimedia Interface). The set-top box 200 and the television receiver 300 are connected by using an HDMI cable 400. The set-top box 200 is provided with an HDMI terminal 202. The television receiver 300 is provided with an HDMI terminal 302. One end of the HDMI cable 400 is connected to the HDMI terminal 202 of the set-top box 200, and the other end of the HDMI cable 400 is connected to the HDMI terminal 302 of the television receiver 300.

[Description of Broadcasting Station]

The broadcasting station 100 transmits a transport stream TS on a broadcast wave. The broadcasting station 100 includes a transmission data generating unit 110 that generates a transport stream TS. The transport stream TS includes stereoscopic image data, audio data, superimposition information data, disparity information, or the like. The stereoscopic image data has a predetermined transmission format, and includes left-eye image data and right-eye image data for displaying a stereoscopic image. In general, the superimposition information is a caption, graphics information, text information, or the like. However, in the embodiment, the superimposition information is a subtitle (caption).

[Example of Configuration of Transmission Data Generating Unit]

Fig. 2 illustrates an example of a configuration of the transmission data generating unit 110 in the broadcasting station 100. The transmission data generating unit 110 transmits disparity information (disparity vector) in a data structure that can easily cooperate with a DVB (Digital Video Broadcasting) scheme that is one of the existing broadcast standards. The transmission data generating unit 110 includes a data extracting unit 111, a video encoder 112, and an audio encoder 113. Also, the transmission data generating unit 110 includes a subtitle generating unit 114, a disparity information creating unit 115, a subtitle processing unit 116, a subtitle encoder 118, and a multiplexer 119.

The data extracting unit 111 is, for example, detachably mounted with a data recording medium 111a. The data recording medium 111a stores the audio data and the disparity information in association with the stereoscopic image data including the left-eye image data and the right-eye image data. The data extracting unit 111 extracts the stereoscopic image data, the audio data, the disparity information, or the like from the data recording medium 111a and outputs the same. Examples of the data recording medium 111a include a disk-type recording medium and a semiconductor memory.

The stereoscopic image data recorded in the data recording medium 111a is stereoscopic image data of a predetermined transmission scheme. An example of the transmission scheme for transmitting the stereoscopic image data (3D image data) will be described. Herein, although the following first to third transmission schemes will be described as an example, any other transmission schemes may be used to transmit the stereoscopic image data (3D image data). Also, herein, the case where the left-eye (L) image data and the right-eye (R) image data are image data with a predetermined resolution, for example, a 1920x1080 pixel format as illustrated in Fig. 3 will be described as an example.

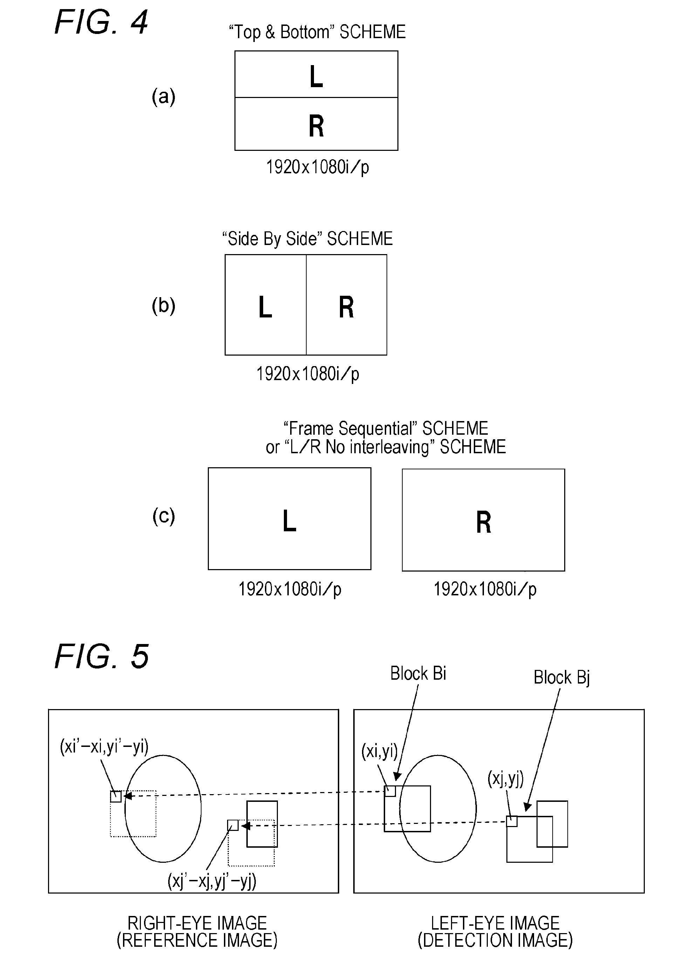

The first transmission scheme is a Top & Bottom scheme, and is a scheme that transmits each line data of the left-eye image data in the first half of the vertical direction and transmits each line data of the right-eye image data in the second half of the vertical direction as illustrated in Fig. 4(a). In this case, since the lines of the left-eye image data and the right-eye image data are reduced by 1/2, the vertical resolution is reduced by 1/2 with respect to the original signal.

The second transmission scheme is a Side By Side scheme, and is a scheme that transmits pixel data of the left-eye image data in the first half of the horizontal direction and transmits pixel data of the right-eye image data in the second half of the horizontal direction as illustrated in Fig. 4(b). In this case, the horizontal-direction pixel data of each of the left-eye image data and the right-eye image data is reduced by 1/2. The horizontal resolution is reduced by 1/2 with respect to the original signal.

The third transmission scheme is a Frame Sequential scheme or an L/R No Interleaving scheme, and is a scheme that transmits the left-eye image data and the right-eye image data by being sequentially switched for the respective frames as illustrated in Fig. 4(c). In addition, this scheme also includes a Full Frame scheme or a Service Compatible scheme for the conventional 2D format.

Also, the disparity information recorded in the data recording medium 111a is, for example, a disparity vector of each pixel constituting an image. An example of the detection of the disparity vector will be described. Herein, an example of detecting the disparity vector of the right-eye image with respect to the left-eye image will be described. As illustrated in Fig. 5, the left-eye image is used as a detection image, and the right-eye image is used as a reference image. In this example, disparity vectors at the positions (xi, yi) and (xj, yj) are detected.

The case of detecting the disparity vector at the position (xi, yi) will be described as an example. In this case, in the left-eye image, for example, a 4x4, 8x8, or 16x16 pixel block (disparity detection block) Bi is set with the upper left pixel at the position (xi, yi). In the right-eye image, a pixel block matched with the pixel block Bi is searched for.

In this case, in the right-eye image, a search range around the position (xi, yi) is set. Using each pixel within the search range as a sequential attention pixel, a comparison block like the above-described pixel block Bi, for example, a 4x4, 8x8, or 16x16 comparison block is sequentially set.

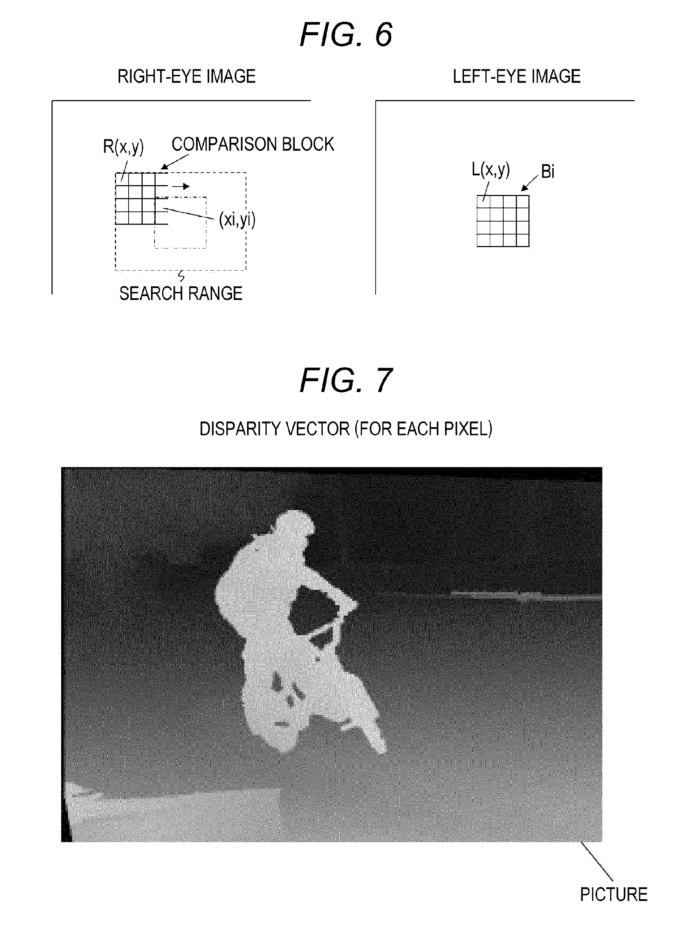

Between the pixel block Bi and the sequentially-set comparison blocks, the sum of absolute difference values for the respective corresponding pixels is obtained. Herein, as illustrated in Fig. 6, when the pixel value of the pixel block Bi is $L(x, y)$ and the pixel value of the comparison block is $R(x, y)$, the sum of absolute difference values between the pixel block Bi and the comparison blocks is expressed as $\sum |L(x, y) - R(x, y)|$.

When an n number of pixels are included in the search range set in the right-eye image, an n number of sums S1 to Sn are finally obtained and the minimum sum Smin among them is selected. The position (xi', yi') of the upper left pixel is obtained from the comparison block for which the minimum sum Smin is obtained. Accordingly, the disparity vector at the position (xi, yi) is detected as (xi' - xi, yi' - yi). Although not described in detail, for example, a 4x4, 8x8, or 16x16 pixel block Bj with the upper left pixel at the position (xj, yj) is set in the left-eye image, and the disparity vector at the position (xj, yj) is detected through the same process.

The video encoder 112 performs encoding, such as MPEG4-AVC, MPEG2, or VC-1, on the stereoscopic image data extracted by the data extracting unit 111, to generate a video data stream (video elementary stream). The audio encoder 113 performs encoding, such as AC3 or AAC, on the audio data extracted by the data extracting unit 111, to generate an audio data stream (audio elementary stream).

The subtitle generating unit 114 generates subtitle data as caption data of a DVB (Digital Video Broadcasting) scheme. The subtitle data is subtitle data for a two-dimensional image. The subtitle generating unit 114 constitutes a superimposition information data output unit.

The disparity information creating unit 115 performs downsizing processing on the disparity vector (horizontal-direction disparity vector) of a plurality of pixels or each pixel extracted by the data extracting unit 111, to generate disparity information of each layer as described below. In addition, the disparity information need not be necessarily generated by the disparity information creating unit 115, and may also be supplied separately from the outside.

Fig. 7 illustrates an example of depth-direction relative data that is provided as a luminance value of each pixel. Herein, the depth-direction relative data can be treated as a disparity vector of each pixel through a predetermined conversion. In this example, a luminance value of a person portion is set to be high. This means that a disparity vector value of the person portion is large, and thus means that the person portion is perceived as being protrusive in the stereoscopic image display. Also, in this example, a luminance value of a background portion is set to be low. This means that a disparity vector value of the background portion is small, and thus means that the background portion is perceived as being sunken in the stereoscopic image display.

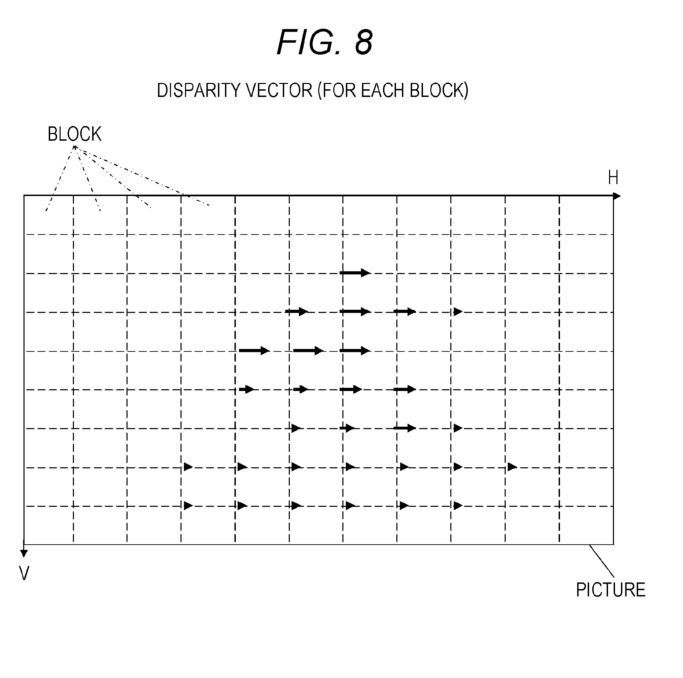

Fig. 8 illustrates an example of a disparity vector of each block. A block corresponds to the upper layer of a pixel located at the lowermost layer. The block is constructed by dividing an image (picture) region into a predetermined size in the horizontal direction and the vertical direction. The disparity vector of each block is obtained, for example, by selecting a disparity vector with the largest value from the disparity vectors of all pixels present in the block. In this example, the disparity vector of each block is represented by an arrow, and the length of the arrow corresponds to the magnitude of the disparity vector.

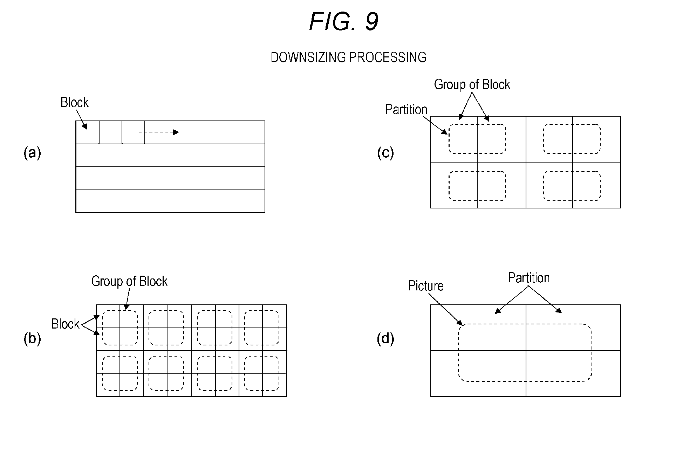

Fig. 9 illustrates an example of the downsizing processing performed by the disparity information creating unit 115. First, as illustrated in Fig. 9(a), the disparity information creating unit 115 obtains a signed disparity vector of each block by using the disparity vector of each pixel. As described above, the block corresponds to the upper layer of a pixel located at the lowermost layer, and is constructed by dividing an image (picture) region into a predetermined size in the horizontal direction and the vertical direction. The disparity vector of each block is obtained, for example, by selecting a disparity vector with the smallest value or a negative disparity vector with the largest absolute value from the disparity vectors of all pixels present in the block.

Next, as illustrated in Fig. 9(b), the disparity information creating unit 115 obtains a disparity vector of each group (Group Of Block) by using the disparity vector of each block. The group corresponds to the upper layer of the block, and is obtained by grouping a plurality of adjacent blocks together. In the example of Fig. 9(b), each group includes four blocks bound by a broken-line box. The disparity vector of each group is obtained, for example, by selecting a disparity vector with the smallest value or a negative disparity vector with the largest absolute value from the disparity vectors of all blocks in the group.

Next, as illustrated in Fig. 9(c), the disparity information creating unit 115 obtains a disparity vector of each partition by using the disparity vector of each group. The partition corresponds to the upper layer of the group, and is obtained by grouping a plurality of adjacent groups together. In the example of Fig. 9(c), each partition includes two groups bound by a broken-line box. The disparity vector of each partition is obtained, for example, by selecting a disparity vector with the smallest value or a negative disparity vector with the largest absolute value from the disparity vectors of all groups in the partition.

Next, as illustrated in Fig. 9(d), the disparity information creating unit 115 obtains a disparity vector of the entire picture (entire image) located at the uppermost layer by using the disparity vector of each partition. In the example of Fig. 9(d), the entire picture includes four partitions bound by a broken-line box. The disparity vector of the entire picture is obtained, for example, by selecting a disparity vector with the smallest value or a negative disparity vector with the largest absolute value from the disparity vectors of all partitions included in the entire picture.

In this way, the disparity information creating unit 115 can obtain the disparity vector of each region of each layer such as the block, the group, the partition, and the entire picture by performing the downsizing processing on the disparity vector of each pixel located at the lowermost layer. Also, in the example of the downsizing processing illustrated in Fig. 9, in addition to the layer of the pixel, the disparity vectors of four layers of the block, the group, the partition, and the entire picture are finally obtained. However, the number of layers, the method of dividing the region of each layer, and the number of regions are not limited thereto.

Returning to Fig. 2, the subtitle processing unit 116 can define a subregion in a region based on the subtitle data generated by the subtitle generating unit 114. Also, the subtitle processing unit 116 sets disparity information for shifting the display position of the superimposition information in the left-eye image and the right-eye image based on the disparity information created by the disparity information creating unit 115. The disparity information can be set for each subregion, region or page.

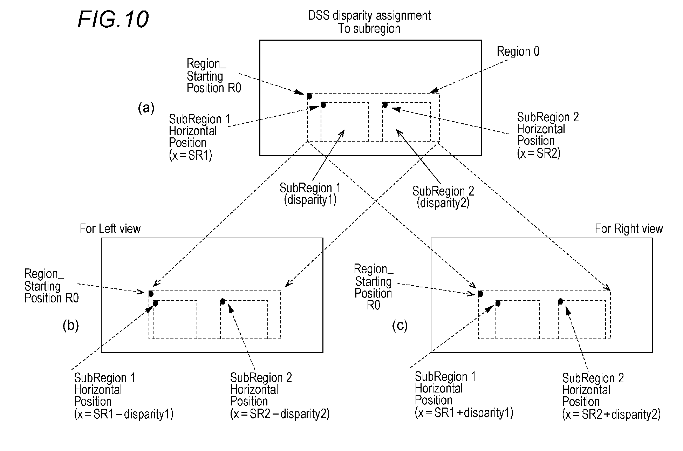

Fig. 10(a) illustrates an example of a region defined on an image in the subtitle data and a subregion defined in the region. In this example, two subregions of SubRegion 1 and SubRegion 2 are defined in Region 0 with Region_Starting Position of R0. The horizontal position x of the SubRegion 1 is SR1, and the horizontal position x of the SubRegion 2 is SR2. In this example, disparity information Disparity 1 is set for subregion SubRegion 1, and disparity information Disparity 2 is set for subregion SubRegion 2.

Fig. 10(b) illustrates an example of the shift adjustment in the subregion in the left-eye image by the disparity information. Disparity information Disparity 1 is set for a subregion SubRegion 1. Therefore, as for the subregion Sub-Region 1, a shift adjustment is performed such that the horizontal position x is SR1 - disparity 1. Also, disparity information Disparity 2 is set for a subregion SubRegion 2. Therefore, as for the subregion SubRegion 2, a shift adjustment is performed such that the horizontal position x is SR2 - disparity 2.

Fig. 10(c) illustrates an example of the shift adjustment in the subregion in the right-eye image by the disparity information. Disparity information Disparity 1 is set for a subregion SubRegion 1. Therefore, as for the subregion Sub-Region 1, a shift adjustment is performed such that the horizontal position x is SR1 + disparity 1 as opposed to the above-described left-eye image. Also, disparity information Disparity 2 is set for a subregion SubRegion 2. Therefore, as for the subregion SubRegion 2, a shift adjustment is performed such that the horizontal position x is SR2 + disparity 2 as opposed to the above-described left-eye image.

The subtitle processing unit 116 outputs display control information such as the disparity information and the region information of the above-described subregion, together with the subtitle data generated by the subtitle generating unit 114. Also, the disparity information may also be set in units of a region or a page, in addition to being set in units of a subregion as described above.

The subtitle data includes segments such as DDS, PCS, RCS, CDS, ODS, and EDS. The DDS (display definition segment) specifies a display size for an HDTV. The PCS (page composition segment) specifies a region position in a page. The RCS (region composition segment) specifies a size of a region or an encoding mode of an object, and also specifies a starting position of the object.

The CDS (CLUT definition segment) specifies a CLUT content. The ODS (object data segment) includes encoded pixel data Pixeldata. The EDS (end of display set segment) indicates the end of the subtitle data starting from the segment of DDS. In this embodiment, the segment of DSS (Display Signaling Segment) is further defined. The above-described display control information is inserted into the segment of DSS.

Returning to Fig. 2, the subtitle encoder 118 generates first and second private data streams (first and second subtitle data streams). That is, the subtitle encoder 118 generates the first private data stream (2D stream) including the segments of DDS, PCS, RCS, CDS, ODS, and EDS. Also, the subtitle encoder 118 generates the second private data stream (3D extension stream) including the segments of DDS, DSS, and EDS.

The multiplexer 119 multiplexes the respective data streams from the video encoder 112, the audio encoder 113, and the subtitle encoder 118 to obtain a transport stream TS as a multiplexed data stream. The transport stream TS includes a video data stream, an audio data stream, and first and second private data streams as PES (Packetized Elementary Stream) streams.

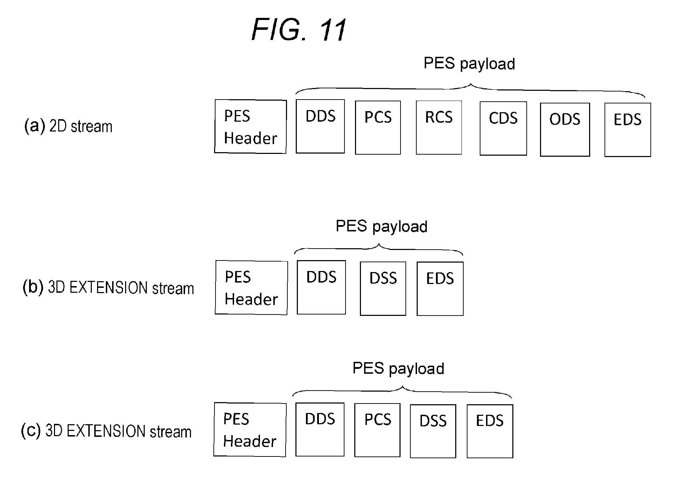

Fig. 11 illustrates a configuration of the first private data stream (2D stream) and the second private data stream (3D extension stream) that are included in the transport stream TS. Fig. 11(a) illustrates the 2D stream, in which a PES header is disposed at the beginning, followed by a PES payload including the respective segments of DDS, PCS, RCS, CDS, ODS, and EDS.

Also, Fig. 11(b) illustrates the 3D extension stream, in which a PES header is disposed at the beginning, followed by a PES payload including the respective segments of DDS, DSS, and EDS. Also, as illustrated in Fig. 11(c), the 3D extension stream may be configured to include the respective segments of DDS, PCS, DSS, and EDS in the PES payload. In this case, PAGE STATE of PCS is NORMAL CASE, which indicates that there is no change in superimposition data (bitmap).

Herein, a page ID (page_id) of each segment included in the 2D stream and a page ID (page_id) of each segment included in the 3D extension stream are equal. Accordingly, based on the page ID, a 3D-compatible receiving apparatus of the receiving side can easily combine the segment of the 2D stream and the segment of the 3D extension stream.

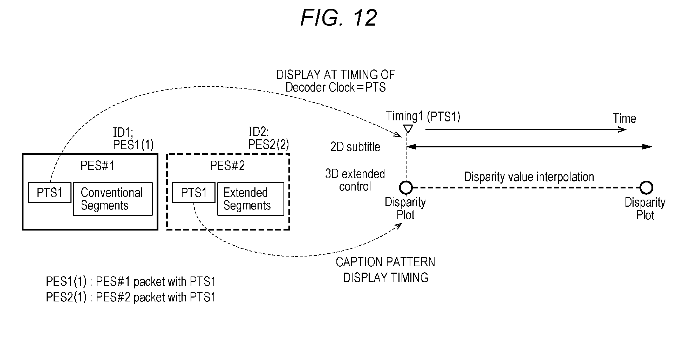

The multiplexer 119 includes synchronization information for synchronization between the display by the superimposition information data in the receiving side and the shift control by the disparity information in the 2D stream and the 3D extension stream. Specifically, as illustrated in Fig. 12, the multiplexer 119 is set such that a value of a time stamp PTS (Presentation Time Stamp) inserted into the PES header of the 2D stream PES1(1): PES#1 is associated with a value of a time stamp PTS inserted into the PES header of the 3D extension stream PES2(2): PES#2.

Fig. 12 illustrates an example in which the values of the time stamps PTS of the 2D stream and the 3D extension stream are set to the same value, that is, PTS1. In this case, in the receiving side (decoding side), the display of a caption pattern by the subtitle data (superimposition information data) is started from PTS1, and the shift control by the disparity information for displaying a caption pattern in 3D is also started from PTS1.

Also, in the example of Fig. 12, it is illustrated that the 3D extension stream includes two pieces of disparity information that are disparity information of a PTS1 frame and disparity information of a predetermined subsequent frame. In the receiving side (decoding side), it is indicated that the disparity information of an arbitrary frame between the two frames can be obtained by interpolation processing, and the shift control can be dynamically performed.

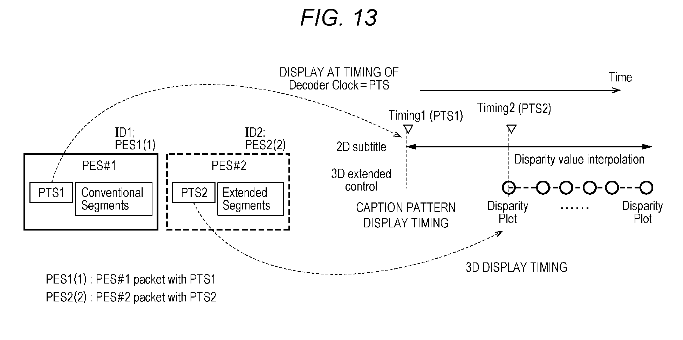

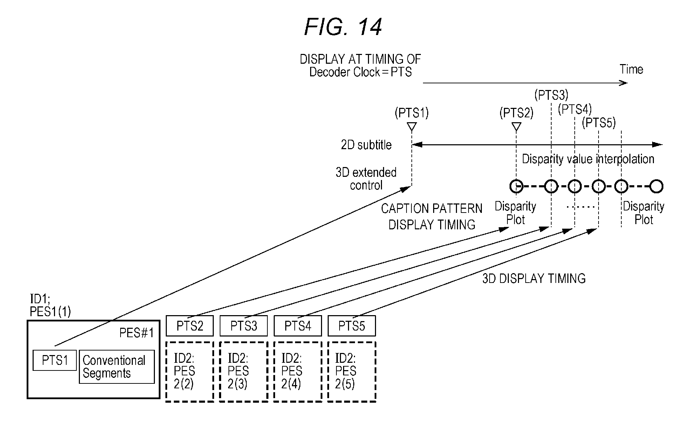

Also, in Fig. 12, "Conventional Segments" included in the 2D stream represent the respective segments of DDS, PCS, RCS, CDS, ODS, and EDS. Also, "Extended Segments" included in the 3D extension stream represent the respective segments of DDS, DSS, and EDS or the respective streams of DDS, PCS, DSS, and EDS. Also, in Fig. 12, "Elementary_PID" of the 2D stream is ID1, and "Elementary_PID" of the 3D extension stream is ID2. The same applies in Figs. 13 and 14 described below.

Fig. 13 illustrates an example in which the values of the time stamps PTS of the 2D stream and the 3D extension stream are set to different values. That is, in the example of Fig. 12, the value of the time stamp PTS of the 2D stream is set to PTS1, and the value of the time stamp PTS of the 3D extension stream is set to PTS2 following PTS1. In this case, in the receiving side (decoding side), the display of a caption pattern by the subtitle data (superimposition information data) is started from PTS1, and the shift control by the disparity information for displaying a caption pattern in 3D is started from PTS2.

Also, in the example of Fig. 13, it is illustrated that the 3D extension stream includes disparity information of a PTS2 frame and disparity information of a plurality of subsequent frames. In the receiving side (decoding side), it is indicated that the disparity information of an arbitrary frame between the plurality of frames can be obtained by interpolation processing, and the shift control can be dynamically performed.

Like Fig. 13, Fig. 14 illustrates an example in which the values of the time stamps PTS of the 2D stream and the 3D extension stream are set to different values. In addition, Fig. 14 illustrates an example in which there is a plurality of 3D extension streams with different time stamp (PTS) values. That is, in the example of Fig. 14, the value of the time stamp PTS of the 2D stream is set to PTS1. Also, the values of the time stamps PTS of a plurality of 3D extension frames are set to PTS2, PTS3, PTS4, ... following PTS1.

In this case, in the receiving side (decoding side), the display of a caption pattern by the subtitle data (superimposition information data) is started from PTS1. Also, the shift control by the disparity information for displaying a caption pattern in 3D is started from PTS2, and then sequential update is performed. Also, in the example of Fig. 14, the plurality of 3D extension streams includes only the disparity information represented by the respective type stamps. In the receiving side (decoding side), it is indicated that the disparity information of an arbitrary frame between the plurality of frames can be obtained by interpolation processing, and the shift control can be dynamically performed.

An operation of the transmission data generating unit 110 illustrated in Fig. 2 will be described briefly. The stereoscopic image data extracted from the data extracting unit 111 is supplied to the video encoder 112. In the video encoder 112, encoding such as MPEG4-AVC, MPEG2, or VC-1 is performed on the stereoscopic image data, and a video data stream (video elementary stream) including the encoded video data is generated. The video data stream is supplied to the multiplexer 119.

The audio data extracted from the data extracting unit 111 is supplied to the audio encoder 113. In the audio encoder 113, encoding such as MPEG-2 Audio AAC or MPEG-4 AAC is performed on the audio data, and an audio data stream including the encoded audio data is generated. The audio data stream is supplied to the multiplexer 119.

In the subtitle generating unit 114, subtitle data being DVB caption data (for a 2D image) is generated. The subtitle data is supplied to the disparity information creating unit 115 and the subtitle processing unit 116.

The disparity vector for each pixel extracted from the data extracting unit 111 is supplied to the disparity information creating unit 115. In the disparity information creating unit 115, downsizing processing is performed on the disparity vector for each pixel or the disparity vector for a plurality of pixels, and disparity information of each layer is generated. The disparity information is supplied to the subtitle processing unit 116.

In the subtitle processing unit 116, for example, a subregion in a region is defined based on the subtitle data generated by the subtitle generating unit 114. Also, in the subtitle processing unit 116, disparity information for shifting the display position of the superimposition information in the left-eye image and the right-eye image is set based on the disparity information created by the disparity information creating unit 115. In this case, the disparity information is set for each subregion, region or page.

The display control information and the subtitle data output from the subtitle processing unit 116 are supplied to the subtitle encoder 118. The display control information includes the region information of a subregion, the disparity information, and the like. In the subtitle encoder 118, first and second two private data streams (elementary streams) are generated.

That is, the first private data stream (2D stream) including the respective segments of DDS, PCS, RCS, CDS, ODS, and EDS is generated. In addition, the second private data stream (3D extension stream) including the respective segments of DDS, DSS, and EDS is generated. As described above, the segment of DSS is the segment including the display control information.

As described above, the respective data streams from the video encoder 112, the audio encoder 113, and the subtitle encoder 118 are supplied to the multiplexer 119. In the multiplexer 119, the respective data streams are packetized and multiplexed into a PES packet, and a transport stream TS is obtained as a multiplexed data stream. The transport stream TS includes a video data stream, an audio data stream, and first and second private data streams (first and second subtitle data streams) as PES streams.

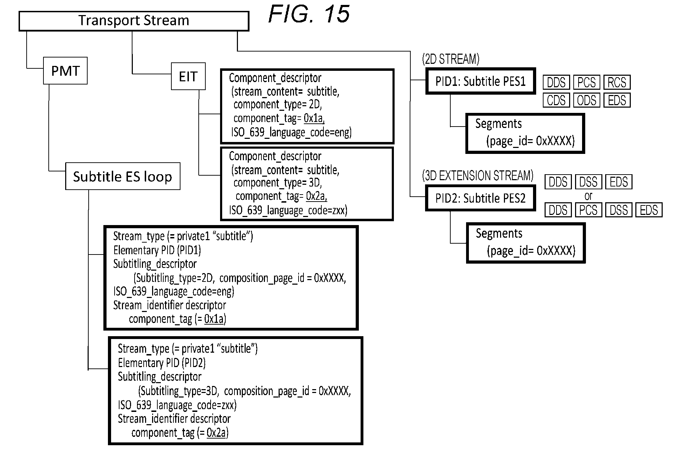

Fig. 15 illustrates an example of a configuration of the transport stream TS. In addition, in Fig. 15, the illustration of video and audio-related portions is omitted for simplicity of illustration. The transport stream TS includes a PES packet that is obtained by packetizing each elementary stream.

In this configuration example, the PES packet Subtitle PES1 of the 2D stream (first private data stream) and the PES packet Subtitle PES2 of the 3D extension stream (second private data stream) are included. The 2D stream (PES stream) includes the respective segments of DDS, PCS, RCS, CDS, ODS, and EDS. The 3D extension stream (PES stream) includes the respective segments of DDS, DSS, and EDS. In this case, "Elementary_PID" of the 2D stream and "Elementary_PID" of the 3D extension stream are set differently to PID1 and PID2, thus indicating that these streams are different PES streams.

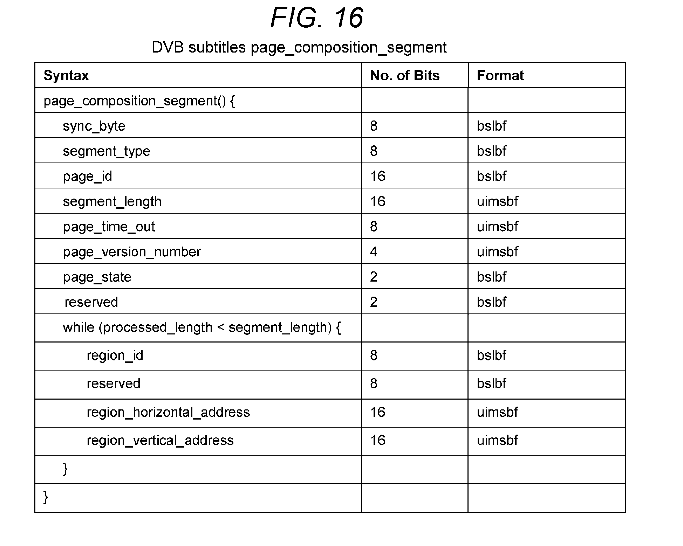

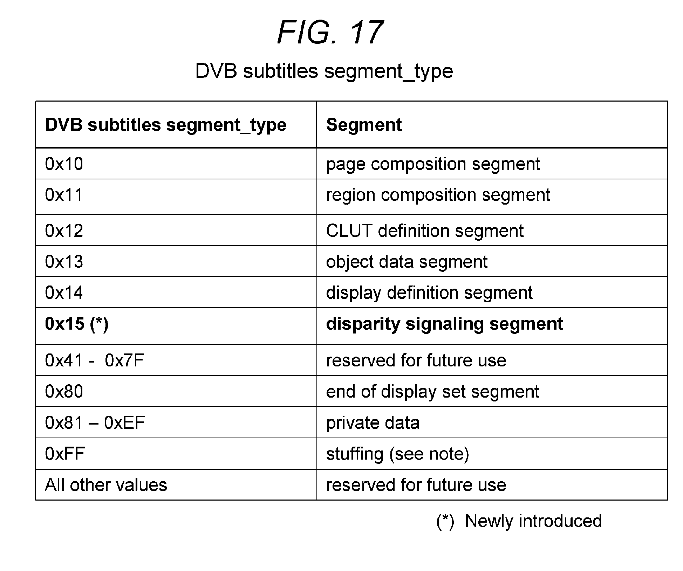

Fig. 16 illustrates a structure of PCS (page_composition_segment). The segment type of the PCS is 0x10 as illustrated in Fig. 17. Region_Horizontal_Address and Rregion_Vertical_Address indicate the starting position of a region.

Also, with respect to the other segments such as DDS, RCS, and ODS, the illustration of structures thereof will be omitted. As illustrated in Fig. 17, the segment type of DDS is 0x14, the segment type of RCS is 0x11, the segment type of CDS is 0x12, the segment type of ODS is 0x13, and the segment type of EDS is 0x80. In addition, as illustrated in Fig. 17, the segment type of the DSS is 0x15. A detailed structure of the segment of DSS will be described below.

Returning to Fig. 15, the transport stream TS also includes a PMT (Program Map Table) as PSI (Program Specific Information). The PSI is information describing to which program each elementary stream included in the transport stream belongs. Also, the transport stream includes an EIT (Event Information Table) as SI (Serviced Information) for performing management on each event. The EIT describes metadata for each program.

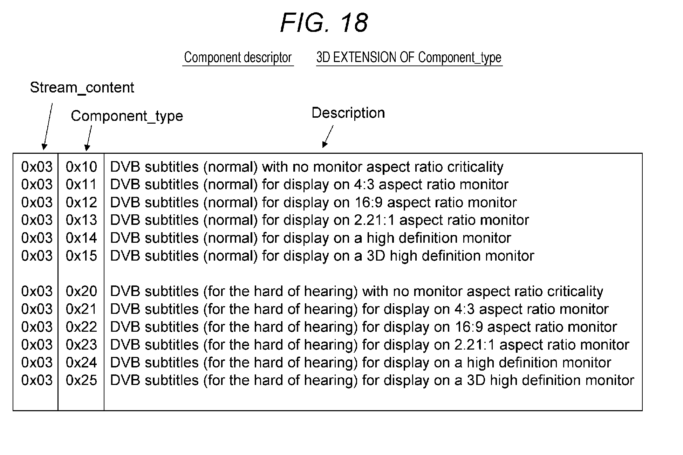

A subtitle descriptor (Subtitling_descriptor) representing the content of a subtitle is inserted into the PMT. Also, a component descriptor (Component_descriptor) representing the content of a delivery for each stream is inserted into the EIT. As illustrated in Fig. 18, in the case where the "stream content" of the component descriptor represents a subtitle, when the "component_type" is 0x15 of 0x25, it represents a 3D subtitle; and when the "component_type" is any other value, it represents a 2D subtitle. As illustrated in Fig. 15, the "subtitling_type" of the subtitle descriptor is set to the value of "component_type".

Also, the PMT includes a subtitle elementary loop having information related to a subtitle elementary stream. In the subtitle elementary loop, information such as a packet identifier (PID) is disposed for each stream, and a descriptor describing information related to the elementary stream is also disposed, although not illustrated.

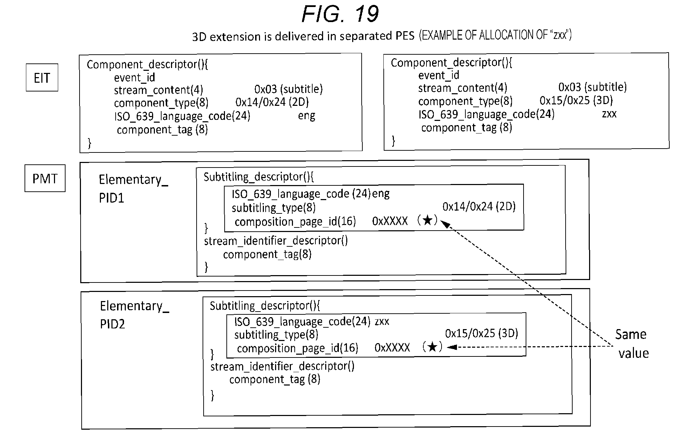

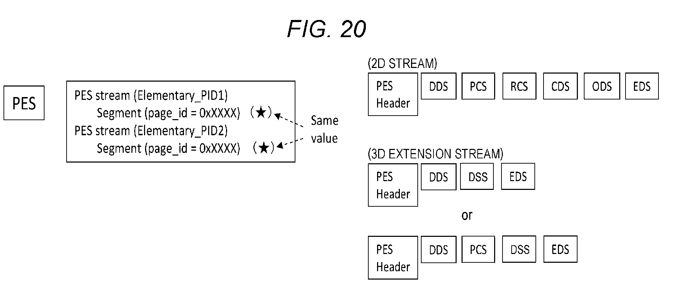

Fig. 19 illustrates the extraction of the subtitle descriptor (Subtitling_descriptor) and the component descriptor (Component_descriptor) illustrated in Fig. 15. Fig. 20 illustrates the extraction of the PES streams (2D stream and 3D extension stream) illustrated in Fig. 15.

A composition page ID (composition_page_id) of the subtitle descriptor is set to indicate that each segment included in the 3D extension stream is associated with each segment of the 2D stream. That is, the "composition_page_id" in the 3D extension stream and the "composition_page_id" in the 2D stream are set to share the same value (0xXXXX in the figure). Also, in order to indicate that each segment included in the 3D extension stream is associated with each segment of the 2D stream, the "page_ids" of the respective associated segments in both of the PES streams are encoded such as to have the same value.

In the subtitle descriptor and the component descriptor, for example, an ISO language code (ISO_639_language_code) is described as language information. The ISO language code of the descriptor corresponding to the 2D stream is set to represent the language of a subtitle (caption). In the illustrated example, the ISO language code is set to "eng" representing English. The 3D extension stream has a segment of the DSS with disparity information, but does not have a segment of the ODS. Therefore, the 3D extension stream does not depend on languages. The ISO language code described in the descriptor corresponding to the 3D extension stream is set to, for example, "zxx" representing a non-language.

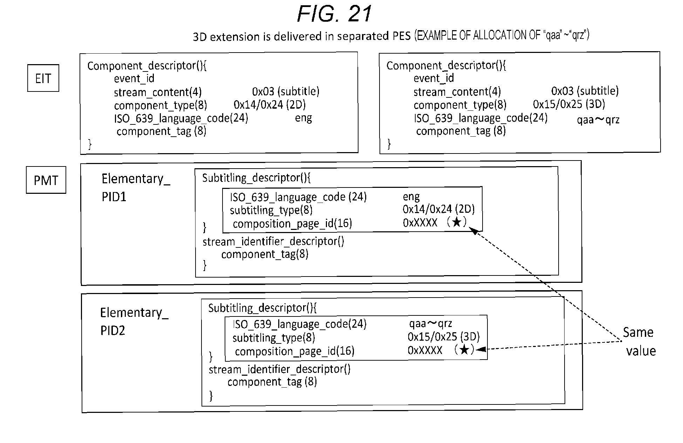

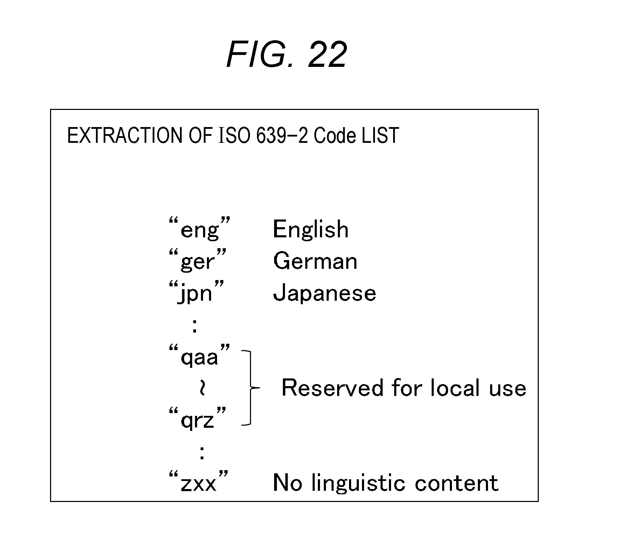

Also, it can be considered that any one of language codes included in a space from "qaa" to "qrz" of an ISO language code is used as an ISO language code representing a non-language. Fig. 21 illustrates the extraction of the subtitle descriptor (Subtitling_descriptor) and the component descriptor (Component_descriptor) in that case. Also, for reference, Fig. 22 illustrates the extraction of an ISO language code (ISO 639-2 Code) list.

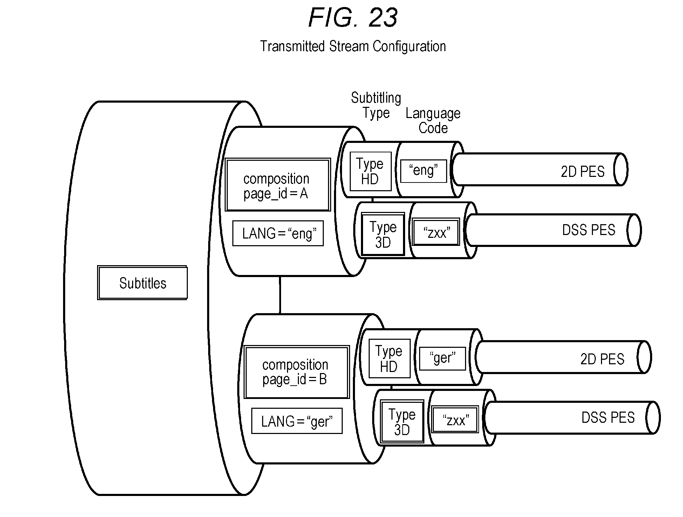

Fig. 23 illustrates an example of a stream configuration of subtitle data streams (2D stream and 3D extension stream). This example is an example of service of two languages that are English "eng" and German "ger". The 3D extension stream is included as "composition_page_id" in the respective language services, and is designated as "subtitling_type=3D", "ISO_639_language_code=zxx".

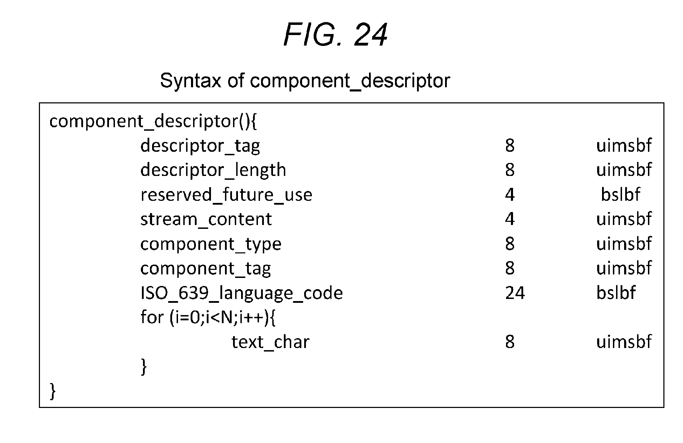

Fig. 24 illustrates an example of a syntax of the component descriptor (Component descriptor). An 8-bit field of "descriptor_tag" indicates that the descriptor is a component descriptor. An 8-bit field of "descriptor_length" represents the entire byte size following the field.

A 4-bit field of "stream_content" represents the stream type of a main stream such as a video, an audio, and a subtitle. A 4-bit field of "component_type" represents the component type of a main stream such as a video, an audio, and a subtitle.

In the case where the main stream is the 2D stream, that is, in the component descriptor corresponding to the 2D stream, the "stream_content" is a subtitle "subtitle", and the "component_type" is a two-dimensional "2D". Also, in the case where the main stream is the 3D extension stream, that is, in the component descriptor corresponding to the 3D extension stream, the "stream_content" is a subtitle "subtitle", and the "component_type" is a three-dimensional "3D".

An 8-bit field of the "component_tag" has the same value as the "component_tag" in the stream identifier descriptor (stream_identifier descriptor) corresponding to the main stream. Accordingly, the stream identifier descriptor and the component descriptor are associated with the "component_tag". A 24-bit field of "ISO_639_language_code" represents an ISO language code.

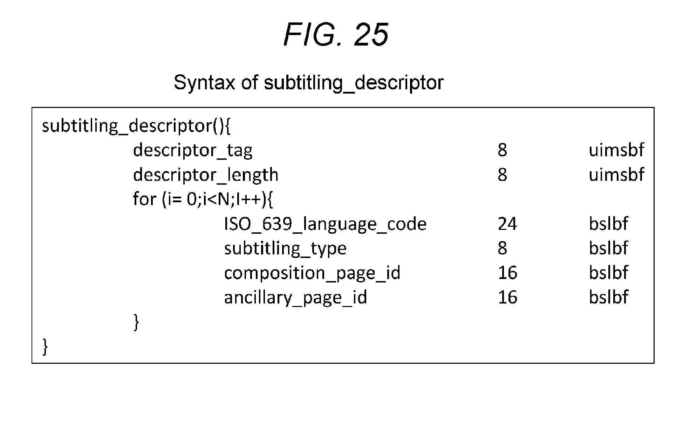

Fig. 25 illustrates an example of a syntax of the subtitle descriptor (Subtitling_descriptor). An 8-bit field of "descriptor_tag" indicates that the descriptor is a subtitle descriptor. An 8-bit field of "descriptor_length" represents the entire byte size following the field.

A 24-bit field of "ISO_639_language_code" represents an ISO language code. An 8-bit field of "subtitling_type" represents subtitle type information. In the case where the main stream is the 2D stream, that is, in the subtitle descriptor corresponding to the 2D stream, the "subtitling_type" is "2D". On the other hand, in the case where the main stream is the 3D extension stream, that is, in the subtitle descriptor corresponding to the 3D extension stream, the "subtitling_type" is "3D". A 16-bit field of "composition_page_id" represents a composition page ID, and has the same value as a page ID (page_id) of a segment included in the main stream.

[Update of Disparity Information]

As described above, the disparity information is transmitted by the 3D extension stream. The update of the disparity information will be described.

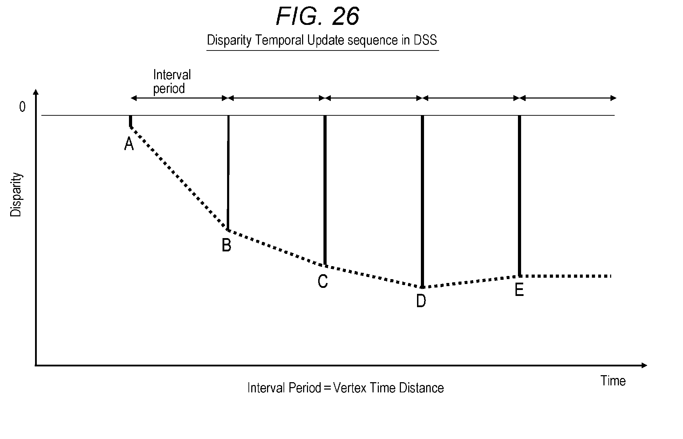

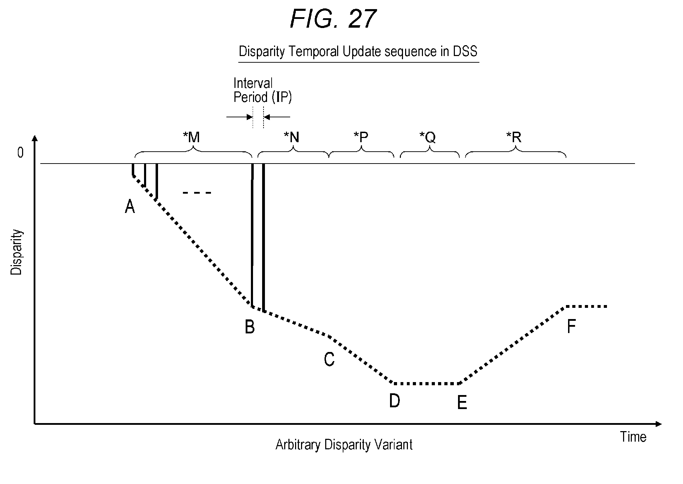

Figs. 26 and 27 illustrate examples of the disparity information update using an interval period. Fig. 26 illustrates the case where an interval period is fixed and is equal to an update period. That is, each of the update periods of A-B, B-C, C-D, ... includes one interval period.

Fig. 27 corresponds to a general case, and illustrates an example of the disparity information update in the case where an interval period is set to be a short period (may be, for example, a frame period). In this case, the numbers of interval periods in the respective update periods are M, N, P, Q, and R. Also, in Figs. 26 and 27, "A" represents a starting frame (starting point) of a caption display period, and "B" to "F" represent subsequent update frames (update points).

When the disparity information sequentially updated in the caption display period is transmitted to the receiving side (set-top box 200 or the like), the receiving side can generate and use disparity information of an arbitrary frame interval, for example, a 1-frame interval, by performing interpolation processing on the disparity information for each update period.

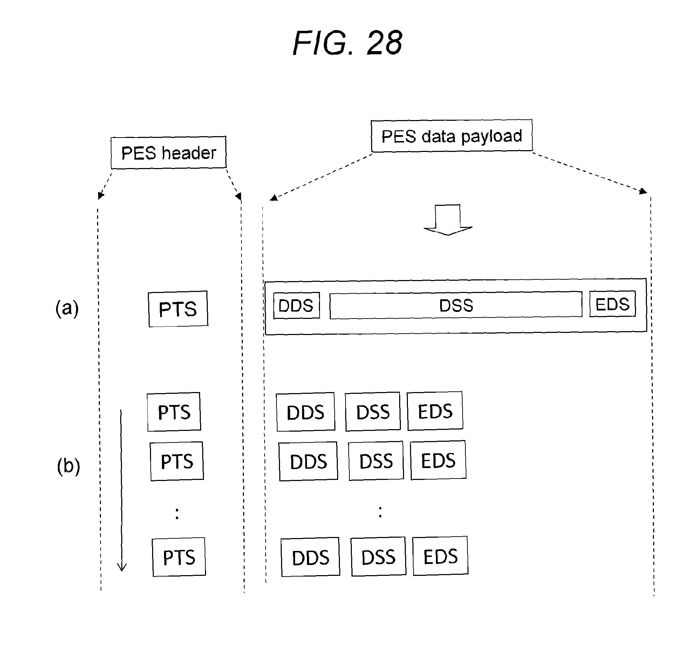

Fig. 28 illustrates an example of a configuration of the 3D extension stream. Also, in this configuration example, although the case where the respective segments of DDS, DSS, and EDS are included in a PES data payload (PES data Payload) are illustrated, the same applies to the case where the respective segments of DDS, PCS, DSS, and EDS are included in the PES data payload.

Fig. 28(a) illustrates an example in which only one DSS segment is inserted. A PES header includes time information (PTS). Also, the respective segments of DDS, DSS, and EDS are included as PES payload data. These are transmitted together before the start of a subtitle display period. The DSS segment may include a plurality of pieces of disparity information sequentially updated in the caption display period.

Also, the DSS segment may not include a plurality of pieces of disparity information sequentially updated in the caption display period, and the plurality of pieces of disparity information may be transmitted to the receiving side (set-top box 200 or the like). In this case, a DSS segment is inserted into the 3D extension stream at each update timing. Fig. 28(b) illustrates an example of the configuration of the 3D extension stream in this case.

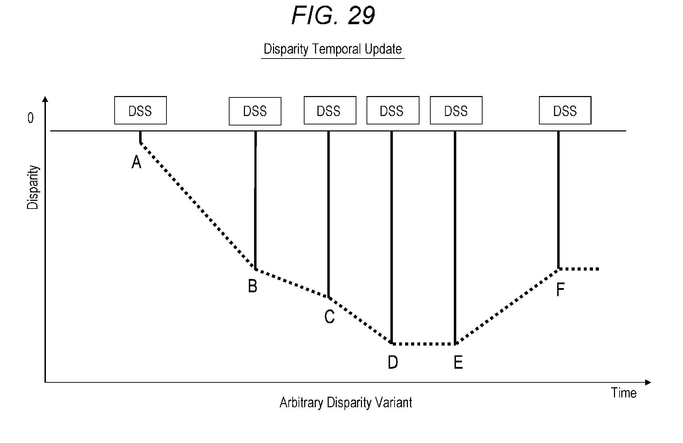

Fig. 29 illustrates an example of the disparity information update in the case where the DSS segments are sequentially transmitted as illustrated in Fig. 28(b) described above. Also, in Fig. 29, "A" represents a starting frame (starting point) of a caption display period, and "B" to "F" represent subsequent update frames (update points).

Also in the case where the disparity information sequentially updated in the caption display period is transmitted to the receiving side (set-top box 200 or the like) by sequentially transmitting the DSS segments, the receiving side can also perform the above-described processing. That is, also in this case, the receiving side can generate and use disparity information of an arbitrary frame interval, for example, a 1-frame interval, by performing interpolation processing on the disparity information for each update period.

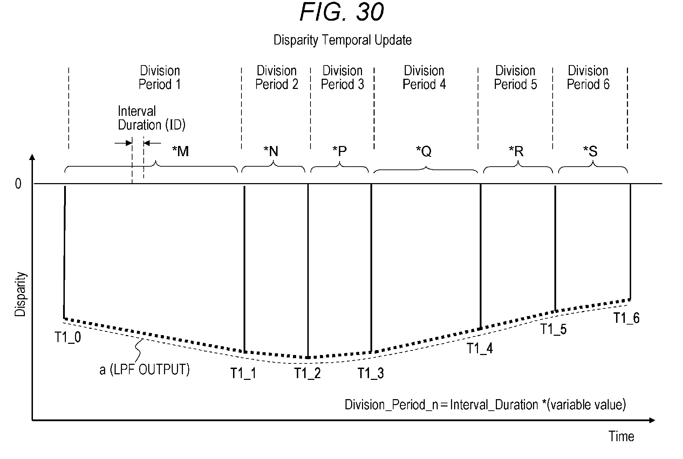

Fig. 30 illustrates an example of the disparity information update as illustrated in Fig. 27 described above. An update frame interval is expressed in a multiple of an interval duration (ID) as a unit period. For example, an update frame interval Division Period 1 is expressed as "ID*M", an update frame interval Division Period 2 is expressed as "ID*N", and the subsequent update frame intervals are expressed likewise. In the example of the disparity information update illustrated in Fig. 30, the update frame interval is not fixed, and the update frame interval is set according to a disparity information curve.

Also, in the example of the disparity information update, in the receiving side, a starting frame (starting time) T1_0 0 of the caption display period is provided as a PTS (Presentation Time Stamp) that is inserted into the header of a PES stream including the disparity information. In the receiving side, each update time of the disparity information is obtained based on information about an interval duration (information about a unit period), which is information about each update frame interval, and information about the number of interval durations.

In this case, from the starting frame (starting time) T1_0 0 of the caption display period, the respective update times are sequentially obtained based on the following equation (1). In Equation (1), "interval_count" denotes the number of interval periods, and are values corresponding to M, N, P, Q, R, and S in Fig. 30. Also, in Equation (1), "interval_time" is a value corresponding to the interval duration ID in Fig. 30.

$$Tm\_n = Tm\_(n - 1) + (interval\_time*interval\_count)$$

...(1)

For example, in the update example illustrated in Fig. 30, each update time is obtained based on Equation (1) in the following manner. That is, the update time T1_1 is obtained as T1_1 = T1_0 + (ID*M) by using the starting time T1_0, the interval duration ID, and the number M. Also, the update time T1_2 is obtained as T1_2 = T1_1 + (ID*N) by using the update time T1_1, the interval duration ID, and the number N. Each of the subsequent update times is obtained in the same manner.

In the update example illustrated in Fig. 30, in the receiving side, interpolation processing is performed on the disparity information sequentially updated in the caption display period, and the disparity information of an arbitrary frame interval in the caption display period, for example, a 1-frame interval is generated and used. For example, as the above interpolation processing, by performing not linear interpolation processing but interpolation processing accompanied with low-pass filter (LPF) processing in the time direction (frame direction), a change in the disparity information of a predetermined frame interval in the time direction (frame direction) after the interpolation processing becomes smooth. A broken line a of Fig. 30 represents an example of an LPF output.

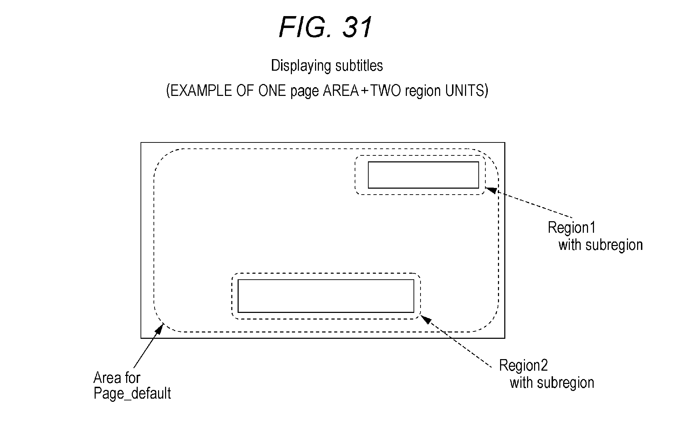

Fig. 31 illustrates an example of the display of a subtitle as a caption. In the display example, a page region (Area for Page_default) includes two regions (Region1 and Region2) as a caption display region. The region includes one or more subregions. Herein, it is assumed that the region includes one subregion, and the region and the subregion are the same.

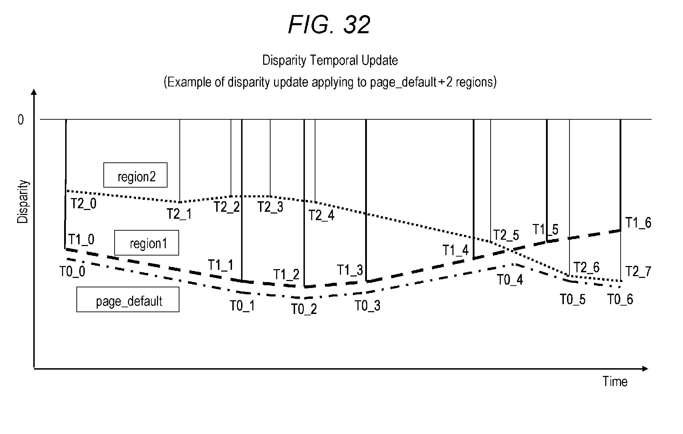

Fig. 32 illustrates an example of the disparity information curve of each region and page in the case where disparity information in units of a region and disparity information in units of a page are included in a DSS segment, as disparity information that is sequentially updated in the caption display period. Herein, the disparity information curve of the page takes the minimum value of the disparity information curve of two regions.

About the Region1, there are seven pieces of disparity information that are a starting time T1_0 0 and subsequent update times T1_1, T1_2, T1_3, ..., T1_6. Also, about the Region2, there are eight pieces of disparity information that are a starting time T2_0 and subsequent update times T2_1, T2_2, T2_3, ..., T2_7. In addition, about the page (Page_default), there are seven pieces of disparity information that are a starting time T0_0 0 and subsequent update times T0_1, T0_2, T0_3, ..., T0_6.

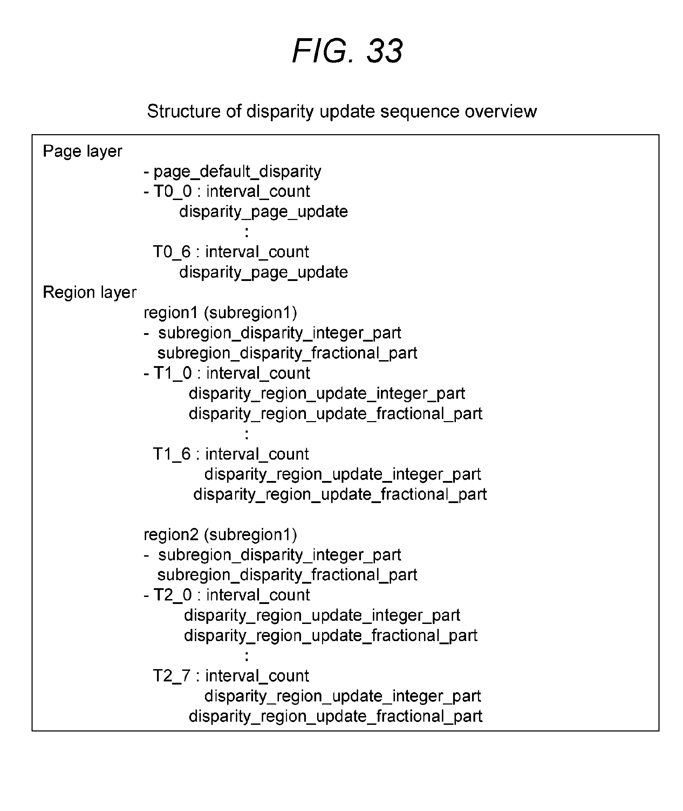

Fig. 33 illustrates a transmission structure of the disparity information of each page and region illustrated in Fig. 32. First, a page layer will be described. A fixed value "page_default_disparity" of the disparity information is disposed in the page layer. As for the disparity information sequentially updated in the caption display period, "interval_count" representing the number of interval periods corresponding to a starting time and subsequent update times, and "disparity_page_updete" representing the disparity information are sequentially disposed. Also, the "interval_count" at the starting time is set to "0".

Next, a region layer will be described. As for the Region1 (Subregion1), "subregion_disparity_integer_part" and "subregion_disparity_fractional_part" being the fixed values of the disparity information are disposed. Herein, "subregion_disparity_integer_part" represents an integer part of the disparity information, and "subregion_disparity_fractional_part" represents a fractional part of the disparity information.

As for the disparity information sequentially updated in the caption display period, "interval_count" representing the number of interval periods corresponding to a starting time and subsequent update times, and "disparity_region_updete_integer_part" and "disparity_region_updete_fractional_part" representing the disparity information are sequentially disposed. Herein, "disparity_region_updete_integer_part" represents an integer part of the disparity information, and "disparity_region_updete_fractional_part" represents a fractional part of the disparity information. Also, the "interval_count" at the starting time is set to "0".

Like the above-described Region1, as for the Region2 (Subregion2), "subregion_disparity_integer_part" and "subregion_disparity_fractional_part" being the fixed values of the disparity information are disposed. As for the disparity information sequentially updated in the caption display period, "interval count" representing the number of interval periods corresponding to a starting time and subsequent update times, and "disparity_region_updete_integer_part" and "disparity_region_updete_fractional_part" representing the disparity information are sequentially disposed.

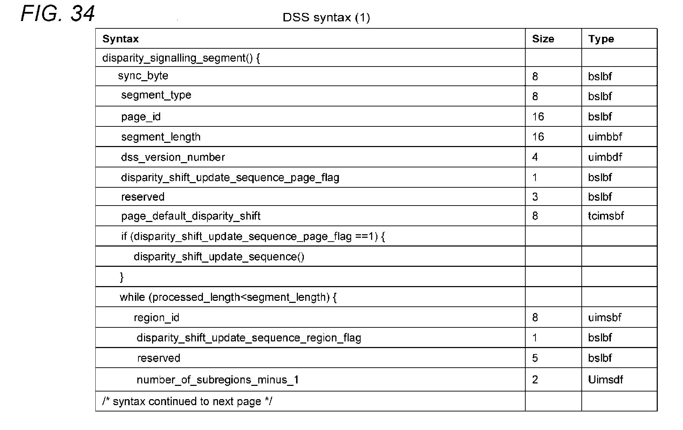

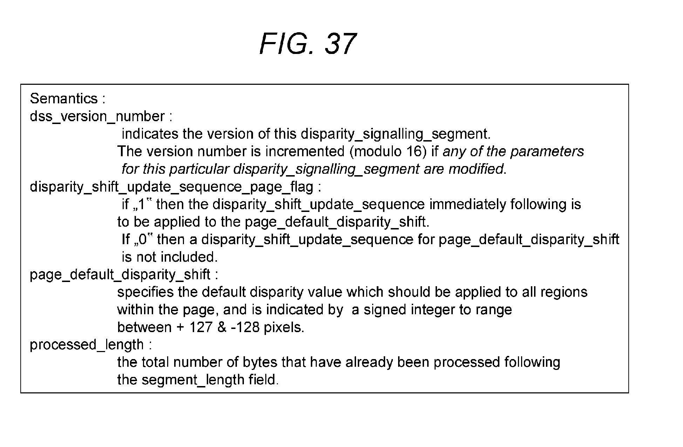

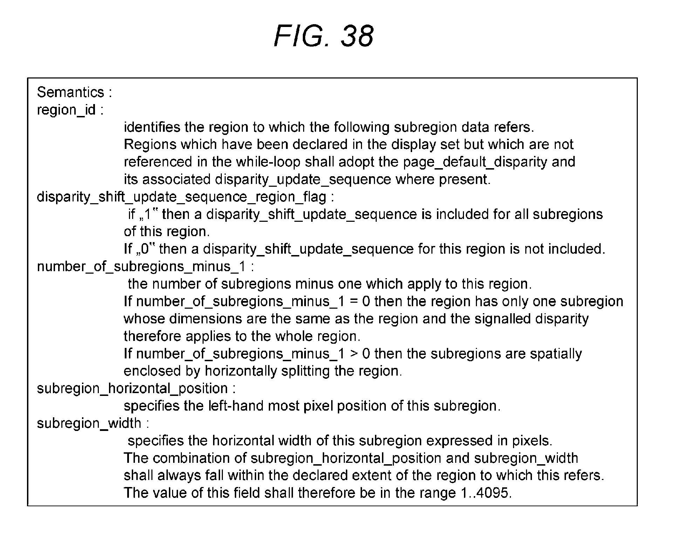

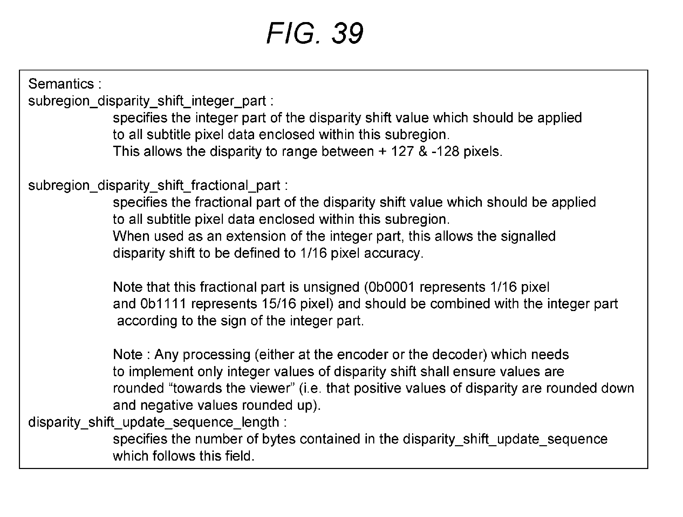

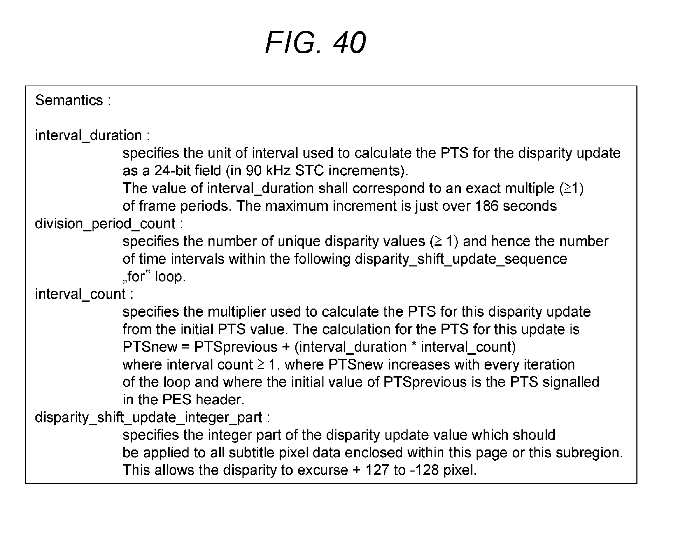

Figs. 34 to 36 illustrate examples of the syntax of a DSS (Disparity_Signaling_Segment). Figs. 37 to 40 illustrate the main data definition contents (semantics) of a DSS. This syntax includes respective pieces of information of "sync_byte", "segment_type", "page_id", "segment_length", and "dss version number". The "segment_type" is 8-bit data representing a segment type, and herein is a value representing the DSS. The "segment_length" is 8-bit data representing the number of subsequent bytes.

A 1-bit flag of "disparity_shift_update_sequence_page_flag" indicates whether disparity information sequentially updated in the caption display period is present as disparity information in units of a page. "1" represents presence, and "0" represents absence. An 8-bit field of "page_default_disparity_shift" represents fixed disparity information in units of a page, that is, disparity information that is commonly used in the caption display period. When the flag of "disparity_page_update_sequence_flag" described above is "1", the reading of "disparity_shift_update_sequence()" is performed.

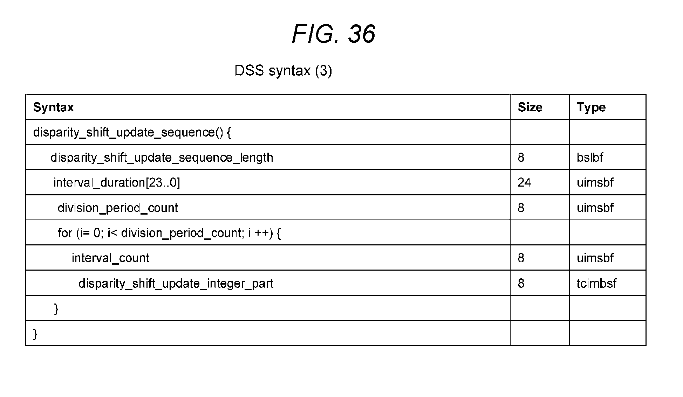

Fig. 36 illustrates an example of the syntax of "disparity_shift_update_sequence()". The "disparity_page_update_sequence_length" is 8-bit data representing the number of subsequent bytes. A 24-bit field of "interval_duration [23..0]" specifies an interval duration (see Fig. 30) as a unit period in units of 90 KHz. That is, the "interval_ duration[23..0]" represents a 24-bit value of the interval duration measured with a 90 KHz clock.

The reason for being the 24-bit length with respect to the 33-bit length of the PTS inserted into a header portion of the PES is as follows. That is, a time exceeding 24 hours can be represented by the 33-bit length, but it is an unnecessary length as the interval duration in the caption display period. Also, by the 24-bit representation, the data size can be reduced and compact transmission can be performed. Also, 24 bits is 8x3 bits, and byte alignment is facilitated.

An 8-bit field of "division_period_count" represents the number of division periods that are influenced by the disparity information. For example, in the case of the update example illustrated in Fig. 30, the number of division periods is "7" corresponding to the starting time T1_0 and the subsequent update times T1_1 to T1_6. A "for" loop below is repeated the number of times represented by the 8-bit field of "division_period_count".

An 8-bit field of "interval count" represents the number of interval periods. For example, in the case of the update example illustrated in Fig. 30, it correspond to M, N, P, Q, R, and S. An 8-bit field of "disparity_shift_update_integer_part" represents the disparity information. The "interval count" is "0" corresponding to the disparity information at the starting time (the initial value of the disparity information). That is, when the "interval_count" is "0", the "disparity_page_update" represents the disparity information at the starting time (the initial value of the disparity information).

A "while" loop of Fig. 34 is repeated when the data length processed up to that time (processed_length) does not reach the segment data length (segment_length). In the "while" loop, the disparity information in units of a region or a subregion in the region is disposed. Herein, the region includes one or more subregions, and the region and the subregion may be the same.

Information of "region_id" is included in the "while" loop. A 1-bit flag of "disparity_shift_update_sequence_region_flag" is flag information indicating whether there is "disparity_shift_update_sequence()" for all the subregions in the region. A 2-bit field of "number_of_subregions_minus_1" represents the value equal to the number of subregions in the region minus 1. When number_of_subregions_minus_1 = 0, the region includes one subregion that has the same dimension as the region.

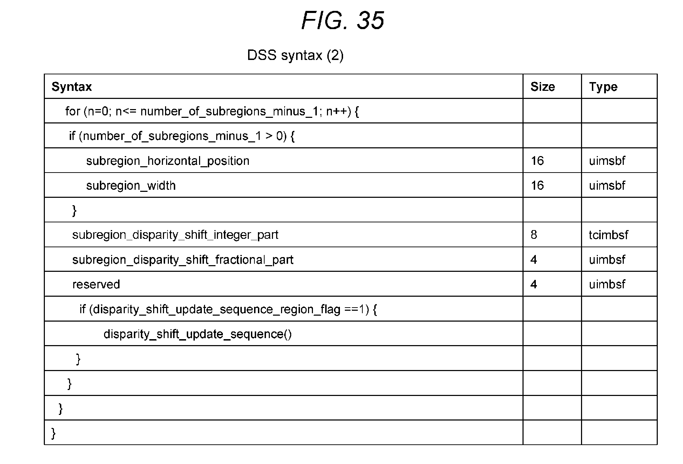

When number_of_subregions_minus_1 > 0, the region includes a plurality of subregions divided in the horizontal direction. In the "for" loop of Fig. 35, information of "subregion_horizontal_position" and "subregion_width" corresponding to the number of subregions is included. A 16-bit field of "subregion_horizontal_position" represents the pixel position of the left of the subregion. The "subregion_width" represents the horizontal width of the subregion with the number of pixels.

An 8-bit field of "subregion_disparity_shift_integer_part" represents fixed disparity information in units of a region (in units of a subregion), that is, an integer part of the disparity information that is commonly used in the caption display period. A 4-bit field of "subregion_disparity_shift_fractional_part" represents fixed disparity information in units of a region (in units of a subregion), that is, a fractional part of the disparity information that is commonly used in the caption display period. When the flag of "disparity_shift_update_sequence_region_flag" described above is "1", the reading of "disparity_shift_update_sequence()" (see Fig. 36) is performed.

[Concept of Broadcast Reception]

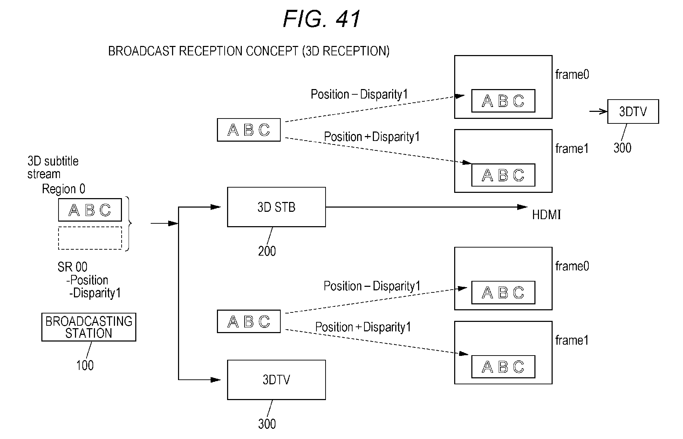

Fig. 41 illustrates the concept of broadcast reception in the case where a set-top box 200 and a television receiver 300 are 3D-compatible devices. In this case, in the broadcasting station 100, a subregion SR 00 is defined in a region Region 0, and the disparity information Disparity 1 is set. Herein, it is assumed that the region Region 0 and the subregion SR 00 are the same region. Together with the stereoscopic image data, the subtitle data and the display control information (disparity information Disparity 1 and region information Position of the subregion) are transmitted from the broadcasting station 100.

First, a description will be given of the case of reception by the set-top box 200 that is a 3D-compatible device. In this case, the set-top box 200 reads the respective segment data constituting the subtitle data from the 2D stream, reads the DSS segment data including the display control information such as the disparity information from the 3D extension stream, and uses the read data. In this case, the set-top box 200 extracts a 2D stream and a 3D extension stream of a language selected by a user from the transport stream TS based on the subtitle type information and the language information, and decodes the 2D stream and the 3D extension stream extracted.

As described above, in the transport stream TS, the subtitle descriptors are inserted in association with the 2D stream and the 3D extension stream (see Fig. 15). The subtitle type information "subtitling_type" of the subtitle descriptor corresponding to the 2D stream is set to "2D". Also, the subtitle type information "subtitling_type" of the subtitle descriptor corresponding to the 3D stream is set to "3D".

Also, as described above, in the transport stream TS, the component descriptor and the subtitle descriptor are respectively inserted in association with the 2D stream and the 3D extension stream (see Fig. 15). The language information (ISO language code) of the descriptor corresponding to the 2D stream is set to represent a language, and the language information (ISO language code) of the descriptor corresponding to the 3D extension stream is set to represent a non-language.

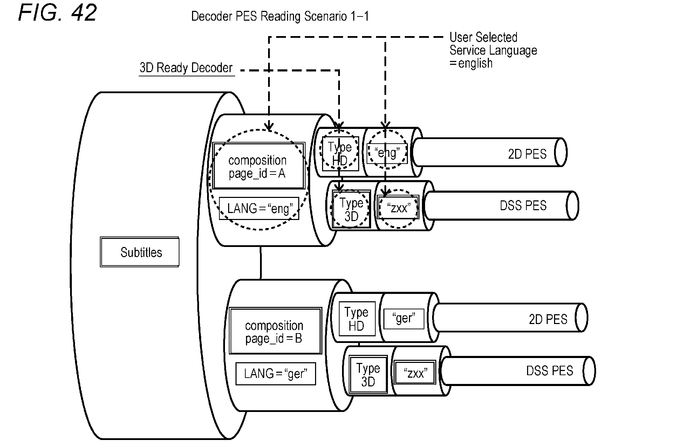

The set-top box 200 is a 3D-compatible device. Therefore, based on the subtitle type information, the set-top box 200 determines the 2D stream corresponding to a subtitle type "2D(HD,SD)" and the 3D extension stream corresponding to a subtitle type "3D" as a stream to be extracted (see a "○" mark of Fig. 42 that will be described below). Also, the set-top box 200 determines the 2D stream of the language selected by the user and the 3D extension stream with the language information (ISO language code) representing a non-language as a stream to be extracted (see a "○" mark of Fig. 42 that will be described below).

Fig. 42 schematically illustrates the above-described 2D stream and 3D extension stream extraction processing of the set-top box 200, for example, in the case where the language service selected by the user is English "eng" in the stream configuration example illustrated in Fig. 23 described above. In this case, as a result, based on the subtitle type information and the language information, the 2D stream corresponding to English "eng" and the 3D extension stream included in "composition_page_id=A" among the language services are determined as a stream to be extracted.

The set-top box 200 generates region display data for displaying a subtitle, based on the subtitle data. The set-top box 200 obtains output stereoscopic image data by superimposing the region display data on a left-eye image frame (frame0) portion and a right-eye image frame (frame1) portion constituting the stereoscopic image data.

Herein, the set-top box 200 shifts the positions of the respective superimposed display data based on the disparity information. Also, the set-top box 200 changes the superimposition position, the size, and the like appropriately according to a transmission format of the stereoscopic image data (Side By Side scheme, Top & Bottom scheme, Frame Sequential scheme, or a format scheme in which each view has a full-screen size).

The set-top box 200 transmits the output stereoscopic image data obtained as described above, to the 3D-compatible television receiver 300 through, for example, an HDMI digital interface. The television receiver 300 performs 3D signal processing on the stereoscopic image data received from the set-top box 200, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

Next, a description will be given of the case of reception by the television receiver 300 that is a 3D-compatible device. In this case, the television receiver 300 reads the respective segment data constituting the subtitle data from the 2D stream, reads the DSS segment data including the display control information such as the disparity information from the 3D extension stream, and uses the read data. In this case, like the above-described set-top box 200, based on the subtitle type information, the language information, or the like, the television receiver 300 extracts the 2D stream and the 3D extension stream of the language selected by the user from the transport stream TS, and decodes the 2D stream and the 3D extension stream extracted.

The television receiver 300 generates region display data for displaying a subtitle, based on the subtitle data. The television receiver 300 superimposes the region display data on the left-eye image data and the right-eye image data obtained by performing processing according to a transmission format on the stereoscopic image data, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

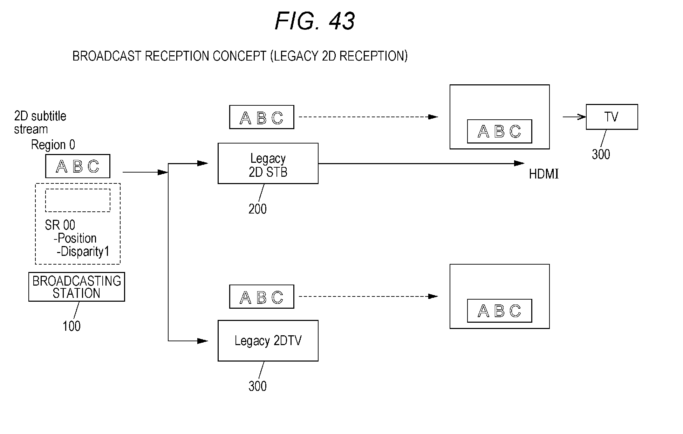

Fig. 43 illustrates the concept of broadcast reception in the case where the set-top box 200 and the television receiver 300 are legacy 2D-compatible devices. In this case, as in the case of Fig. 41, together with the stereoscopic image data, the subtitle data and the display control information (disparity information "Disparity 1" and region information "Position" of the subregion) are transmitted from the broadcasting station 100.

First, a description will be given of the case of reception by the set-top box 200 that is a legacy 2D-compatible device. In this case, the set-top box 200 reads the respective segment data constituting the subtitle data from the 2D stream, and uses the read data. In this case, the set-top box 200 extracts only the 2D stream of the language selected by the user from the transport stream TS based on the subtitle type information, the language information, or the like, and decodes the 2D stream extracted. That is, since the set-top box 200 does not read the DSS segment including the display control information such as the disparity information, the reception processing can be prevented from being interrupted by the reading.

As described above, in the transport stream TS, the subtitle descriptors are inserted in association with the 2D stream and the 3D extension stream (see Fig. 15). The subtitle type information "subtitling_type" of the subtitle descriptor corresponding to the 2D stream is set to "2D". Also, the subtitle type information "subtitling_type" of the subtitle descriptor corresponding to the 3D stream is set to "3D".

Also, as described above, in the transport stream TS, the component descriptor and the subtitle descriptor are respectively inserted in association with the 2D stream and the 3D extension stream (see Fig. 15). The language information (ISO language code) of the descriptor corresponding to the 2D stream is set to represent a language, and the language information (ISO language code) of the descriptor corresponding to the 3D extension stream is set to represent a non-language.

The set-top box 200 is a 2D-compatible device. Therefore, based on the subtitle type information, the set-top box 200 determines the 2D stream corresponding to a subtitle type "2D(HD,SD)" as a stream to be extracted. Also, the set-top box 200 determines the 2D stream of the language selected by the user as a stream to be extracted.

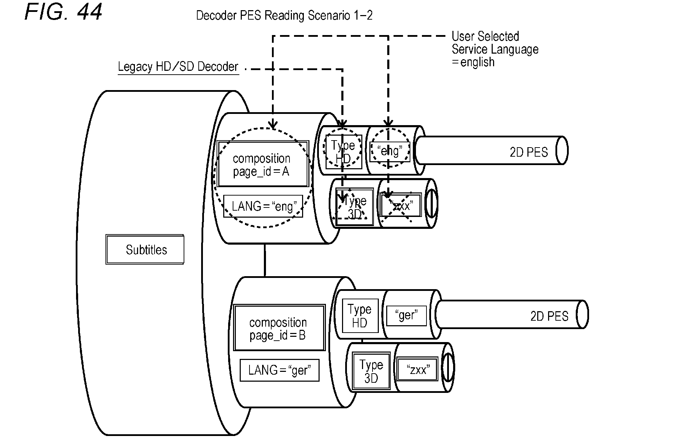

Fig. 44 schematically illustrates the 2D stream extraction processing of the set-top box 200, for example, in the case where the language service selected by the user is English "eng" in the stream configuration example illustrated in Fig. 23 described above. In this case, based on the subtitle type information, the set-top box 200 can determine the 2D stream corresponding to a subtitle type "2D(HD,SD)" as a stream to be extracted. Herein, since the set-top box 200 is a legacy 2D-compatible device and cannot interpret the subtitle type "3D", the set-top box 200 may also determine the 3D extension stream as a stream to be extracted (illustrated as a mark "Δ").

However, in this case, based on the language information, the set-top box 200 determines the 2D stream corresponding to English "eng" as a stream to be extracted, and does not determine the 3D extension stream with the language information representing a non-language as a stream to be extracted (illustrated as a mark "x"). As a result, the set-top box 200 determines only the 2D stream corresponding to English "eng" as a stream to be extracted. Accordingly, since the set-top box 200 can more securely prevent decoding processing from being performed on the 3D extension stream including the DSS segment having the disparity information, the reception processing thereof can be prevented from being interrupted by the decoding processing.

The set-top box 200 generates region display data for displaying a subtitle, based on the subtitle data. The set-top box 200 obtains output 2D image data by superimposing the region display data on the 2D image data that has been obtained by performing the processing according to the transmission format on the stereoscopic image data.

The set-top box 200 transmits the output 2D image data obtained as described above, to the television receiver 300 through, for example, an HDMI digital interface. The television receiver 300 displays a 2D image according to the 2D image data received from the set-top box 200.

Next, a description will be given of the case of reception by the television receiver 300 that is a 2D-compatible device. In this case, the television receiver 300 reads the respective segment data constituting the subtitle data from the 2D stream, and uses the read data. In this case, like the set-top box 200 described above, the television receiver 300 extracts only the 2D stream of the language selected by the user from the transport stream TS based on the subtitle type information and the language information, and decodes the 2D stream extracted. That is, since the television receiver 300 does not read the DSS segment including the display control information such as the disparity information, the reception processing can be prevented from being interrupted by the reading.

The television receiver 300 generates region display data for displaying a subtitle, based on the subtitle data. The television receiver 300 obtains 2D image data by superimposing the region display data on the 2D image data that has been obtained by performing the processing according to the transmission format on the stereoscopic image data. The television receiver 300 displays a 2D image according to the 2D image data.

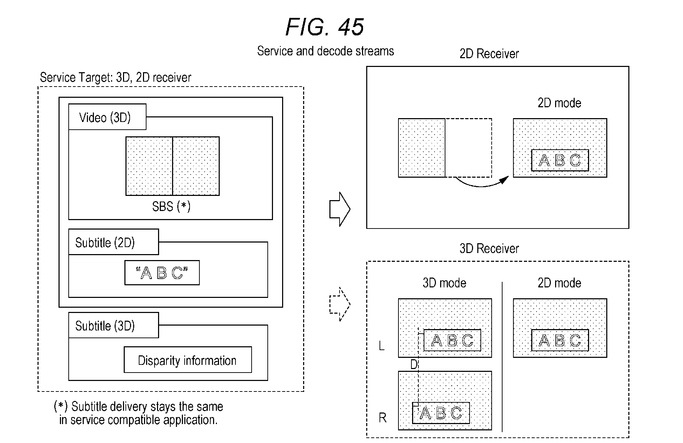

Fig. 45 illustrates the summarization of the concept of broadcast reception in the case where the above-described receiver (set-top box 200, television receiver 300) is a legacy 2D-compatible device (2D receiver) and in the case where the receiver is a 3D-compatible device (3D receiver). Also, in Fig. 45, a stereoscopic image data (3D image data) transmission scheme is a Side By Side scheme.

Also, in the case of the 3D-compatible device (3D receiver), a 3D mode or a 2D mode can be selected. When the 3D mode is selected by the user, the case is the same as described with reference to Fig. 41. When the 2D mode is selected by the user, the case is the same as the case of the 2D-compatible device (2D receiver) described with reference to Fig. 43.

In the transmission data generating unit 110 illustrated in Fig. 2, the transport stream TS output as a multiplexed data stream from the multiplexer 119 includes two private data streams (subtitle data streams). That is, a 2D stream and a 3D extension stream are included in the transport stream TS (see Fig. 11).

Therefore, in an legacy 2D-compatible receiving apparatus of the receiving side, the reception processing can be performed by reading only the respective segments constituting the subtitle data from the 2D stream. That is, in the 2D-compatible receiving apparatus, since the DSS segment need not be read from the 3D extension stream, the reception processing can be prevented from being interrupted by the reading.

Also, in the transmission data generating unit 110 illustrated in Fig. 2, in the component descriptor and the subtitle descriptor inserted into the transport stream TS in association with the 2D stream and the 3D extension stream, the subtitle type information and the language information are set to identify the respective streams. Therefore, based on the corresponding subtitle type information and the language information, the 2D-compatible receiving apparatus can extract only the 2D stream of the language selected by the user from the transport stream TS and decode the 2D stream easily with a high accuracy. Accordingly, since the 2D-compatible receiving apparatus can more securely prevent decoding processing from being performed on the 3D extension stream including the DSS segment having the disparity information, the reception processing thereof can be prevented from being interrupted by the decoding processing.

Also, in the transmission data generating unit 110 illustrated in Fig. 2, page IDs (page_id) of the respective segments included in the 2D stream and the 3D extension stream inserted into the transport stream TS are equal. Therefore, based on the page ID, a 3D-compatible receiving apparatus of the receiving side can easily combine the segment of the 2D stream and the segment of the 3D extension stream.

Also, in the transmission data generating unit 110 illustrated in Fig. 2, since the DSS segment including the disparity information sequentially updated in the subtitle display period can be transmitted, the display positions of the left-eye subtitle and the right-eye subtitle can be dynamically controlled. Accordingly, in the receiving side, the disparity provided between the left-eye subtitle and the right-eye subtitle can be dynamically changed in conjunction with a change in the image content.

Also, in the transmission data generating unit 110 illustrated in Fig. 2, the disparity information of the frame for each update frame interval included in the DSS segment obtained by the subtitle encoder 118 is not an offset value from the previous disparity information, but is the disparity information itself. Therefore, in the receiving side, even when an error occurs in the interpolation process, the recovery from the error can be performed within a predetermined delay time.

[Description of Set-top Box]

Returning to Fig. 1, the set-top box 200 receives a transport stream TS that is transmitted on a broadcast wave from the broadcasting station 100. The transport stream TS includes audio data and stereoscopic image data including left-eye image data and right-eye image data. Also, the transport stream TS further includes subtitle data (including display control information) for a stereoscopic image for displaying a subtitle (caption).

That is, the transport stream TS includes a video data stream, an audio data stream, and first and second private data streams (subtitle data streams) as PES streams. As described above, the first and second private data streams are respectively a 2D stream and a 3D extension stream (see Fig. 11).

The set-top box 200 includes a bit stream processing unit 201. When the set-top box 200 is a 3D-compatible device (3D STB), the bit stream processing unit 201 acquires stereoscopic image data, audio data, and subtitle data (including display control information) from the transport stream TS. In this case, the bit stream processing unit 201 acquires the respective segment data constituting the subtitle data from the 2D stream, and acquires the DSS segment data including the display control information such as the disparity information from the 3D extension stream.

The bit stream processing unit 201 uses the stereoscopic image data and the subtitle data (including the display control information) to generate output stereoscopic image data in which the subtitle is superimposed on a left-eye image frame (frame0) portion and a right-eye image frame (frame1) portion (see Fig. 41). In this case, a disparity can be provided between a subtitle superimposed on a left-eye image (a left-eye subtitle) and a subtitle superimposed on a right-eye image (a right-eye subtitle).

For example, as described above, the display control information added to the subtitle data for a stereoscopic image received from the broadcasting station 100 includes disparity information, and a disparity can be provided between a left-eye subtitle and a right-eye subtitle based on the disparity information. In this manner, since the disparity is provided between the left-eye subtitle and the right-eye subtitle, the user can recognize a subtitle (caption) in front of an image.

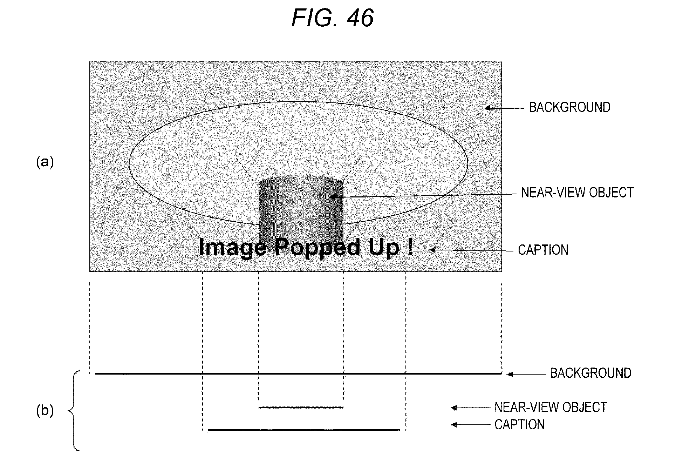

Fig. 46(a) illustrates an example of the display of a subtitle (caption) on an image. In the display example, a caption is superimposed on an image including a background and a near-view object. Fig. 46(b) illustrates that the perspective of a background, a near-view object and a caption is expressed and the caption is recognized at the frontmost position.

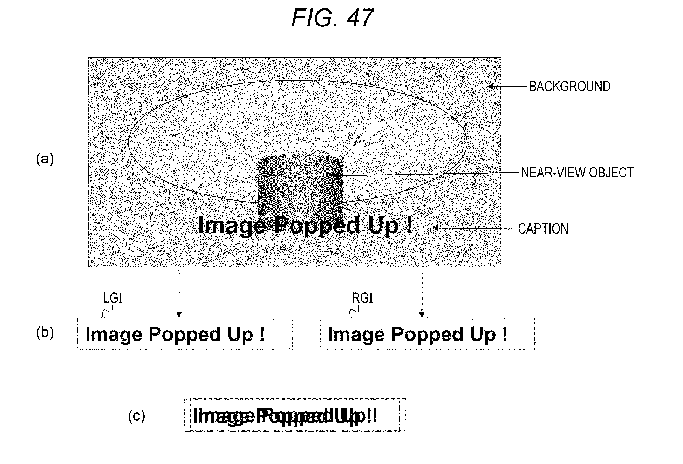

Fig. 47(a) illustrates an example of the display of a subtitle (caption) on an image as in Fig. 46(a). Fig. 47(b) illustrates a left-eye caption LGI superimposed on a left-eye image and a right-eye caption RGI superimposed on a right-eye image. Fig. 47(c) illustrates that a disparity is provided between the left-eye caption LGI and the right-eye caption RGI so that the caption is recognized at the frontmost position.

Also, when the set-top box 200 is a legacy 2D-compatible device (2D STB), the bit stream processing unit 201 acquires stereoscopic image data, audio data, and subtitle data (bit map pattern data that does not include display control information) from the transport stream TS. The bit stream processing unit 201 uses the stereoscopic image data and the subtitle data to generate 2D image data on which the subtitle is superimposed (see Fig. 43).

In this case, the bit stream processing unit 201 acquires the respective segment data constituting the subtitle data from the 2D stream. That is, in this case, since the DSS segment is not read from the 3D extension stream, the reception processing can be prevented from being interrupted by the reading. In this case, based on the subtitle type information and the language information, the bit stream processing unit 201 extracts only the 2D stream from the transport stream TS and decodes the extracted 2D stream easily with a high accuracy.

[Example of Configuration of Set-top Box]

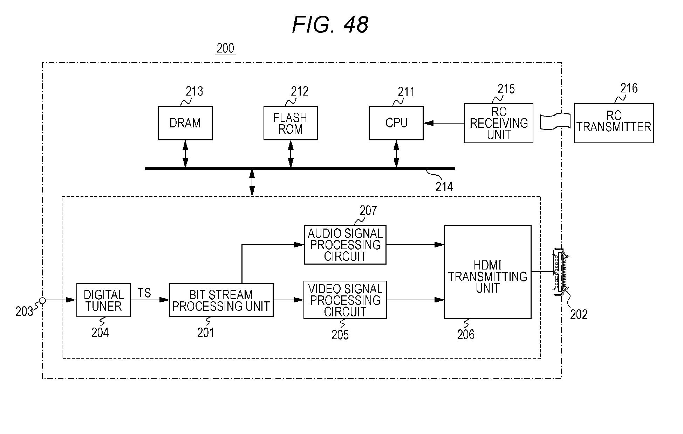

An example of the configuration of the set-top box 200 will be described. Fig. 48 illustrates an example of the configuration of the set-top box 200. The set-top box 200 includes a bit stream processing unit 201, an HDMI terminal 202, an antenna terminal 203, a digital tuner 204, a video signal processing circuit 205, an HDMI transmitting unit 206, and an audio signal processing circuit 207. Also, the set-top box 200 includes a CPU 211, a flash ROM 212, a DRAM 213, an internal bus 214, a remote control receiving unit (RC receiving unit) 215, and a remote control transmitter (RC transmitter) 216.

The antenna terminal 203 is a terminal that is configured to input a television broadcast signal received through a reception antenna (not illustrated). The digital tuner 204 processes the television broadcast signal input to the antenna terminal 203, and outputs a transport stream TS (bit stream data) corresponding to a channel selected by a user.

Based on the transport stream TS, the bit stream processing unit 201 outputs audio data and output stereoscopic image data on which a subtitle is superimposed. When the set-top box 200 is a 3D-compatible device (3D STB), the bit stream processing unit 201 acquires stereoscopic image data, audio data, and subtitle data (including display control information) from the transport stream TS.

The bit stream processing unit 201 generates output stereoscopic image data by superimposing the subtitle on a left-eye image frame (frame0) portion and a right-eye image frame (frame1) portion constituting the stereoscopic image data (see Fig. 41). Herein, based on the disparity information, a disparity is provided between a subtitle superimposed on the left-eye image (left-eye subtitle) and a subtitle superimposed on the right-eye image (right-eye subtitle).

That is, the bit stream processing unit 201 generates region display data for displaying a subtitle, based on the subtitle data. The bit stream processing unit 201 obtains output stereoscopic image data by superimposing the region display data on a left-eye image frame (frame0) portion and a right-eye image frame (frame1) portion constituting the stereoscopic image data. Herein, the bit stream processing unit 201 shifts the positions of the respective superimposed display data based on the disparity information.

Also, when the set-top box 200 is a 2D-compatible device (2D STB), the bit stream processing unit 201 acquires stereoscopic image data, audio data, and subtitle data (not including display control information). The bit stream processing unit 201 uses the stereoscopic image data and the subtitle data to generate 2D image data on which the subtitle is superimposed (see Fig. 43).

That is, the bit stream processing unit 201 generates region display data for displaying a subtitle, based on the subtitle data. The bit stream processing unit 201 obtains output 2D image data by superimposing the region display data on the 2D image data that has been obtained by performing the processing according to the transmission format on the stereoscopic image data.

The video signal processing circuit 205 performs image quality adjustment processing on the image data, which has been obtained by the bit stream processing unit 201, as necessary, and supplies the processed image data to the HDMI transmitting unit 206. The audio signal processing circuit 207 performs sound quality adjustment processing on the audio data, which has been output from the bit stream processing unit 201, as necessary, and supplies the processed audio data to the HDMI transmitting unit 206.

The HDMI transmitting unit 206 transmits, for example, uncompressed image data and audio data to the HDMI terminal 202 by HDMI-based communication. In this case, being transmitted on an HDMI TMDS channel, the image data and audio data are packed and output from the HDMI transmitting unit 206 to the HDMI terminal 202.

The CPU 211 controls an operation of each unit of the set-top box 200. The flash ROM 212 stores control software and data. The DRAM 213 constitutes a work area of the CPU 211. The CPU 211 deploys the software or data read from the flash ROM 212 on the DRAM 213 and activates the software to control each unit of the set-top box 200.

The RC receiving unit 215 receives a remote control signal (remote control code) transmitted from the RC transmitter 216, and supplies the received remote control signal to the CPU 211. The CPU 211 controls each unit of the set-top box 200 based on the remote control code. The CPU 211, the flash ROM 212, and the DRAM 213 are connected to the internal bus 214.

An operation of the set-top box 200 will be described briefly. The television broadcast signal input to the antenna terminal 203 is supplied to the digital tuner 204. The digital tuner 204 processes the television broadcast signal and outputs a transport stream TS (bit stream data) corresponding to a channel selected by the user.

The transport stream TS (bit stream data) output from the digital tuner 204 is supplied to the bit stream processing unit 201. The bit stream processing unit 201 generates output image data to be output to the television receiver 300 as follows.

When the set-top box 200 is a 3D-compatible device (3D STB), stereoscopic image data, audio data, and subtitle data (including display control information) are acquired from the transport stream TS. The bit stream processing unit 201 generates output stereoscopic image data by superimposing the subtitle on a left-eye image frame (frame0) portion and a right-eye image frame (frame1) portion constituting the stereoscopic image data. Herein, based on the disparity information, a disparity is provided between a left-eye subtitle superimposed on a left-eye image and a right-eye subtitle superimposed on a right-eye image.

Also, when the set-top box 200 is a 2D-compatible device (2D STB), stereoscopic image data, audio data, and subtitle data (not including display control information) are acquired. The bit stream processing unit 201 uses the stereoscopic image data and the subtitle data to generate 2D image data on which the subtitle is superimposed.

The output image data obtained by the bit stream processing unit 201 is supplied to the video signal processing circuit 205. The video signal processing circuit 205 performs image quality adjustment processing on the output image data as necessary. The processed image data output from the video signal processing circuit 205 is supplied to the HDMI transmitting unit 206.

Also, the audio data obtained by the bit stream processing unit 201 is supplied to the audio signal processing circuit 207. The audio signal processing circuit 207 performs sound quality adjustment processing on the audio data as necessary. The processed audio data output from the audio signal processing circuit 207 is supplied to the HDMI transmitting unit 206. The image data and the audio data supplied to the HDMI transmitting unit 206 are transmitted through an HDMI TMDS channel from the HDMI terminal 202 to the HDMI cable 400.

[Example of Configuration of Bit Stream Processing Unit]

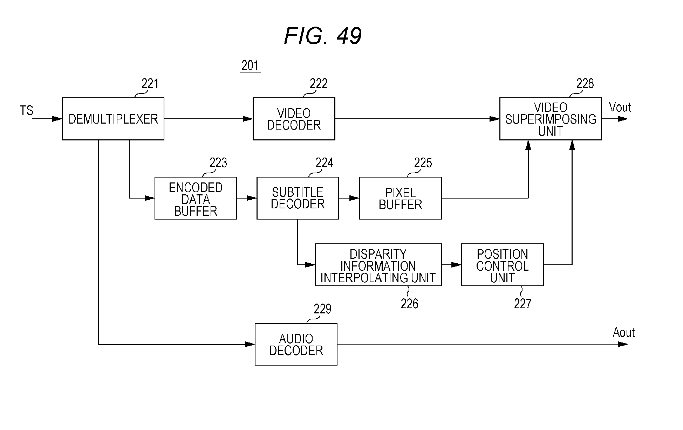

Fig. 49 illustrates an example of the configuration of the bit stream processing unit 201 in the case where the set-top box 200 is a 3D-compatible device (3D STB). The bit stream processing unit 201 has a configuration corresponding to the transmission data generating unit 110 illustrated in Fig. 2 described above. The bit stream processing unit 201 includes a demultiplexer 221, a video decoder 222, and an audio decoder 229.

Also, the bit stream processing unit 201 includes an encoded data buffer 223, a subtitle decoder 224, a pixel buffer 225, a disparity information interpolating unit 226, a position control unit 227, and a video superimposing unit 228. Herein, the encoded data buffer 223 constitutes a decoding buffer.

The demultiplexer 221 extracts a video data stream packet and an audio data stream packet from the transport stream TS, and provides the extracted packets to the respective decoders for decoding. In addition, the demultiplexer 221 extracts the following streams and temporarily stores the extracted streams in the encoded data buffer 223. In this case, as described with reference to Fig. 41 described above, the demultiplexer 221 extracts the 2D stream and the 3D extension stream of the language selected by the user based on the subtitle type information and the language information.

The CPU 211 recognizes the necessity to decode both of the PES streams based on the value of "composition_page_id" in the subtitle descriptor disposed in the ES loop inside the PMT in association with the 2D stream and the 3D extension stream. That is, when the value of "composition_page_id" is equal, it means that both PES streams are decoded. Alternatively, when the value of "composition_page_id" is equal and special value (predefined), it means that both PES streams are decoded.

Also, it can also be considered that a descriptor associating two streams, which indicates the necessity to decode both of the two PES streams (2D stream and 3D extension stream), is newly defined, and the descriptor is disposed at a predetermined position. By the descriptor, the CPU 211 recognizes the necessity to decode both of the PES streams, and controls the bit stream processing unit 201.

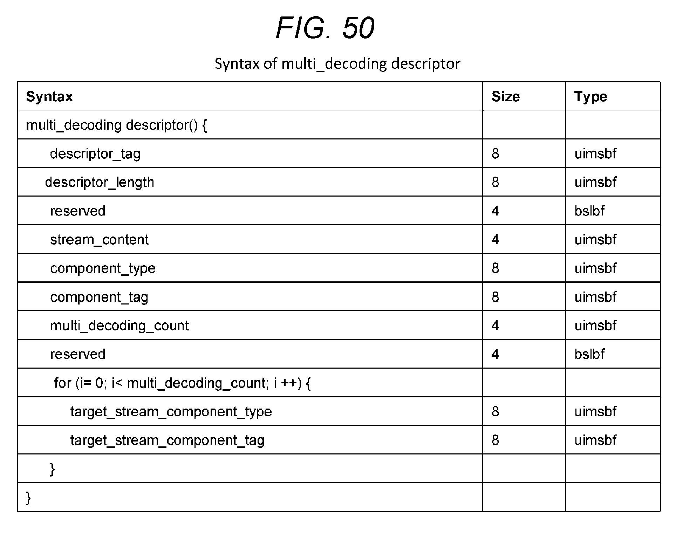

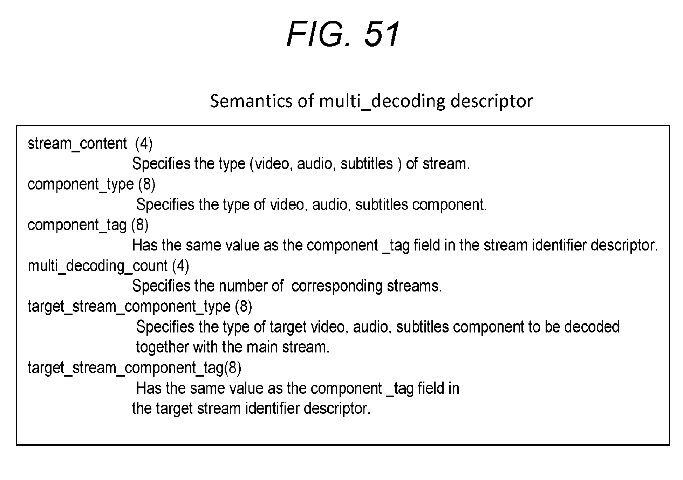

Fig. 50 illustrates an example of the syntax of a multi-decoding descriptor that can be used to associate the 2D stream with the 3D extension stream. Fig. 51 illustrates the main information contents (semantics) in the syntax example.

An 8-bit field of "descriptor_tag" indicates that the descriptor is a multi-decoding descriptor. An 8-bit field of "descriptor_length" represents the entire byte size following the field.

A 4-bit field of "stream_content" represents the stream type of a main stream such as a video, an audio, and a subtitle. A 4-bit field of "component_type" represents the component type of a main stream such as a video, an audio, and a subtitle. The "stream_content" and "component_type" are the same information as the "stream_content" and "component_type" in the component descriptor corresponding to the main stream.

In this embodiment, the main stream is a 2D stream, the "stream_content" is a subtitle "subtitle", and the "component_type" is a two-dimensional "2D".

The "component_tag" has the same value as the "component_tag" in the stream_identifier descriptor corresponding to the main stream. Accordingly, the stream_identifier descriptor and the multi-decoding descriptor are associated with the "component_tag".

A 4-bit field of "multi_decoding_count" represents the number of target streams associated with the main stream. In this embodiment, the target stream associated with the 2D stream being the main stream is the 3D extension stream, and "multi_decoding_count" is "1".

An 8-bit field of "target_stream_component_type" represents the stream type of a stream added to the main stream, such as a video, an audio, and a subtitle. A 4-bit field of "component_type" represents the component type of a target stream. Also, an 8-bit field of "target_stream_component_tag" has the same value as the "component_tag" in the stream_identifier descriptor corresponding to the target stream.

In this embodiment, the target stream is the 3D extension stream, the "target_stream_component_type" is a three-dimensional "3D", and the "target_stream_component_tag" has the same value as the "component_tag" of the 3D extension stream.

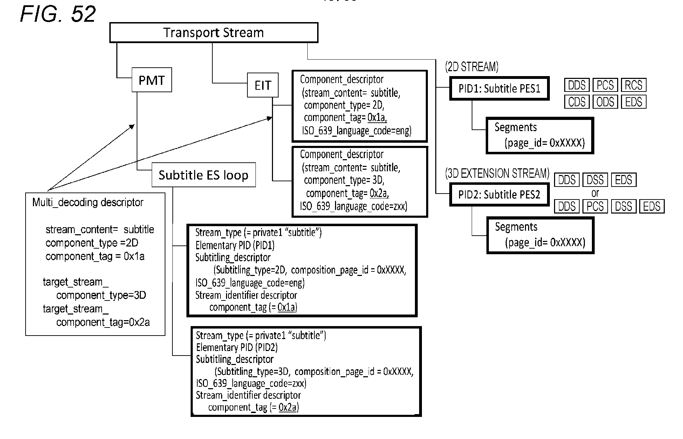

The multi-decoding descriptor is disposed, for example, under the PMT or in the EIT. Fig. 52 illustrates an example of a configuration of the transport stream TS in the case where the multi-decoding descriptor is disposed.

Returning to Fig. 49, the video decoder 222 performs opposite processing to the video encoder 112 of the transmission data generating unit 110 described above. That is, the video decoder 222 reconstructs a video data stream from the video packet extracted by the demultiplexer 221, performs encoding processing, and obtains stereoscopic image data including left-eye image data and right-eye image data. Examples of the transmission format of the stereoscopic image data include a Side By Side scheme, a Top & Bottom scheme, a Frame Sequential scheme, and a video transmission format scheme in which each view occupies a full-screen size.

The subtitle decoder 224 performs opposite processing to the subtitle encoder 125 of the transmission data generating unit 110 described above. That is, the subtitle decoder 224 reconstructs each stream from each stream packet stored in the encoded data buffer 223, and performs encoding processing to acquire the following segment data.

That is, the subtitle decoder 224 decodes the 2D stream to acquire the respective segment data constituting the subtitle data. Also, the subtitle decoder 224 decodes the 3D extension stream to acquire the DSS segment data. As described above, a page ID (page_id) of each segment included in the 2D stream and a page ID (page_id) of each segment included in the 3D extension stream are equal. Therefore, based on the page ID, the subtitle decoder 224 can easily combine the segment of the 2D stream and the segment of the 3D extension stream.

Based on the respective segment data and the subregion region information constituting the subtitle data, the subtitle decoder 224 generates region display data (bit map data) for displaying the subtitle. Herein, a transparent color is allocated to a region that is located in the region and is not surrounded by subregions. The pixel buffer 225 temporarily stores the display data.

The video superimposing unit 228 obtains output stereoscopic image data Vout. In this case, the video superimposing unit 228 superimposes the display data stored in the pixel buffer 225, on a left-eye image frame (frame0) portion and a right-eye image frame (frame1) portion of the stereoscopic image data obtained by the video decoder 222. In this case, the video superimposing unit 228 changes the superimposition position, the size, and the like appropriately according to a transmission scheme of the stereoscopic image data (such as a Side By Side scheme, a Top & Bottom scheme, a Frame Sequential scheme, or an MVC scheme). The video superimposing unit 228 outputs the output stereoscopic image data Vout to the outside of the bit stream processing unit 201.

The disparity information interpolating unit 226 provides the disparity information obtained by the subtitle decoder 224 to the position control unit 227. As necessary, the disparity information interpolating unit 226 performs interpolation processing on the disparity information to be provided to the position control unit 227. The position control unit 227 shifts the position of the display data superimposed on each frame, based on the disparity information (see Fig. 41). In this case, based on the disparity information, the position control unit 227 provides a disparity by shifting the display data (caption pattern data) superimposed on the left-eye image frame (frame0) portion and the right-eye image frame (frame1) portion to be in opposite directions.

Also, the display control information includes disparity information that is commonly used in the caption display period. Also, the display control information may include disparity information that is sequentially updated in the caption display period. As described above, the disparity information sequentially updated in the caption display period includes disparity information of the initial frame of the caption display period and disparity information of a frame for each of the subsequent update frame intervals.

As for the disparity information commonly used in the caption display period, the position control unit 227 uses the disparity information without change. On the other hand, as for the disparity information sequentially updated in the caption display period, the position control unit 227 uses the disparity information interpolated by the disparity information interpolating unit 226 as necessary. For example, the disparity information interpolating unit 226 generates disparity information of an arbitrary frame interval in the caption display period, for example, disparity information of a 1-frame interval.

As the interpolation processing, the disparity information interpolating unit 226 performs not linear interpolation processing but interpolation processing accompanied with low-pass filter (LPF) processing in the time direction (frame direction), for example. Accordingly, a change in the disparity information of a predetermined frame interval in the time direction (frame direction) after the interpolation processing becomes smooth.

Also, the audio decoder 229 performs opposite processing to the audio encoder 113 of the transmission data generating unit 110 described above. That is, the audio decoder 229 reconstructs an audio elementary stream from the audio packet extracted by the demultiplexer 221, performs encoding processing, and obtains output audio data Aout. The audio decoder 229 outputs the output audio data Aout to the outside of the bit stream processing unit 201.

An operation of the bit stream processing unit 201 illustrated in Fig. 49 will be described briefly. The transport stream TS output from the digital tuner 204 (see Fig. 48) is supplied to the demultiplexer 221. The demultiplexer 221 extracts a video data stream packet and an audio data stream packet from the transport stream TS, and supplies the extracted packets to the respective decoders. Also, the 2D stream packet and the 3D extension stream packet of the language selected by the user are extracted by the demultiplexer 221, and the extracted packet is temporarily stored in the encoded data buffer 223.

The video decoder 222 reconstructs a video data stream from the video data packet extracted by the demultiplexer 221, performs decoding processing, and obtains stereoscopic image data including left-eye image data and right-eye image data. The stereoscopic image data is supplied to the video superimposing unit 228.

The subtitle decoder 224 reads the 2D stream packet and the 3D extension stream packet from the encoded data buffer 223, and decodes the read packet. Based on the respective segment data and the subregion region information constituting the subtitle data, the subtitle decoder 224 generates region display data (bit map data) for displaying the subtitle. The display data is temporarily stored in the pixel buffer 225.

The video superimposing unit 228 superimposes the display data stored in the pixel buffer 225, on the left-eye image frame (frame0) portion and the right-eye image frame (frame1) portion of the stereoscopic image data obtained by the video decoder 222. In this case, the superimposition position, the size, and the like are changed appropriately according to a transmission scheme of the stereoscopic image data (such as a Side By Side scheme, a Top & Bottom scheme, a Frame Sequential scheme, or an MVC scheme). The output stereoscopic image data Vout obtained by the video superimposing unit 228 is output to the outside of the bit stream processing unit 201.

Also, the disparity information obtained by the subtitle decoder 224 is provided through the disparity information interpolating unit 226 to the position control unit 227. The disparity information interpolating unit 226 performs interpolation processing as necessary. For example, as for the disparity information at several-frame intervals sequentially updated in the caption display period, interpolation processing is performed by the disparity information interpolating unit 226 as necessary, to generate disparity information of an arbitrary frame interval, for example, a 1-frame interval.

Based on the disparity information, the position control unit 227 shifts the display data (caption pattern data) superimposed on the left-eye image frame (frame0) portion and the right-eye image frame (frame1) portion by the video superimposing unit 228, such that they are in opposite directions. Accordingly, a disparity is provided between a left-eye subtitle displayed on the left-eye image and a right-eye subtitle displayed on the right-eye image. Accordingly, the 3D display of a subtitle (caption) is implemented according to the contents of a stereoscopic image.

Also, the audio decoder 229 reconstructs an audio elementary stream from the audio packet extracted by the demultiplexer 221, performs decoding processing, and obtains audio data Aout corresponding to the above stereoscopic image data Vout for display. The audio data Aout is output to the outside of the bit stream processing unit 201.

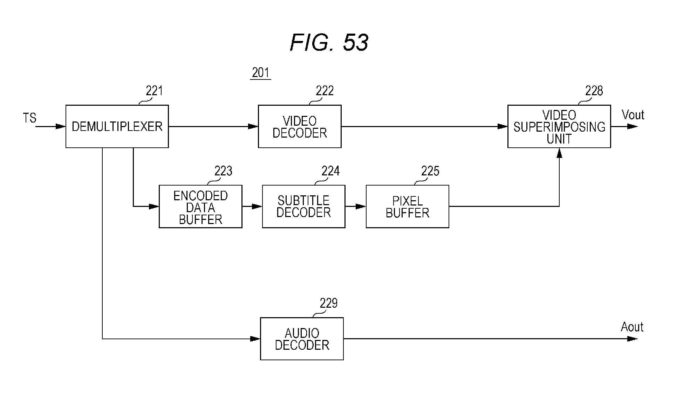

Fig. 53 illustrates an example of the configuration of the bit stream processing unit 201 in the case where the set-top box 200 is a 2D-compatible device (2D STB). In Fig. 53, the units corresponding to those of Fig. 49 are denoted by like reference numerals, and a detailed description thereof will be omitted. Hereinafter, for the convenience of description, the bit stream processing unit 201 illustrated in Fig. 49 will be referred to as the 3D-compatible bit stream processing unit 201, and the bit stream processing unit 201 illustrated in Fig. 53 will be referred to as the 2D-compatible bit stream processing unit 201.

In the 3D-compatible bit stream processing unit 201 illustrated in Fig. 49, the video decoder 222 reconstructs a video data stream from the video packet extracted by the demultiplexer 221, performs decoding processing, and obtains stereoscopic image data including left-eye image data and right-eye image data. On the other hand, in the 2D-compatible bit stream processing unit 201 illustrated in Fig. 53, the video decoder 222 acquires stereoscopic image data, cuts out left-eye image data or right-eye image data, and performs scaling processing as necessary, to obtain 2D image data.

Also, in the 3D-compatible bit stream processing unit 201 illustrated in Fig. 49, the demultiplexer 221 extracts the 2D stream packet and the 3D extension stream packet of the language selected by the user as described above, and provides the extracted stream packets to the subtitle decoder 224. On the other hand, in the 2D-compatible bit stream processing unit 201 illustrated in Fig. 53, the demultiplexer 221 extracts only the 2D stream packet of the language selected by the user as described with reference to Fig. 43, and provides the extracted stream packet to the subtitle decoder 224.

In this case, based on the subtitle type information and the language information, the demultiplexer 221 extracts only the 2D stream from the transport stream TS and decodes the extracted 2D stream easily with a high accuracy. That is, the component descriptor and the subtitle descriptor inserted in association with the 2D stream and the 3D extension stream are inserted into the transport stream TS (see Fig. 15).

In these descriptors, the subtitle type information "subtitling_type" and the language information "ISO_639_language_code" are set to identify the 2D stream and the 3D extension stream (see Figs. 15 and 19). Therefore, based on the corresponding subtitle type information and the language information, the demultiplexer 221 can extract only the 2D stream from the transport stream TS and decode the extracted 2D stream easily with a high accuracy.

Also, in the 3D-compatible bit stream processing unit 201 illustrated in Fig. 49, the subtitle decoder 224 acquires the respective segment data constituting the subtitle data, for example, from the 2D stream as described above, and acquires the DSS segment data from the 3D extension stream.

On the other hand, in the 2D-compatible bit stream processing unit 201 illustrated in Fig. 53, the subtitle decoder 224 acquires only the respective segment data constituting the subtitle data from the 2D stream. Based on the respective segment data and the subregion region information, the subtitle decoder 224 generates region display data (bit map data) for displaying the subtitle, and temporarily stores the generated data in the pixel buffer 225. In this case, the subtitle decoder 224 does not read the DSS segment data. Therefore, the reception processing can be prevented from being interrupted by the reading.

Also, in the 3D-compatible bit stream processing unit 201 illustrated in Fig. 49, the video superimposing unit 228 obtains output stereoscopic image data Vout and outputs the output stereoscopic image data Vout to the outside of the bit stream processing unit 201. In this case, the video superimposing unit 228 obtains the output stereoscopic image data Vout by superimposing the display data stored in the pixel buffer 225, on the left-eye image frame (frame0) portion and the right-eye image frame (frame1) portion of the stereoscopic image data obtained by the video decoder 222. Based on the disparity information, the position control unit 227 shifts the display data to be in opposite directions, and provides a disparity between the left-eye subtitle displayed on the left-eye image and the right-eye subtitle displayed on the right-eye image.

On the other hand, in the 2D-compatible bit stream processing unit 201 illustrated in Fig. 53, the video superimposing unit 228 obtains output 2D image data Vout by superimposing the display data stored in the pixel buffer 225 on the 2D image data obtained by the video decoder 222. The video superimposing unit 228 outputs the output 2D image data Vout to the outside of the bit stream processing unit 201.

An operation of the 2D bit stream processing unit 201 illustrated in Fig. 53 will be described briefly. Also, since an operation of the audio system is the same as that of the 3D bit stream processing unit 201 illustrated in Fig. 49, a description thereof will be omitted.

The transport stream TS output from the digital tuner 204 (see Fig. 48) is supplied to the demultiplexer 221. The demultiplexer 221 extracts a video data stream packet and an audio data stream packet from the transport stream TS, and supplies the extracted packets to the respective decoders. In addition, the demultiplexer 221 extracts the 2D stream packet and temporarily stores the extracted 2D stream packet in the encoded data buffer 223.

The video decoder 222 reconstructs a video data stream from the video data packet extracted by the demultiplexer 221, performs decoding processing, and obtains stereoscopic image data including left-eye image data and right-eye image data. The video decoder 222 cuts out the left-eye image data or the right-eye image data from the stereoscopic image data, and performs scaling processing as necessary, to obtain 2D image data. The 2D image data is supplied to the video superimposing unit 228.

Also, the subtitle decoder 224 reads the 2D stream from the encoded data buffer 223 and decodes the same. Based on the respective segment data constituting the subtitle data, the subtitle decoder 224 generates region display data (bit map data) for displaying the subtitle. The display data is temporarily stored in the pixel buffer 225.

The video superimposing unit 228 obtains output 2D image data Vout by superimposing the display data (bit map data) of the subtitle stored in the pixel buffer 225 on the 2D image data obtained by the video decoder 222. The output 2D image data Vout is output to the outside of the bit stream processing unit 201.

In the set-top box 200 illustrated in Fig. 48, the transport stream TS output from the digital tuner 204 includes display control information in addition to stereoscopic image data and subtitle data. The display control information includes display control information such as disparity information and region information of a subregion. Therefore, a disparity can be provided to the display positions of the left-eye subtitle and the right-eye subtitle. Accordingly, in the display of a subtitle (caption), the consistency of a perspective between respective objects in an image can be maintained in an optimal state.

Also, in the set-top box 200 illustrated in Fig. 48, when the display control information acquired by the subtitle decoder 224 of the 3D-compatible bit stream processing unit 201 (see Fig. 46) includes the disparity information sequentially updated in the caption display period, the display positions of the left-eye subtitle and the right-eye subtitle can be dynamically controlled. Accordingly, the disparity provided between the left-eye subtitle and the right-eye subtitle can be dynamically changed in conjunction with a change in the image content.

Also, in the set-top box 200 illustrated in Fig. 48, the disparity information interpolating unit 226 of the 3D bit stream processing unit 201 (see Fig. 49) performs interpolation processing on disparity information of a plurality of frames constituting the disparity information that is sequentially updated in the caption display period (the period of a predetermined number of fames). In this case, even when disparity information is transmitted from the transmitting side at intervals of an update frame, the disparity provided between the left-eye subtitle and the right-eye subtitle can be controlled at fine intervals, for example, every frame.

Also, in the set-top box 200 illustrated in Fig. 48, the interpolation processing in the disparity information interpolating unit 226 of the 3D bit stream processing unit 201 (see Fig. 49) may be accompanied with, for example, low-pass filter processing in the time direction (frame direction). Therefore, even when disparity information is transmitted from the transmitting side at intervals of an update frame, a change in the disparity information in the time direction after the interpolation processing can be made smooth. Accordingly, it is possible to suppress a sense of discomfort that may be caused when a shift of the disparity provided between the left-eye subtitle and the right-eye subtitle becomes discontinuous every frame interval.

Also, in the set-top box 200 illustrated in Fig. 48, based on the subtitle type information and the language information, the demultiplexer 221 of the bit stream processing unit 201 (see Fig. 53) extracts only the 2D stream from the transport stream TS and decodes the extracted 2D stream easily with a high accuracy. Accordingly, since the subtitle decoder 224 can more securely prevent decoding processing from being performed on the 3D extension stream including the DSS segment having the disparity information, the reception processing thereof can be prevented from being interrupted by the decoding processing.

In addition, although not described above, when the set-top box 200 is a 3D-compatible device, the user may select a 2D display mode or a 3D display mode. In this case, when the 3D display mode is selected, the bit stream processing unit 201 may have the same configuration and operation as the 3D-compatible bit stream processing unit 201 described above (see Fig. 49). On the other hand, when the 2D display mode is selected, the bit stream processing unit 201 may have substantially the same configuration and operation as the 2D-compatible bit stream processing unit 201 described above (see Fig. 53).

[Description of Television Receiver]

Returning to Fig. 1, when being a 3D-compatible device, the television receiver 300 receives stereoscopic image data that is transmitted from the set-top box 200 through the HDMI cable 400. The television receiver 300 includes a 3D signal processing unit 301. The 3D signal processing unit 301 performs processing corresponding to the transmission format (decoding processing) on the stereoscopic image data to generate left-eye image data and right-eye image data.

[Example of Configuration of Television Receiver]

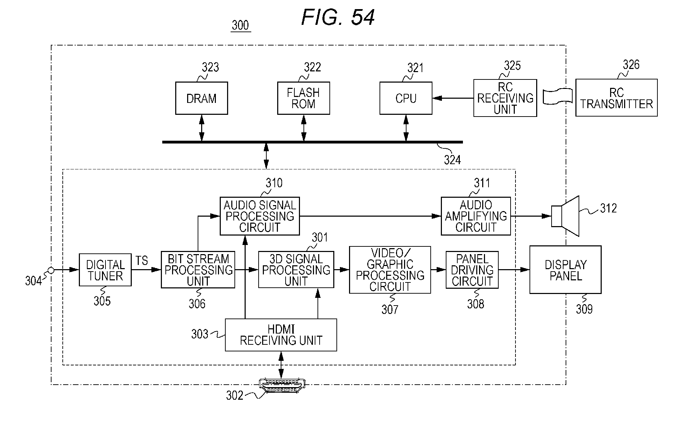

An example of the configuration of a 3D-compatible television receiver 300 will be described. Fig. 54 illustrates an example of the configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306.

Also, the television receiver 300 includes a video/graphic processing circuit 307, a panel driving circuit 308, a display panel 309, an audio signal processing circuit 310, an audio amplifying circuit 311, and a speaker 312. Also, the television receiver 300 includes a CPU 321, a flash ROM 322, a DRAM 323, an internal bus 324, a remote control receiving unit (RC receiving unit) 325, and a remote control transmitter (RC transmitter) 326.

The antenna terminal 304 is a terminal that is configured to input a television broadcast signal received through a reception antenna (not illustrated). The digital tuner 305 processes the television broadcast signal input to the antenna terminal 304, and outputs a transport stream TS (bit stream data) corresponding to a channel selected by a user.

Based on the transport stream TS, the bit stream processing unit 306 outputs audio data and output stereoscopic image data on which a subtitle is superimposed. Although not described in detail, for example, the bit stream processing unit 201 has the same configuration as the 3D-compatible bit stream processing unit 201 (see Fig. 49) of the set-top box 200 described above. With respect to stereoscopic image data, the bit stream processing unit 306 synthesizes display data of a left-eye subtitle and a right-eye subtitle, and generates and outputs output stereoscopic image data superimposed with a subtitle.

Also, for example, when a transmission format of the stereoscopic image data is a Side By Side scheme, a Top & Bottom scheme, or the like, the bit stream processing unit 306 performs scaling processing to output full-resolution left-eye image data and right-eye image data. Also, the bit stream processing unit 306 outputs audio data corresponding to the image data.

The HDMI receiving unit 303 receives uncompressed image data and audio data supplied through the HDMI cable 400 to the HDMI terminal 302, by HDMI-based communication. The HDMI receiving unit 303 has a version of, for example, HDMI 1.4a, and thus can process stereoscopic image data.

The 3D signal processing unit 301 performs decoding processing on the stereoscopic image data received by the HDMI receiving unit 303, to generate full-resolution left-eye image data and right-eye image data. The 3D signal processing unit 301 performs the decoding processing corresponding to a TMDS transmission data format. Also, the 3D signal processing unit 301 does not perform any processing on the full-resolution left-eye image data and right-eye image data obtained by the bit stream processing unit 306.

The video/graphic processing circuit 307 generates image data for displaying a stereoscopic image, based on the left-eye image data and right-eye image data generated by the 3D signal processing unit 301. Also, the video/graphic processing circuit 307 performs image quality adjustment processing on the image data as necessary.

Also, with respect to the image data, the video/graphic processing circuit 307 synthesizes superimposition information data such as a menu or a program as necessary. The panel driving circuit 308 drives the display panel 309 based on the image data output from the video/graphic processing circuit 307. The display panel 309 includes, for example, an LCD (Liquid Crystal Display), a PDP (Plasma Display Panel), or the like.

The audio signal processing circuit 310 performs necessary processing such as D/A conversion on the audio data that is received by the HDMI receiving unit 303 or is obtained by the bit stream processing unit 306. The audio amplifying circuit 311 amplifies an audio signal output from the audio signal processing circuit 310, and supplies the amplified audio signal to the speaker 312.

The CPU 321 controls an operation of each unit of the television receiver 300. The flash ROM 322 stores control software and data. The DRAM 323 constitutes a work area of the CPU 321. The CPU 321 deploys the software or data read from the flash ROM 322 on the DRAM 323 and activates the software to control each unit of the television receiver 300.

The RC receiving unit 325 receives a remote control signal (remote control code) transmitted from the RC transmitter 326, and supplies the received remote control signal to the CPU 321. The CPU 321 controls each unit of the television receiver 300 based on the remote control code. The CPU 321, the flash ROM 322, and the DRAM 323 are connected to the internal bus 324.

An operation of the television receiver 300 illustrated in Fig. 54 will be described briefly. The HDMI receiving unit 303 receives stereoscopic image data and audio data transmitted from the set-top box 200 connected through the HDMI cable 400 to the HDMI terminal 302. The stereoscopic image data received by the HDMI receiving unit 303 is supplied to the 3D signal processing unit 301. Also, the audio data received by the HDMI receiving unit 303 is supplied to the audio signal processing circuit 310.

The television broadcast signal input to the antenna terminal 304 is supplied to the digital tuner 305. The digital tuner 305 processes the television broadcast signal and outputs a transport stream TS (bit stream data) corresponding to a channel selected by the user. The transport stream TS is supplied to the bit stream processing unit 306.

Based on the video data stream, the audio data stream, the 2D stream, the 3D extension stream, and the 3D stream, the bit stream processing unit 306 obtains audio data and output stereoscopic image data superimposed with the subtitle. In this case, with respect to the stereoscopic image data, display data of the left-eye subtitle and the right-eye subtitle are synthesized to generate output stereoscopic image data superimposed with the subtitle (full-resolution left-eye image data and right-eye image data). The output stereoscopic image data is supplied through the 3D signal processing unit 301 to the video/graphic processing circuit 307.

The 3D signal processing unit 301 performs decoding processing on the stereoscopic image data received by the HDMI receiving unit 303, to generate full-resolution left-eye image data and right-eye image data. The left-eye image data and the right-eye image data are supplied to the video/graphic processing circuit 307. The video/graphic processing circuit 307 generates image data for displaying a stereoscopic image based on the left-eye image data and the right-eye image data, and also performs superimposition information data synthesizing processing such as image quality adjustment processing and OSD (On Screen Display) processing as necessary.

The image data obtained by the video/graphic processing circuit 307 is supplied to the panel driving circuit 308. Therefore, a stereoscopic image is displayed by the display panel 309. For example, the display panel 309 alternately displays a left-eye image corresponding to the left-eye image data and a right-eye image corresponding to the right-eye image data in a time-division manner. By wearing, for example, shutter glasses having a left-eye shutter and a right-eye shutter that are opened alternately in synchronization with the display of the display panel 309, a viewer can view only a left-eye image with a left eye and can view only a right-eye image with a right eye, thus recognizing a stereoscopic image.

Also, the audio data obtained by the bit stream processing unit 306 is supplied to the audio signal processing circuit 310. The audio signal processing circuit 310 performs necessary processing such as D/A conversion on the audio data that is received by the HDMI receiving unit 303 or is obtained by the bit stream processing unit 306. The audio data is amplified by the audio amplifying circuit 311, and the amplified audio data is supplied to the speaker 312. Therefore, a sound corresponding to the display image of the display panel 309 is output from the speaker 312.

In addition, Fig. 54 illustrates the 3D-compatible television receiver 300 as described above. Although not described in detail, the legacy 2D-compatible television receiver has substantially the same configuration. However, in the case of the legacy 2D-compatible television receiver, the bit stream processing unit 306 has the same configuration and operation as the 2D-compatible bit stream processing unit 201 illustrated in Fig. 53 described above. Also, in the case of the legacy 2D-compatible television receiver, the 3D signal processing unit 301 is unnecessary.

Also, in the case of the 3D-compatible television receiver 300, the user may select a 2D display mode or a 3D display mode. In this case, when the 3D display mode is selected, the bit stream processing unit 306 has the same configuration and operation as described above. On the other hand, when the 2D display mode is selected, the bit stream processing unit 306 has the same configuration and operation as the 2D-compatible bit stream processing unit 201 illustrated in Fig. 53 described above.

<2. Modification>

Also, in the above-described embodiment, it is illustrated that the disparity information included in the 3D extension stream is operated as a composition page (composition_page) (see Figs. 15, 19 and 23). In this case, as described above, the 3D extension stream is included as "composition_page_id" in the respective language services, and is designated as "subtitling_type=3D" and "ISO_639_language_code=zxx".

On the other hand, it can be considered that the disparity information included in the 3D extension stream is operated as an ancillary page (ancillary_page). In this case, when the 3D extension stream is designated as a common ancillary page ID (ancillary_page_id) of the respective language services, the 3D extension stream is commonly referred to from the respective language services, so that the subtitle service can be efficiently encoded. Even in this case, the 3D extension stream is also designated as "subtitling_type=3D" and "ISO_639_language_code=zxx". However, it applies to only the case where the configuration of the 3D extension stream is DDS, DSS, and EDS. This is because the PCS is not allowed to be shared between services and thus "page_id" is required to be always equal to "composition_page_id".

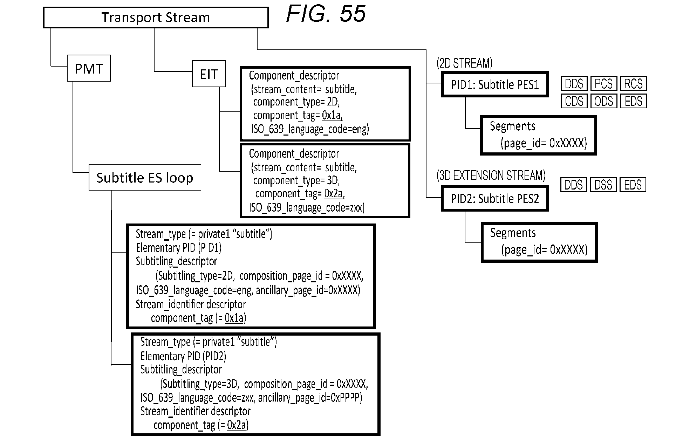

Fig. 55 illustrates an example of a configuration of the transport stream TS in that case. As in the configuration example of the transport stream TS illustrated in Fig. 15 described above, also in Fig. 55, the illustration of video and audio-related portions is omitted for simplicity of illustration. In Fig. 55, the units corresponding to those of Fig. 15 are denoted by like reference numerals, and a detailed description thereof will be appropriately omitted.

A subtitle descriptor (Subtitling_Descriptor) corresponding respectively to the 2D stream and the 3D extension stream is inserted into the PMT. In the 2D stream, an ancillary page ID (ancillary_page_id) is not operated. Therefore, the ancillary page ID "ancillary_page_id" of the subtitle descriptor corresponding to the 2D stream is set to have the same value as the composition page ID "composition_page_id" (0xXXXX in the drawing). That is, this is because the values of both of the page IDs are required to be equal when the ancillary page ID is not operated. The "page_id" of each segment of the 2D stream is encoded to have the same value as the "composition_page_id".

On the other hand, in the 3D extension stream, an ancillary page ID (ancillary_page_id) is operated. Therefore, the ancillary page ID "ancillary_page_id" of the subtitle descriptor corresponding to the 3D extension stream is set to have a different value from the composition page ID "composition_page_id" (0xPPPP in the drawing). The "page_id" of each segment of the 3D extension stream is encoded to have the same value as the "ancillary_page_id". Accordingly, the 3D extension stream is the value of the page ID "page_id" equal to the ancillary page ID "ancillary_page_id", and is commonly referred to in the respective language services.

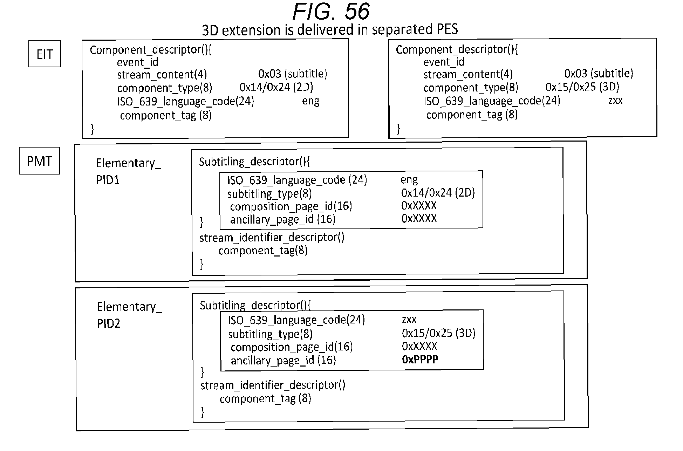

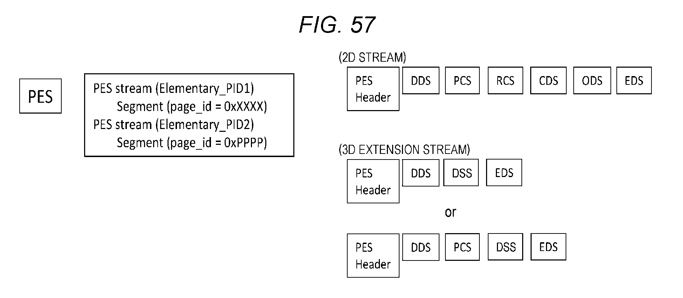

Fig. 56 illustrates the extraction of the subtitle descriptor (Subtitling_descriptor) and the component descriptor (Component_descriptor) illustrated in Fig. 55. Also, Fig. 57 illustrates the extraction of the PES streams (2D stream and 3D extension stream) illustrated in Fig. 55.

A composition page ID (composition_page_id) of the subtitle descriptor is set to indicate that each segment included in the 3D extension stream is associated with each segment of the 2D stream. That is, the "composition_page_id" in the 3D extension stream and the "composition_page_id" in the 2D stream are set to share the same value (0xXXXX in the figure).

Also, in the subtitle descriptor and the component descriptor, for example, an ISO language code (ISO_639_language_code) is described as language information. The ISO language code of the descriptor corresponding to the 2D stream is set to represent the language of a subtitle (caption). In the illustrated example, the ISO language code is set to "eng" representing English. The 3D extension stream has a segment of the DSS with disparity information, but does not have a segment of the ODS. Therefore, the 3D extension stream does not depend on languages. The ISO language code described in the descriptor corresponding to the 3D extension stream is set to, for example, "zxx" representing a non-language.

Also, the ancillary page ID "ancillary_page_id" of the subtitle descriptor corresponding to the 2D stream is set to have the same value as the composition page ID "composition_page_id" (0xXXXX in the drawing). On the other hand, the ancillary page ID "ancillary_page_id" of the subtitle descriptor corresponding to the 3D extension stream is set to have a different value from the composition page ID "composition_page_id" (0xPPPP in the drawing).

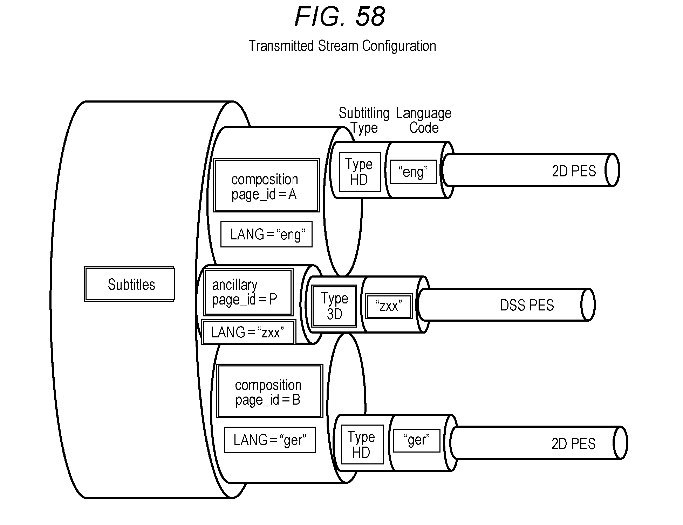

Fig. 58 illustrates an example of a stream configuration of subtitle data streams (2D stream and 3D extension stream). Like the configuration example of Fig. 23, this example is an example of service of two languages that are English "eng" and German "ger". Unlike the configuration example of Fig. 23, the 3D extension stream is not included as "composition_page_id" in the respective language services. In this configuration example, the 3D extension stream is a common ancillary page ID (ancillary_page_id) of the respective language services, and is commonly referred to from the respective language services.

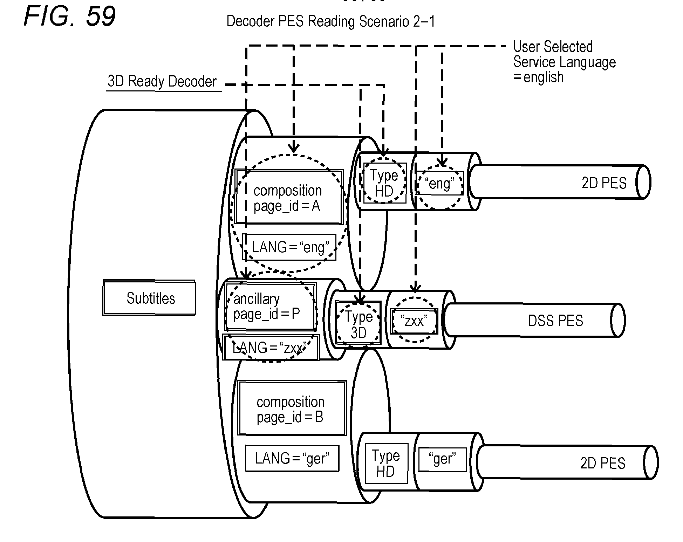

Fig. 59 schematically illustrates the 2D stream and 3D extension stream extraction processing in the 3D-compatible device (set-top box, television receiver, or the like) in the case where the language service selected by the user is English "eng".

In this case, based on the subtitle type information, the 3D-compatible device determines the 2D stream corresponding to a subtitle type "2D(HD,SD)" and the 3D extension stream corresponding to a subtitle type "3D" as a stream to be extracted (see a "○" mark). Also, the receiving apparatus determines the 2D stream of the language selected by the user and the 3D extension stream with the language information (ISO language code) representing a non-language as a stream to be extracted (see a "○" mark).

In this case, as a result, based on the subtitle type information and the language information, the 2D stream corresponding to English "eng" and the 3D extension stream commonly referred to as "ancillary_page_id" from the respective language services are determined as a stream to be extracted.

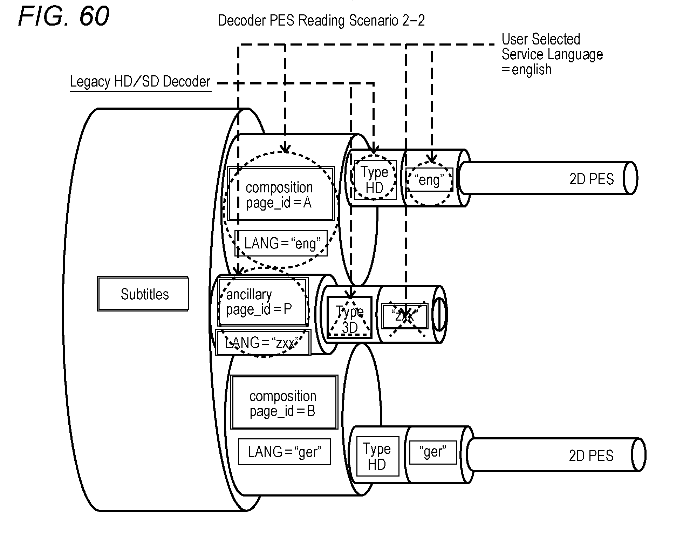

Fig. 60 schematically illustrates the extraction processing of only the 2D stream in the legacy 2D-compatible device (set-top box, television receiver, or the like) in the case where the language service selected by the user is English "eng".

In this case, based on the subtitle type information, the 2D-compatible device can determine the 2D stream corresponding to a subtitle type "2D(HD,SD)" as a stream to be extracted. Herein, since the 2D-compatible device cannot interpret a subtitle type "3D", the 3D extension stream may also be determined as a stream to be extracted (see a "Δ" mark).

However, in this case, based on the language information, the 2D-compatible device determines the 2D stream corresponding to English "eng" as a stream to be extracted, and does not determine the 3D extension stream with the language information representing a non-language as a stream to be extracted (illustrated as a mark "x"). As a result, the 2D-compatible device determines only the 2D stream corresponding to English "eng" as a stream to be extracted. Accordingly, since the 2D-compatible device can more securely prevent decoding processing from being performed on the 3D extension stream including the DSS segment having the disparity information, the reception processing thereof can be prevented from being interrupted by the decoding processing.

In addition, Fig. 48 illustrates that the set-top box 200 is provided with the antenna input terminal 203 connected to the digital tuner 204. However, a set-top box receiving an RF signal transmitted through a cable may also be configured in the same manner. In this case, a cable terminal is provided instead of the antenna terminal 203.

Also, a set-top box, to which the internet and a home network are connected directly or through a router, may also be configured in the same manner. In this case, the above-described transport stream TS is transmitted from the internet and the home network to the set-top box directly or through the router.

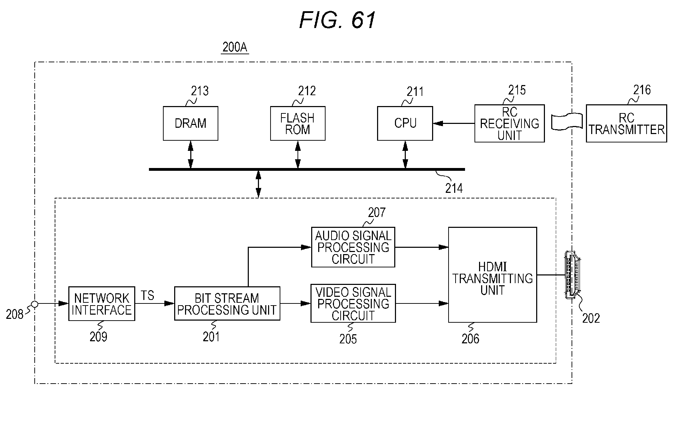

Fig. 61 illustrates an example of the configuration of a set-top box 200A in that case. In Fig. 61, the units corresponding to those of Fig. 48 are denoted by like reference numerals. The set-top box 200A includes a network terminal 208 connected to a network interface 209. A transport stream TS is output from the network interface 209 and then supplied to the bit stream processing unit 201. Although not described in detail, the other units of the set-top box 200A have the same configurations and operations as the corresponding units of the set-top box 200 illustrated in Fig. 48.

Also, Fig. 54 illustrates that the television receiver 300 is provided with the antenna input terminal 304 connected to the digital tuner 204. However, a television receiver receiving an RF signal transmitted through a cable may also be configured in the same manner. In this case, a cable terminal is provided instead of the antenna terminal 304.

Also, a television receiver, to which the internet and a home network are connected directly or through a router, may also be configured in the same manner. In this case, the above-described transport stream TS is transmitted from the Internet and the home network to the television receiver directly or through the router.

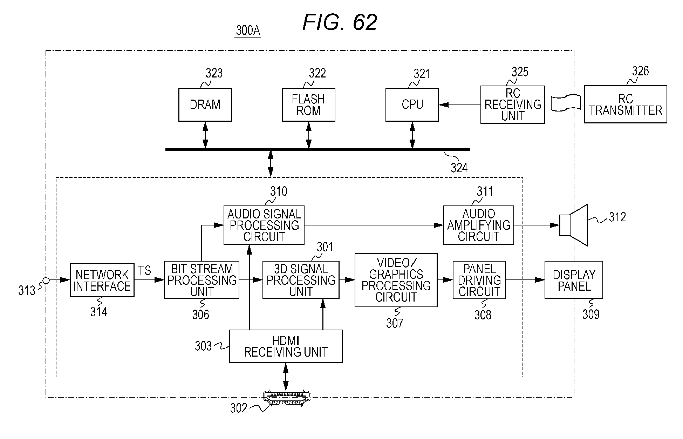

Fig. 62 illustrates an example of the configuration of a television receiver 300A in that case. In Fig. 62, the units corresponding to those of Fig. 54 are denoted by like reference numerals. The television receiver 300A includes a network terminal 313 connected to a network interface 314. A transport stream TS is output from the network interface 314 and then supplied to the bit stream processing unit 306. Although not described in detail, the other units of the television receiver 300A have the same configurations and operations as the corresponding units of the television receiver 300 illustrated in Fig. 54.

Also, in the above-described embodiment, the image transmitting/receiving system 10 is illustrated as including the broadcasting station 100, the set-top box 200, and the television receiver 300. However, as illustrated in Fig. 54, the television receiver 300 includes the bit stream processing unit 306 that functions in the same way as the bit stream processing unit 201 in the set-top box 200. Therefore, as illustrated in Fig. 63, an image transmitting/receiving system 10A may be designed to include the broadcasting station 100 and the television receiver 300.

Also, in the above-described embodiment, the set-top box 200 and the television receiver 300 are illustrated as being connected through an HDMI digital interface. However, the present invention can be similarly applied even when the set-top box 200 and the television receiver 300 are connected through any other digital interface (including a wireless interface as well as a wired interface) that is equivalent to the HDMI digital interface.

Also, in the above-described embodiment, the subtitle (caption) is treated as the superimposition information. However, the present invention can be similarly applied even when other types of information such as graphics information and text information are treated as the superimposition information, and even when those divided into an elementary stream and an additional stream and encoded so as to be output in an associated manner are treated in relation to an audio stream.

Also, the present technology may have the following configurations.

(1) A transmitting apparatus including:

an image data output unit configured to output left-eye image data and right-eye image data for displaying a stereoscopic image;
a superimposition information data output unit configured to output superimposition information data to be superimposed on an image by the left-eye image data and the right-eye image data;
a disparity information output unit configured to output disparity information for providing a disparity by shifting the superimposition information to be superimposed on the image by the left-eye image data and the right-eye image data; and
a data transmitting unit configured to transmit a multiplexed data stream including a video data stream including the image data output from the image data output unit, a first private data stream including the superimposition information data output from the superimposition information data output unit, and a second private data stream including the disparity information output from the disparity information output unit,
wherein a first descriptor and a second descriptor including respective pieces of language information corresponding to the first private data stream and the second private data stream are inserted into the multiplexed data stream, and the language information included in the second descriptor is set to represent a non-language.

(2) The transmitting apparatus according to the (1), wherein
the superimposition information data is DVB subtitle data, and
the descriptors are a component descriptor and a subtitle descriptor.
(3) The transmitting apparatus according to the (1) or (2), wherein the language information representing a non-language is "zxx" representing a non-language of an ISO language code.
(4) The transmitting apparatus according to the (1) or (2), wherein the language information representing a non-language is any one of language codes included in a space from "qaa" to "qrz" of an ISO language code.
(5) The transmitting apparatus according to any one of the (1) to (4), wherein
the superimposition information data is DVB subtitle data,
a first subtitle descriptor and a second subtitle descriptor corresponding respectively to the first private data stream and the second private data stream are inserted into the multiplexed data stream, and
a subtitle type represented by subtitle type information of the first subtitle descriptor is different from a subtitle type represented by subtitle type information of the second subtitle descriptor.
(6) The transmitting apparatus according to any one of the (1) to (5), wherein
the superimposition information data is DVB subtitle data, and
a segment including the superimposition information data of the first private data stream is equal to a page ID of a segment including the disparity information of the second private data stream.
(7) The transmitting apparatus according to any one of the (1) to (5), wherein
the superimposition information data is DVB subtitle data, and
the disparity information included in the second private data stream is operated as an ancillary page.
(8) A transmitting method including the steps of:

outputting left-eye image data and right-eye image data for displaying a stereoscopic image;
outputting superimposition information data to be superimposed on an image by the left-eye image data and the right-eye image data;
outputting disparity information for providing a disparity by shifting the superimposition information to be superimposed on the image by the left-eye image data and the right-eye image data; and
transmitting a multiplexed data stream including a video data stream including the image data output in the image data output step, a first private data stream including the superimposition information data output in the superimposition information data output step, and a second private data stream including the disparity information output in the disparity information output step,
wherein a first descriptor and a second descriptor including respective pieces of language information corresponding to the first private data stream and the second private data stream are inserted into the multiplexed data stream, and the language information included in the second descriptor is set to represent a non-language.

(9) A receiving apparatus including:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;

a video decoding unit configured to extract the video data stream from the multiplexed data stream received by the data receiving unit and decode the video data stream extracted; and

a subtitle decoding unit configured to extract the first subtitle data stream from the multiplexed data stream received by the data receiving unit and decode the first subtitle data stream extracted,

wherein

descriptors including respective pieces of subtitle type information corresponding to the first subtitle data stream and the second subtitle data stream are inserted into the multiplexed data stream,

the respective pieces of subtitle type information included in the descriptors corresponding to the first subtitle data stream and the second subtitle data stream are set to represent different subtitle types, and

the subtitle decoding unit determines the subtitle data stream to be decoded after being extracted from the multiplexed data stream, based on the subtitle type information inserted into the descriptor.

(10) A receiving apparatus including:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;

a video decoding unit configured to extract the video data stream from the multiplexed data stream received by the data receiving unit and decode the video data stream extracted; and

a subtitle decoding unit configured to extract the first subtitle data stream from the multiplexed data stream received by the data receiving unit and decode the first subtitle data stream extracted,

wherein

descriptors including respective pieces of language information corresponding to the first subtitle data stream and the second subtitle data stream are inserted into the multiplexed data stream,

the language information included in the descriptor corresponding to the second subtitle data stream is set to represent a non-language, and

the subtitle decoding unit determines the subtitle data stream to be decoded after being extracted from the multiplexed data stream, based on the language information inserted into the descriptor.

REFERENCE SIGNS LIST

| | |
|---|---|
| 10, 10A | Image transmitting/receiving system |
| 100 | Broadcasting station |
| 111L, 111R | Camera |
| 112 | Video framing unit |
| 113 | Disparity vector detecting unit |
| 114 | Microphone |
| 115 | Data extracting unit |
| 115a | Data recording medium |
| 116 to 118 | Change-over switch |
| 119 | Video encoder |
| 120 | Audio encoder |
| 121 | Subtitle generating unit |
| 122 | Disparity information creating unit |
| 123 | Subtitle processing unit |
| 125 | Subtitle encoder |
| 126 | Multiplexer |
| 200, 200A | Set-top box (STB) |
| 201 | Video stream processing unit |

(continued)

| 202 | HDMI terminal |
| 203 | Antenna terminal |
| 204 | Digital tuner |
| 205 | Video signal processing circuit |
| 206 | HDMI transmitting unit |
| 207 | Audio signal processing circuit |
| 208 | Network terminal |
| 209 | Network interface |
| 211 | CPU |
| 215 | Remote control receiving unit |
| 216 | Remote control transmitting unit |
| 221 | Demultiplexer |
| 222 | Video decoder |
| 223 | Encoded data buffer |
| 224 | Subtitle decoder |
| 225 | Pixel buffer |
| 226 | Disparity information interpolating unit |
| 227 | Position control unit |
| 228 | Video superimposing unit |
| 229 | Audio decoder |
| 300, 300A | Television receiver (TV) |
| 301 | 3D signal processing unit |
| 302 | HDMI terminal |
| 303 | HDMI receiving unit |
| 304 | Antenna terminal |
| 305 | Digital tuner |
| 306 | Video stream processing unit |
| 307 | Video/graphic processing circuit |
| 308 | Panel driving circuit |
| 309 | Display panel |
| 310 | Audio signal processing circuit |
| 311 | Audio amplifying circuit |
| 312 | Speaker |

**Claims**

1. A transmitting apparatus comprising:

an image data output unit configured to output left-eye image data and right-eye image data for displaying a stereoscopic image;
a superimposition information data output unit configured to output superimposition information data to be superimposed on an image by the left-eye image data and the right-eye image data;
a disparity information output unit configured to output disparity information for providing a disparity by shifting the superimposition information to be superimposed on the image by the left-eye image data and the right-eye image data; and
a data transmitting unit configured to transmit a multiplexed data stream including a video data stream including the image data output from the image data output unit, a first private data stream including the superimposition information data output from the superimposition information data output unit, and a second private data stream including the disparity information output from the disparity information output unit,
wherein a first descriptor and a second descriptor including respective pieces of language information corresponding to the first private data stream and the second private data stream are inserted into the multiplexed data stream, and the language information included in the second descriptor is set to represent a non-language.

2. The transmitting apparatus according to claim 1, wherein
the superimposition information data is DVB subtitle data, and
the descriptors are a component descriptor and a subtitle descriptor.

3. The transmitting apparatus according to claim 1, wherein the language information representing a non-language is "zxx" representing a non-language of an ISO language code.

4. The transmitting apparatus according to claim 1, wherein the language information representing a non-language is any one of language codes included in a space from "qaa" to "qrz" of an ISO language code.

5. The transmitting apparatus according to claim 1, wherein
the superimposition information data is DVB subtitle data,
a first subtitle descriptor and a second subtitle descriptor corresponding respectively to the first private data stream and the second private data stream are inserted into the multiplexed data stream, and
a subtitle type represented by subtitle type information of the first subtitle descriptor is different from a subtitle type represented by subtitle type information of the second subtitle descriptor.

6. The transmitting apparatus according to claim 1, wherein
the superimposition information data is DVB subtitle data, and
a segment including the superimposition information data of the first private data stream is equal to a page ID of a segment including the disparity information of the second private data stream.

7. The transmitting apparatus according to claim 1, wherein
the superimposition information data is DVB subtitle data, and
the disparity information included in the second private data stream is operated as an ancillary page.

8. A transmitting method comprising the steps of:

outputting left-eye image data and right-eye image data for displaying a stereoscopic image;
outputting superimposition information data to be superimposed on an image by the left-eye image data and the right-eye image data;
outputting disparity information for providing a disparity by shifting the superimposition information to be superimposed on the image by the left-eye image data and the right-eye image data; and
transmitting a multiplexed data stream including a video data stream including the image data output in the image data output step, a first private data stream including the superimposition information data output in the superimposition information data output step, and a second private data stream including the disparity information output in the disparity information output step,
wherein a first descriptor and a second descriptor including respective pieces of language information corresponding to the first private data stream and the second private data stream are inserted into the multiplexed data stream, and the language information included in the second descriptor is set to represent a non-language.

9. A receiving apparatus comprising:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;
a video decoding unit configured to extract the video data stream from the multiplexed data stream received by the data receiving unit and decode the video data stream extracted; and
a subtitle decoding unit configured to extract the first subtitle data stream from the multiplexed data stream received by the data receiving unit and decode the first subtitle data stream extracted,
wherein
descriptors including respective pieces of subtitle type information corresponding to the first subtitle data stream and the second subtitle data stream are inserted into the multiplexed data stream,
the respective pieces of subtitle type information included in the descriptors corresponding to the first subtitle data stream and the second subtitle data stream are set to represent different subtitle types, and

the subtitle decoding unit determines the subtitle data stream to be decoded after being extracted from the multiplexed data stream, based on the subtitle type information inserted into the descriptor.

10. A receiving apparatus comprising:

a data receiving unit configured to receive a multiplexed data stream including a video data stream including left-eye image data and right-eye image data for displaying a stereoscopic image, a first subtitle data stream including superimposition information data to be superimposed on an image by the left-eye image data and the right-eye image data, and a second subtitle data stream including disparity information for providing a disparity by shifting the superimposition information to be superimposed on the image by the left-eye image data and the right-eye image data;
a video decoding unit configured to extract the video data stream from the multiplexed data stream received by the data receiving unit and decode the video data stream extracted; and
a subtitle decoding unit configured to extract the first subtitle data stream from the multiplexed data stream received by the data receiving unit and decode the first subtitle data stream extracted,
wherein
descriptors including respective pieces of language information corresponding to the first subtitle data stream and the second subtitle data stream are inserted into the multiplexed data stream,
the language information included in the descriptor corresponding to the second subtitle data stream is set to represent a non-language, and
the subtitle decoding unit determines the subtitle data stream to be decoded after being extracted from the multiplexed data stream, based on the language information inserted into the descriptor.

## FIG. 1

<u>10</u>

BROADCASTING STATION
110
TRANSMISSION DATA GENERATING UNIT

100

TS →

STB
201
BIT STREAM PROCESSING UNIT

202

400

302

200

TV
301
3D SIGNAL PROCESSING UNIT

300

## FIG. 2

<u>110</u>

DATA EXTRACTING UNIT
111a
DATA RECORDING MEDIUM

111

VIDEO ENCODER

112

AUDIO ENCODER

113

MULTIPLEXER

119

→ TS

DISPARITY INFORMATION CREATING UNIT (VIEWER)

115

SUBTITLE GENERATING UNIT

114

SUBTITLE PROCESSING UNIT

116

SUBTITLE ENCODER

118

## FIG. 3

EXAMPLE OF STEREOSCOPIC IMAGE DATA

L

1920×1080

R

1920×1080

# FIG. 4

**"Top & Bottom" SCHEME**

(a)

| L |
|:-:|
| R |

1920x1080i/p

**"Side By Side" SCHEME**

(b)

| L | R |
|:-:|:-:|

1920x1080i/p

**"Frame Sequential" SCHEME
or "L/R No interleaving" SCHEME**

(c)

| L |   | R |
|:-:|---|:-:|

1920x1080i/p          1920x1080i/p

# FIG. 5

Block Bi          Block Bj

$(xi'-xi, yi'-yi)$          $(xi, yi)$          $(xj, yj)$

$(xj'-xj, yj'-yj)$

RIGHT-EYE IMAGE
(REFERENCE IMAGE)

LEFT-EYE IMAGE
(DETECTION IMAGE)

# FIG. 6

RIGHT-EYE IMAGE

LEFT-EYE IMAGE

R(x,y)    COMPARISON BLOCK

(xi,yi)

SEARCH RANGE

L(x,y)    Bi

# FIG. 7

DISPARITY VECTOR (FOR EACH PIXEL)

PICTURE

# FIG. 8

DISPARITY VECTOR (FOR EACH BLOCK)

# FIG. 9

DOWNSIZING PROCESSING

(a)

Block

(b)

Group of Block

Block

(c)

Group of Block

Partition

(d)

Picture

Partition

FIG.10

DSS disparity assignment
To subregion

Region 0

Region_
Starting
Position R0

(a)

SubRegion 1
Horizontal
Position
(x = SR1)

SubRegion 2
Horizontal
Position
(x = SR2)

SubRegion 1
(disparity1)

SubRegion 2
(disparity2)

For Left view

Region_
Starting
Position R0

(b)

SubRegion 1
Horizontal
Position
(x = SR1 − disparity1)

SubRegion 2
Horizontal
Position
(x = SR2 − disparity2)

For Right view

Region_
Starting
Position
R0

(c)

SubRegion 1
Horizontal
Position
(x = SR1 + disparity1)

SubRegion 2
Horizontal
Position
(x = SR2 + disparity2)

# FIG. 11

(a) 2D stream

PES payload

| PES Header | DDS | PCS | RCS | CDS | ODS | EDS |

(b) 3D EXTENSION stream

PES payload

| PES Header | DDS | DSS | EDS |

(c) 3D EXTENSION stream

PES payload

| PES Header | DDS | PCS | DSS | EDS |

FIG. 12

DISPLAY AT TIMING OF
Decoder Clock = PTS

Timing1 (PTS1)                    Time

ID1;                    ID2:
PES1(1)                 PES2(2)          2D subtitle

| PES#1 | PES#2 |

3D extended
control                                  Disparity value interpolation

| PTS1 | Conventional Segments |   | PTS1 | Extended Segments |

Disparity                                              Disparity
Plot                                                   Plot

CAPTION PATTERN
DISPLAY TIMING

PES1(1) : PES#1 packet with PTS1
PES2(1) : PES#2 packet with PTS1

## FIG. 13

DISPLAY AT TIMING OF
Decoder Clock = PTS

Time

Timing1 (PTS1)　　Timing2 (PTS2)

ID1;
PES1(1)

ID2:
PES2(2)

PES#1

PES#2

2D subtitle

| PTS1 | Conventional Segments |

| PTS2 | Extended Segments |

3D extended
control

Disparity value interpolation

CAPTION PATTERN
DISPLAY TIMING

Disparity
Plot

......

Disparity
Plot

3D DISPLAY TIMING

PES1(1) : PES#1 packet with PTS1
PES2(2) : PES#2 packet with PTS2

## FIG. 14

DISPLAY AT TIMING OF
Decoder Clock = PTS

Time

(PTS3)

(PTS1)
(PTS2)
(PTS4)
(PTS5)

2D subtitle

Disparity value interpolation

3D extended
control

CAPTION PATTERN
DISPLAY TIMING

Disparity
Plot

Disparity
Plot

3D DISPLAY TIMING

ID1;
PES1(1)

| PES#1 | PTS2 | PTS3 | PTS4 | PTS5 |

| PTS1 | Conventional Segments |

| ID2: PES 2(2) | ID2: PES 2(3) | ID2: PES 2(4) | ID2: PES 2(5) |

*FIG. 15*

Transport Stream

PMT

EIT

Component_descriptor
(stream_content= subtitle,
component_type= 2D,
component_tag= 0x1a,
ISO_639_language_code=eng)

Component_descriptor
(stream_content= subtitle,
component_type= 3D,
component_tag= 0x2a,
ISO_639_language_code=zxx)

Subtitle ES loop

Stream_type (= private1 "subtitle")
Elementary PID (PID1)
Subtitling_descriptor
    (Subtitling_type=2D, composition_page_id = 0xXXXX,
ISO_639_language_code=eng)
Stream_identifier descriptor
    component_tag (= 0x1a)

Stream_type (= private1 "subtitle")
Elementary PID (PID2)
Subtitling_descriptor
    (Subtitling_type=3D, composition_page_id = 0xXXXX,
ISO_639_language_code=zxx)
Stream_identifier descriptor
    component_tag (= 0x2a)

(2D STREAM)

PID1: Subtitle PES1

DDS | PCS | RCS
CDS | ODS | EDS

Segments
(page_id= 0xXXXX)

(3D EXTENSION STREAM)

PID2: Subtitle PES2

DDS | DSS | EDS
or
DDS | PCS | DSS | EDS

Segments
(page_id= 0xXXXX)

# FIG. 16

DVB subtitles page_composition_segment

| Syntax | No. of Bits | Format |
|---|---|---|
| page_composition_segment() { | | |
|    sync_byte | 8 | bslbf |
|    segment_type | 8 | bslbf |
|    page_id | 16 | bslbf |
|    segment_length | 16 | uimsbf |
|    page_time_out | 8 | uimsbf |
|    page_version_number | 4 | uimsbf |
|    page_state | 2 | bslbf |
|    reserved | 2 | bslbf |
|    while (processed_length < segment_length) { | | |
|       region_id | 8 | bslbf |
|       reserved | 8 | bslbf |
|       region_horizontal_address | 16 | uimsbf |
|       region_vertical_address | 16 | uimsbf |
|    } | | |
| } | | |

# FIG. 17

## DVB subtitles segment_type

| DVB subtitles segment_type | Segment |
|---|---|
| 0x10 | page composition segment |
| 0x11 | region composition segment |
| 0x12 | CLUT definition segment |
| 0x13 | object data segment |
| 0x14 | display definition segment |
| **0x15 (*)** | **disparity signaling segment** |
| 0x41 - 0x7F | reserved for future use |
| 0x80 | end of display set segment |
| 0x81 – 0xEF | private data |
| 0xFF | stuffing (see note) |
| All other values | reserved for future use |

(*) Newly introduced

## FIG. 18

Component descriptor      3D EXTENSION OF Component_type

Stream_content

Component_type

Description

| | | |
|---|---|---|
| 0x03 | 0x10 | DVB subtitles (normal) with no monitor aspect ratio criticality |
| 0x03 | 0x11 | DVB subtitles (normal) for display on 4:3 aspect ratio monitor |
| 0x03 | 0x12 | DVB subtitles (normal) for display on 16:9 aspect ratio monitor |
| 0x03 | 0x13 | DVB subtitles (normal) for display on 2.21:1 aspect ratio monitor |
| 0x03 | 0x14 | DVB subtitles (normal) for display on a high definition monitor |
| 0x03 | 0x15 | DVB subtitles (normal) for display on a 3D high definition monitor |
| | | |
| 0x03 | 0x20 | DVB subtitles (for the hard of hearing) with no monitor aspect ratio criticality |
| 0x03 | 0x21 | DVB subtitles (for the hard of hearing) for display on 4:3 aspect ratio monitor |
| 0x03 | 0x22 | DVB subtitles (for the hard of hearing) for display on 16:9 aspect ratio monitor |
| 0x03 | 0x23 | DVB subtitles (for the hard of hearing) for display on 2.21:1 aspect ratio monitor |
| 0x03 | 0x24 | DVB subtitles (for the hard of hearing) for display on a high definition monitor |
| 0x03 | 0x25 | DVB subtitles (for the hard of hearing) for display on a 3D high definition monitor |

## FIG. 19

3D extension is delivered in separated PES (EXAMPLE OF ALLOCATION OF "zxx")

EIT

```
Component_descriptor(){
    event_id
    stream_content(4)              0x03 (subtitle)
    component_type(8)      0x14/0x24 (2D)
    ISO_639_language_code(24)              eng
    component_tag (8)
}
```

```
Component_descriptor(){
    event_id
    stream_content(4)              0x03 (subtitle)
    component_type(8)      0x15/0x25 (3D)
    ISO_639_language_code(24)              zxx
    component_tag (8)
}
```

PMT

Elementary_
PID1

```
Subtitling_descriptor(){
    ISO_639_language_code (24)eng
    subtitling_type(8)
    composition_page_id(16)      0xXXXX  (★)            0x14/0x24 (2D)
}
stream_identifier_descriptor()
    component_tag(8)
}
```

Elementary_
PID2

```
Subtitling_descriptor(){
    ISO_639_language_code(24) zxx
    subtitling_type(8)
    composition_page_id(16)      0xXXXX  (★)            0x15/0x25 (3D)
}
stream_identifier_descriptor()
    component_tag (8)
}
```

Same value

FIG. 20

PES

PES stream (Elementary_PID1)
    Segment (page_id = 0xXXXX) （★）
PES stream (Elementary_PID2)
    Segment (page_id = 0xXXXX) （★）

Same value

(2D STREAM)

| PES Header | DDS | PCS | RCS | CDS | ODS | EDS |

(3D EXTENSION STREAM)

| PES Header | DDS | DSS | EDS |

or

| PES Header | DDS | PCS | DSS | EDS |

## FIG. 21

3D extension is delivered in separated PES (EXAMPLE OF ALLOCATION OF "qaa"~"qrz")

| EIT |

```
Component_descriptor(){
    event_id
    stream_content(4)          0x03 (subtitle)
    component_type(8)      0x14/0x24 (2D)
    ISO_639_language_code(24)            eng
    component_tag (8)
}
```

```
Component_descriptor(){
    event_id
    stream_content(4)          0x03 (subtitle)
    component_type(8)      0x15/0x25 (3D)
    ISO_639_language_code(24)      qaa~qrz
    component_tag (8)
}
```

| PMT |

Elementary_PID1

```
Subtitling_descriptor(){

    ISO_639_language_code (24)      eng
    subtitling_type(8)              0x14/0x24 (2D)
}   composition_page_id(16)         0xXXXX  (★)
stream_identifier_descriptor()
    component_tag(8)
}
```

Elementary_PID2

```
Subtitling_descriptor(){

    ISO_639_language_code(24)       qaa~qrz
    subtitling_type(8)              0x15/0x25 (3D)
}   composition_page_id(16)         0xXXXX  (★)
stream_identifier_descriptor()
    component_tag (8)
}
```

Same value

# FIG. 22

EXTRACTION OF ISO 639–2 Code LIST

"eng"   English
"ger"   German
"jpn"   Japanese
  :
"qaa"  ⎤
  ≀     ⎬  Reserved for local use
"qrz"  ⎦
  :
"zxx"   No linguistic content

# FIG. 23

Transmitted Stream Configuration

Subtitling
Type    Language
Code

composition
page_id = A

LANG = "eng"

Subtitles

Type
HD

"eng"

2D PES

Type
3D

"zxx"

DSS PES

composition
page_id = B

LANG = "ger"

Type
HD

"ger"

2D PES

Type
3D

"zxx"

DSS PES

# FIG. 24

## Syntax of component_descriptor

```
component_descriptor(){
        descriptor_tag                  8       uimsbf
        descriptor_length               8       uimsbf
        reserved_future_use             4        bslbf
        stream_content                  4       uimsbf
        component_type                  8       uimsbf
        component_tag                   8       uimsbf
        ISO_639_language_code          24       bslbf
        for (i=0;i<N;i++){
                text_char               8       uimsbf
        }
}
```

# FIG. 25

Syntax of subtitling_descriptor

```
subtitling_descriptor(){
        descriptor_tag                          8        uimsbf
        descriptor_length                       8        uimsbf
        for (i= 0;i<N;I++){
                ISO_639_language_code          24        bslbf
                subtitling_type                 8        bslbf
                composition_page_id            16        bslbf
                ancillary_page_id              16        bslbf
        }
}
```

## FIG. 26

Disparity Temporal Update sequence in DSS

Interval Period = Vertex Time Distance

## FIG. 27

Disparity Temporal Update sequence in DSS

Interval
Period (IP)

*M   *N   *P   *Q   *R

0

A

B

C

D   E   F

Disparity

Arbitrary Disparity Variant

Time

# FIG. 28

## FIG. 29

Disparity Temporal Update

Arbitrary Disparity Variant

## FIG. 30

Disparity Temporal Update

| Division Period 1 | Division Period 2 | Division Period 3 | Division Period 4 | Division Period 5 | Division Period 6 |

Interval Duration (ID)

*M   *N   *P   *Q   *R   *S

0

Disparity

T1_0

a (LPF OUTPUT)

T1_1   T1_2   T1_3

T1_4

T1_5

T1_6

Division_Period_n = Interval_Duration *(variable value)

Time

# FIG. 31

Displaying subtitles

(EXAMPLE OF ONE page AREA+TWO region UNITS)

Region1
with subregion

Area for
Page_default

Region2
with subregion

# FIG. 32

Disparity Temporal Update

(Example of disparity update applying to page_default + 2 regions)

# FIG. 33

Structure of disparity update sequence overview

Page layer

  - page_default_disparity
  - T0_0 : interval_count
        disparity_page_update
          :
    T0_6 : interval_count
        disparity_page_update

Region layer

    region1 (subregion1)
  -  subregion_disparity_integer_part
     subregion_disparity_fractional_part
  - T1_0 : interval_count
        disparity_region_update_integer_part
        disparity_region_update_fractional_part
          :
    T1_6 : interval_count
        disparity_region_update_integer_part
        disparity_region_update_fractional_part

    region2 (subregion1)
  -  subregion_disparity_integer_part
     subregion_disparity_fractional_part
  - T2_0 : interval_count
        disparity_region_update_integer_part
        disparity_region_update_fractional_part
          :
    T2_7 : interval_count
        disparity_region_update_integer_part
        disparity_region_update_fractional_part

*FIG. 34*                    DSS syntax (1)

| Syntax | Size | Type |
|---|---|---|
| disparity_signalling_segment() { | | |
| sync_byte | 8 | bslbf |
| segment_type | 8 | bslbf |
| page_id | 16 | bslbf |
| segment_length | 16 | uimbbf |
| dss_version_number | 4 | uimbdf |
| disparity_shift_update_sequence_page_flag | 1 | bslbf |
| reserved | 3 | bslbf |
| page_default_disparity_shift | 8 | tcimsbf |
| if (disparity_shift_update_sequence_page_flag ==1) { | | |
| disparity_shift_update_sequence() | | |
| } | | |
| while (processed_length<segment_length) { | | |
| region_id | 8 | uimsbf |
| disparity_shift_update_sequence_region_flag | 1 | bslbf |
| reserved | 5 | bslbf |
| number_of_subregions_minus_1 | 2 | Uimsdf |
| /* syntax continued to next page */ | | |

## FIG. 35

DSS syntax (2)

| Syntax | Size | Type |
|---|---|---|
| for (n=0; n<= number_of_subregions_minus_1; n++) { | | |
| if (number_of_subregions_minus_1 > 0) { | | |
| subregion_horizontal_position | 16 | uimsbf |
| subregion_width | 16 | uimsbf |
| } | | |
| subregion_disparity_shift_integer_part | 8 | tcimbsf |
| subregion_disparity_shift_fractional_part | 4 | uimbsf |
| reserved | 4 | uimbsf |
| if (disparity_shift_update_sequence_region_flag ==1) { | | |
| disparity_shift_update_sequence() | | |
| } | | |
| } | | |
| } | | |
| } | | |

# FIG. 36

DSS syntax (3)

| Syntax | Size | Type |
|---|---|---|
| disparity_shift_update_sequence() { | | |
|    disparity_shift_update_sequence_length | 8 | bslbf |
|    interval_duration[23..0] | 24 | uimsbf |
|    division_period_count | 8 | uimsbf |
|    for (i= 0; i< division_period_count; i ++) { | | |
|      interval_count | 8 | uimsbf |
|       disparity_shift_update_integer_part | 8 | tcimbsf |
|    } | | |
| } | | |

# FIG. 37

Semantics :
dss_version_number :

    indicates the version of this disparity_signalling_segment.

    The version number is incremented (modulo 16) if *any of the parameters*
    *for this particular disparity_signalling_segment are modified.*

disparity_shift_update_sequence_page_flag :

    if „1" then the disparity_shift_update_sequence immediately following is
    to be applied to the page_default_disparity_shift.

    If „0" then a disparity_shift_update_sequence for page_default_disparity_shift
    is not included.

page_default_disparity_shift :

    specifies the default disparity value which should be applied to all regions
    within the page, and is indicated by  a signed integer to range
    between + 127 & -128 pixels.

processed_length :

    the total number of bytes that have already been processed following
    the segment_length field.

## FIG. 38

Semantics :
region_id :

        identifies the region to which the following subregion data refers.
        Regions which have been declared in the display set but which are not
        referenced in the while-loop shall adopt the page_default_disparity and
        its associated disparity_update_sequence where present.

disparity_shift_update_sequence_region_flag :

        if „1" then a disparity_shift_update_sequence is included for all subregions
        of this region.
        If „0" then a disparity_shift_update_sequence for this region is not included.

number_of_subregions_minus_1 :

        the number of subregions minus one which apply to this region.
        If number_of_subregions_minus_1 = 0 then the region has only one subregion
        whose dimensions are the same as the region and the signalled disparity
        therefore applies to the whole region.
        If number_of_subregions_minus_1 > 0 then the subregions are spatially
        enclosed by horizontally splitting the region.

subregion_horizontal_position :

        specifies the left-hand most pixel position of this subregion.

subregion_width :

        specifies the horizontal width of this subregion expressed in pixels.
        The combination of subregion_horizontal_position and subregion_width
        shall always fall within the declared extent of the region to which this refers.
        The value of this field shall therefore be in the range 1..4095.

# FIG. 39

Semantics :
subregion_disparity_shift_integer_part :

        specifies the integer part of the disparity shift value which should be applied
        to all subtitle pixel data enclosed within this subregion.
        This allows the disparity to range between + 127 & -128 pixels.

subregion_disparity_shift_fractional_part :

        specifies the fractional part of the disparity shift value which should be applied
        to all subtitle pixel data enclosed within this subregion.
        When used as an extension of the integer part, this allows the signalled
        disparity shift to be defined to 1/16 pixel accuracy.

        Note that this fractional part is unsigned (0b0001 represents 1/16 pixel
        and 0b1111 represents 15/16 pixel) and should be combined with the integer part
        according to the sign of the integer part.

        Note : Any processing (either at the encoder or the decoder) which needs
        to implement only integer values of disparity shift shall ensure values are
        rounded "towards the viewer" (i.e. that positive values of disparity are rounded down
        and negative values rounded up).
disparity_shift_update_sequence_length :

        specifies the number of bytes contained in the disparity_shift_update_sequence
        which follows this field.

# FIG. 40

Semantics :

interval_duration :

      specifies the unit of interval used to calculate the PTS for the disparity update
      as a 24-bit field (in 90 kHz STC increments).
      The value of interval_duration shall correspond to an exact multiple ($\geq 1$)
      of frame periods. The maximum increment is just over 186 seconds

division_period_count :

      specifies the number of unique disparity values ($\geq 1$) and hence the number
      of time intervals within the following disparity_shift_update_sequence
      „for" loop.

interval_count :

      specifies the multiplier used to calculate the PTS for this disparity update
      from the initial PTS value. The calculation for the PTS for this update is
      PTSnew = PTSprevious + (interval_duration * interval_count)
      where interval count $\geq 1$, where PTSnew increases with every iteration
      of the loop and where the initial value of PTSprevious is the PTS signalled
      in the PES header.

disparity_shift_update_integer_part :

      specifies the integer part of the disparity update value which should
      be applied to all subtitle pixel data enclosed within this page or this subregion.
      This allows the disparity to excurse + 127 to -128 pixel.

## FIG. 41

BROADCAST RECEPTION CONCEPT (3D RECEPTION)

*FIG. 42*     Decoder PES Reading Scenario 1–1

User Selected
Service Language
= english

3D Ready Decoder

composition
page_id = A

LANG = "eng"

Type
HD

"eng"

2D PES

Type
3D

"zxx"

DSS PES

Subtitles

composition
page_id = B

LANG = "ger"

Type
HD

"ger"

2D PES

Type
3D

"zxx"

DSS PES

## FIG. 43

BROADCAST RECEPTION CONCEPT (LEGACY 2D RECEPTION)

2D subtitle stream
Region 0

A B C

SR 00
-Position
-Disparity1

BROADCASTING STATION

100

A B C

Legacy 2D STB

200

A B C

TV

300

HDMI

A B C

Legacy 2DTV

300

A B C

*FIG. 44*

Decoder PES Reading Scenario 1-2

User Selected
Service Language
= english

Legacy HD/SD Decoder

composition
page_id = A

LANG = "eng"

Type
HD

"ehg"

2D PES

Type
3D

"zxx"

Subtitles

composition
page_id = B

LANG = "ger"

Type
HD

"ger"

2D PES

Type
3D

"zxx"

## FIG. 45

Service and decode streams

Service Target: 3D, 2D receiver

Video (3D)

SBS (*)

Subtitle (2D)

"A B C"

Subtitle (3D)

Disparity information

(*) Subtitle delivery stays the same
in service compatible application.

2D Receiver

2D mode

A B C

3D Receiver

3D mode          2D mode

L

D

A B C          A B C

R

A B C

FIG. 46

(a)

BACKGROUND

NEAR-VIEW OBJECT

Image Popped Up !

CAPTION

(b)

BACKGROUND

NEAR-VIEW OBJECT

CAPTION

## FIG. 47

(a)

BACKGROUND

NEAR-VIEW OBJECT

Image Popped Up !

CAPTION

LGI

RGI

(b)   Image Popped Up !      Image Popped Up !

(c)      Image Popped Up !!

FIG. 48

FIG. 49

# FIG. 50

Syntax of multi_decoding descriptor

| Syntax | Size | Type |
|---|---|---|
| multi_decoding descriptor() { | | |
| descriptor_tag | 8 | uimsbf |
| descriptor_length | 8 | uimsbf |
| reserved | 4 | bslbf |
| stream_content | 4 | uimsbf |
| component_type | 8 | uimsbf |
| component_tag | 8 | uimsbf |
| multi_decoding_count | 4 | uimsbf |
| reserved | 4 | bslbf |
| for (i= 0; i< multi_decoding_count; i ++) { | | |
| target_stream_component_type | 8 | uimsbf |
| target_stream_component_tag | 8 | uimsbf |
| } | | |
| } | | |

# FIG. 51

Semantics of multi_decoding descriptor

stream_content (4)
            Specifies the type (video, audio, subtitles ) of stream.
component_type (8)
            Specifies the type of video, audio, subtitles component.
component_tag (8)
            Has the same value as the component _tag field in the stream identifier descriptor.
multi_decoding_count (4)
            Specifies the number of  corresponding streams.
target_stream_component_type (8)
            Specifies the type of target video, audio, subtitles component to be decoded
            together with the main stream.
target_stream_component_tag(8)
            Has the same value as the component _tag field in
            the target stream identifier descriptor.

*FIG. 52*

**Transport Stream**

PMT

EIT

Component_descriptor
(stream_content= subtitle,
component_type= 2D,
component_tag= 0x1a,
ISO_639_language_code=eng)

Component_descriptor
(stream_content= subtitle,
component_type= 3D,
component_tag= 0x2a,
ISO_639_language_code=zxx)

**Subtitle ES loop**

Multi_decoding descriptor

stream_content= subtitle
component_type =2D
component_tag = 0x1a

target_stream_
  component_type=3D
target_stream_
  component_tag=0x2a

Stream_type (= private1 "subtitle")
Elementary PID (PID1)
Subtitling_descriptor
  (Subtitling_type=2D, composition_page_id = 0xXXXX,
ISO_639_language_code=eng)
Stream_identifier descriptor
  component_tag (= 0x1a)

Stream_type (= private1 "subtitle")
Elementary PID (PID2)
Subtitling_descriptor
  (Subtitling_type=3D, composition_page_id = 0xXXXX,
ISO_639_language_code=zxx)
Stream_identifier descriptor
  component_tag (= 0x2a)

(2D STREAM)

PID1: Subtitle PES1

DDS  PCS  RCS
CDS  ODS  EDS

Segments
(page_id= 0xXXXX)

(3D EXTENSION STREAM)

PID2: Subtitle PES2

DDS  DSS  EDS
or
DDS  PCS  DSS  EDS

Segments
(page_id= 0xXXXX)

80

*FIG. 53*

## FIG. 54

300

EP 2 600 620 A1

## FIG. 55

Transport Stream

PMT

EIT

Component_descriptor
(stream_content= subtitle,
component_type= 2D,
component_tag= 0x1a,
ISO_639_language_code=eng)

Component_descriptor
(stream_content= subtitle,
component_type= 3D,
component_tag= 0x2a,
ISO_639_language_code=zxx)

Subtitle ES loop

Stream_type (= private1 "subtitle")
Elementary PID (PID1)
Subtitling_descriptor
    (Subtitling_type=2D, composition_page_id = 0xXXXX,
ISO_639_language_code=eng, ancillary_page_id=0xXXXX)
Stream_identifier descriptor
    component_tag (= 0x1a)

Stream_type (= private1 "subtitle")
Elementary PID (PID2)
Subtitling_descriptor
    (Subtitling_type=3D, composition_page_id = 0xXXXX,
ISO_639_language_code=zxx, ancillary_page_id=0xPPPP)
Stream_identifier descriptor
    component_tag (= 0x2a)

(2D STREAM)

PID1: Subtitle PES1

DDS PCS RCS
CDS ODS EDS

Segments
    (page_id= 0xXXXX)

(3D EXTENSION STREAM)

PID2: Subtitle PES2

DDS DSS EDS

Segments
    (page_id= 0xXXXX)

83

## FIG. 56
### 3D extension is delivered in separated PES

EIT

```
Component_descriptor(){
    event_id
    stream_content(4)        0x03 (subtitle)
    component_type(8)     0x14/0x24 (2D)
    ISO_639_language_code(24)          eng
    component_tag (8)
}
```

```
Component_descriptor(){
    event_id
    stream_content(4)        0x03 (subtitle)
    component_type(8)     0x15/0x25 (3D)
    ISO_639_language_code(24)          zxx
    component_tag (8)
}
```

PMT

Elementary_
PID1

```
Subtitling_descriptor(){
    ISO_639_language_code (24)    eng
    subtitling_type(8)            0x14/0x24 (2D)
    composition_page_id(16)       0xXXXX
    ancillary_page_id (16)        0xXXXX
}
stream_identifier_descriptor()
    component_tag(8)
}
```

Elementary_
PID2

```
Subtitling_descriptor(){
    ISO_639_language_code(24)     zxx
    subtitling_type(8)            0x15/0x25 (3D)
    composition_page_id(16)       0xXXXX
    ancillary_page_id (16)        0xPPPP
}
stream_identifier_descriptor()
    component_tag (8)
}
```

## FIG. 57

| PES |

PES stream (Elementary_PID1)
    Segment (page_id = 0xXXXX)
PES stream (Elementary_PID2)
    Segment (page_id = 0xPPPP)

(2D STREAM)

| PES Header | DDS | PCS | RCS | CDS | ODS | EDS |

(3D EXTENSION STREAM)

| PES Header | DDS | DSS | EDS |

or

| PES Header | DDS | PCS | DSS | EDS |

## FIG. 58

Transmitted Stream Configuration

Subtitling Type

Language Code

Subtitles

composition
page_id = A

LANG = "eng"

Type HD

"eng"

2D PES

ancillary
page_id = P

LANG = "zxx"

Type 3D

"zxx"

DSS PES

composition
page_id = B

LANG = "ger"

Type HD

"ger"

2D PES

*FIG. 59*

Decoder PES Reading Scenario 2-1

User Selected
Service Language
= english

3D Ready Decoder

composition
page_id = A

LANG = "eng"

Type
HD

"eng"

2D PES

Subtitles

ancillary
page_id = P

Type
3D

"zxx"

DSS PES

LANG = "zxx"

composition
page_id = B

LANG = "ger"

Type
HD

"ger"

2D PES

*FIG. 60*

Decoder PES Reading Scenario 2-2

User Selected
Service Language
= english

Legacy HD/SD Decoder

composition
page_id = A

LANG = "eng"

Type
HD

"eng"

2D PES

Subtitles

ancillary
page_id = P

LANG = "zxx"

Type
3D

"zxx"

composition
page_id = B

LANG = "ger"

Type
HD

"ger"

2D PES

## FIG. 61

FIG. 62

300A

## FIG. 63

10A

BROADCASTING
STATION

110 — TRANSMISSION
DATA
GENERATING
UNIT

100

TS ⟹

TV

BIT STREAM
PROCESSING
UNIT

306

→

3D SIGNAL
PROCESSING
UNIT

301

300

## FIG. 64

C

B(Lb,Rb)

SCREEN

Ra ← La    Lc → Rc

DPa    DPc

A

LEFT
EYE    RIGHT
EYE

**INTERNATIONAL SEARCH REPORT**

| International application No. |
|---|
| PCT/JP2012/067016 |

A. CLASSIFICATION OF SUBJECT MATTER
*H04N13/00*(2006.01)i, *H04N7/173*(2011.01)i

According to International Patent Classification (IPC) or to both national classification and IPC

B. FIELDS SEARCHED

Minimum documentation searched (classification system followed by classification symbols)
H04N13/00, H04N7/173

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-30193 A (Sony Corp.), 10 February 2011 (10.02.2011), paragraphs [0037] to [0275], [0322] to [0361]; fig. 1 to 21, 93 to 102 & US 2011/0134213 A1 | 1-10 |
| Y | JP 10-215442 A (Electronics and Telecommunications Research Institute), 11 August 1998 (11.08.1998), paragraph [0031] & US 6040850 A    & KR 10-0212449 B1 | 1-10 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 July, 2012 (23.07.12) | 07 August, 2012 (07.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/067016

C (Continuation).    DOCUMENTS CONSIDERED TO BE RELEVANT

| Category* | Citation of document, with indication, where appropriate, of the relevant passages | Relevant to claim No. |
|---|---|---|
| A | Codes for the Representation of Names of LanguagesCodes arranged alphabetically by alpha-3/ISO 639-2 Code, International Organization for Standardization, 2010.08.18, URL:http://www.loc.gov/standards/iso639-2/php/code_list.php | 3,4 |
| A | WO 2011/080911 A1  (Panasonic Corp.), 07 July 2011 (07.07.2011), entire text; all drawings & CN 102334338 A | 1-10 |

Form PCT/ISA/210 (continuation of second sheet) (July 2009)

**EP 2 600 620 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005006114 A